Europäisches Patentamt

European Patent Office

Office européen des brevets

(11) Numéro de publication: **0 346 420 B1**

(12) **FASCICULE DE BREVET EUROPEEN**

(45) Date de publication de fascicule du brevet: **20.07.94** (51) Int. Cl.⁵: **G06F 12/08**, G11C 8/00

(21) Numéro de dépôt: **89900274.5**

(22) Date de dépôt: **09.12.88**

(86) Numéro de dépôt internationale :
**PCT/FR88/00608**

(87) Numéro de publication internationale :
**WO 89/06013 (29.06.89 89/14)**

(54) **PROCEDE D'ECHANGE D'INFORMATION DANS UN SYSTEME MULTIPROCESSEUR.**

(30) Priorité: **14.12.87 FR 8718103**

(43) Date de publication de la demande:
**20.12.89 Bulletin 89/51**

(45) Mention de la délivrance du brevet:
**20.07.94 Bulletin 94/29**

(84) Etats contractants désignés:
**DE FR GB IT NL**

(56) Documents cités:
**EP-A- 0 126 976**
**EP-A- 0 166 192**
**EP-A- 0 187 289**
**WO-A-82/02615**

**IEEE Transactions on Computers, vol. C-31,
no. 11, novembre 1982, IEEE, (New York, US),
M. Dubois et al.: "Effects of cache coherency in multiprocessors", pages 1083-1099.**

(73) Titulaire: **BUSLESS COMPUTERS, S.a.r.l.**
**21, rue A.Granier**
**F-31000 Toulouse(FR)**

(72) Inventeur: **LITAIZE, Daniel**
**12, rue de la Chênaie**
**F-31650 Saint-Orens-de-Gameville(FR)**
Inventeur: **SALINIER, Jean-Claude**
**19, avenue Gleyze-Vieille**
**F-31520 Ramonville-Saint-Agne(FR)**
Inventeur: **MZOUGHI, Abdelaziz**
**80, rue Aristide-Maillol**
**Bât. B - Apt. 41**
**F-31100 Toulouse(FR)**
Inventeur: **ELKHLIFI, Fatima-Zahra**
**9, rue Alain-Lesage**
**F-31400 Toulouse(FR)**
Inventeur: **LALAM, Mustapha**
**Chez M. & Mme Vautrin**
**14, rue des Abeilles**
**F-31000 Toulouse(FR)**
Inventeur: **SAINRAT, Pascal**
**28 bis, rue des Salenques**
**Apt. 24**
**F-31000 Toulouse(FR)**

EP 0 346 420 B1

(74) Mandataire: **Barre, Philippe**
**Cabinet Barre-Gatti-Laforgue**
**95 rue des Amidonniers**
**F-31069 Toulouse Cédex (FR)**

## Description

L'invention concerne un système multiprocesseur de type comprenant une mémoire centrale, des processeurs de traitement et des mémoires-caches associées aux processeurs de traitement. Elle s'étend à un procédé d'échange d'informations entre mémoire centrale et processeurs de traitement via la mémoire-cache associée à chacun de ces processeurs. Elle vise également un nouveau composant circuit intégré, susceptible d'équiper le système multiprocesseur.

On sait que, dans les systèmes multiprocesseurs connus les plus usuels, toutes les informations (données, adresses) transitent par un bus commun parallèle de communication entre la mémoire centrale et les divers processeurs de traitement, qui constitue un goulot d'étranglement : son débit est en effet insuffisant pour alimenter tous les processeurs à plein rendement, à partir d'une mémoire centrale commune.

Pour augmenter le débit de transfert d'informations, une première solution consiste à associer à chaque processeur de traitement une mémoire-cache qui, par la localité de l'information, permet de réduire les demandes vers la mémoire centrale. Toutefois, dans le cas où le volume de données partagées entre processeurs est substantiel, le maintien de la cohérence des données entre mémoires engendre un trafic d'informations complémentaire sur le bus de communication qui s'oppose à une réduction significative du débit global sur ce bus et, donc, enlève une grande partie de son intérêt à cette solution.

Une autre solution consiste à réaliser le bus de communication sous la forme d'un réseau maillé désigné par "crossbar", qui permet une communication directe entre chaque processeur de traitement et chaque sous-ensemble de la mémoire centrale (banc-mémoire). Toutefois, cette solution est très lourde et très coûteuse à réaliser du fait du nombre très élevé d'interconnexions, et elle devient totalement irréaliste au-delà d'une dizaine de processeurs de traitement. De plus, en cas de demandes multiples de plusieurs processeurs sur un même banc-mémoire, une telle solution implique des conflits d'accès, source de ralentissement des échanges.

Une autre solution plus courante en raison de sa simplicité architecturale consiste à associer une mémoire locale à chaque processeur de traitement pour stocker des données spécifiques à celui-ci, et à mémoriser les données partagées dans la mémoire centrale commune. Toutefois, le gros défaut de cette architecture est sa non-transparence, c'est-à-dire la nécessité pour le programmeur d'organiser le détail des affectations des données dans les diverses mémoires, de sorte que cette solution est d'utilisation très contraignante. De plus, en cas de volume élevé de données partagées, elle peut conduire comme précédemment à une saturation du bus d'accès à la mémoire centrale.

Par ailleurs, une solution dite "architecture aquarius" a été proposée par l'Université de Berkeley et consiste à améliorer la solution crossbar précitée en combinant au réseau crossbar, d'une part, pour las données non partagées, des mémoires-caches qui sont connectées au réseau crossbar, d'autre part, pour las données partagées, des mémoires-caches distinctes qui sont connectées à un bus commun de synchronisation. Cette solution apporte un gain an rapidité d'échanges mais demeure très lourde et très coûteuse à réaliser.

La présente invention se propose de fournir une nouvelle solution, permettant d'augmenter considérablement les débits d'échange d'informations, tout en gardant une architecture transparente pour l'utilisateur, beaucoup plus simple que l'architecture crossbar.

Un objectif de l'invention est ainsi de permettre d'augmenter notablement le nombre de processeurs de traitement du système, tout en bénéficiant d'un rendement élevé pour chaque processeur.

Un autre objectif est de fournir une structure de composant circuit intégré, permettant une réalisation très simple de l'architecture de ce nouveau système multiprocesseur.

A cet effet, le système multiprocesseur visé par l'invention est du type comprenant une mémoire centrale (RAM) organisée en blocs d'informations ($b_i$), des processeurs de traitement ($CPU_1$... $CPU_j$... $CPU_n$), une mémoire-cache ($MC_j$) reliée à chaque processeur de traitement ($CPU_j$) et organisée en blocs d'informations ($b_i$) de même taille que ceux de la mémoire centrale, un répertoire ($RG_j$) et son processeur de gestion ($PG_j$) associés à chaque mémoire-cache ($MC_j$), des moyens de communication d'adresses de blocs entre processeurs ($CPU_j$) et mémoire centrale (RAM) ; selon la présente invention, ledit système multiprocesseur est doté :

  . d'un ensemble de registres à décalage, dit registres à décalage mémoire ($RDM_1$... $RDM_j$... $RDM_n$), chaque registre ($RDM_j$) de cet ensemble étant connecté à la mémoire centrale (RAM) de façon à permettre, en un cycle de cette mémoire, un transfert parallèle en lecture ou écriture d'un bloc d'informations ($b_i$) entre ledit registre et ladite mémoire centrale,

  . de registres à décalage, dits registres à décalage processeur ($RDP_1$... $RDP_j$... $RDP_n$), chaque registre à décalage processeur ($RDP_j$) étant relié à la mémoire-cache ($MC_j$) d'un processeur ($CPU_j$) de façon à permettre un transfert parallèle en lecture ou écriture d'un bloc d'informations ($b_i$) entre ledit regis-

tre à décalage (RDP$_j$) et ladite mémoire-cache (MC$_j$),

. d'un ensemble de liaisons séries (LS$_1$ ... LS$_j$... LS$_n$), chacune reliant un registre à décalage mémoire (RDM$_j$) et un registre à décalage processeur (RDP$_j$) et adaptée pour permettre le transfert de blocs d'informations (bi) entre les deux registres considérés (RDM$_j$, RDP$_j$).

Ainsi, dans le système multiprocesseur conforme à l'invention, les échanges entre mémoires-caches et processeurs associés s'effectuent comme dans les systèmes classiques équipés de mémoires-caches. Par contre, les échanges entre mémoire centrale et mémoires-caches s'effectuent de façon entièrement originale.

Chaque transfert de bloc d'informations (bi) depuis la mémoire centrale (RAM) vers la mémoire-cache (MC$_j$) d'un processeur donné (CPU$_j$) consiste :

. à transférer, en un cycle de mémoire centrale, le bloc (bi) de ladite mémoire centrale (RAM) vers le registre à décalage mémoire (RDM$_j$) (de la taille d'un bloc) qui est directement connecté à la mémoire centrale et qui correspond au processeur (CPU$_j$) considéré,

. à transférer sur la liaison série correspondante (LS$_j$) le contenu de ce registre à décalage mémoire (RDM$_j$) vers le registre à décalage processeur (RDP$_j$) (de même capacité) qui est associé à la mémoire-cache (MC$_j$) du processeur considéré (CPU$_j$),

. à transférer le contenu dudit registre à décalage processeur (RDP$_j$) vers ladite mémoire-cache (MC$_j$).

Dans le sens opposé, chaque transfert de bloc d'informations (bi) depuis la mémoire-cache (MC$_j$) d'un processeur donné (CPU$_j$) vers la mémoire centrale (RAM) consiste :

. à transférer le bloc (bi) de ladite mémoire-cache considérée (MC$_j$) vers le registre à décalage processeur (RDP$_j$) qui est associé à ladite mémoire-cache (MC$_j$),

. à transférer sur la liaison série correspondante (LS$_j$) le contenu du registre à décalage processeur (RDP$_j$) vers le registre à décalage mémoire (RDM$_j$), affecté au processeur considéré (parmi l'ensemble de registres à décalage (RDM$_1$... RDM$_j$... RDM$_n$) connectés à la mémoire centrale (RAM)),

. à transférer, en un cycle de mémoire centrale, le contenu du registre à décalage mémoire (RDM$_j$) vers ladite mémoire centrale (RAM).

Dans ces conditions, le transfert de chaque bloc d'informations (bi) s'effectue, non plus à travers un bus parallèle comme c'est le cas dans les systèmes connus, mais par des liaisons séries à haut débit. Ces liaisons séries permettent d'obtenir des temps de transfert de chaque bloc (bi) comparables et même inférieurs aux temps de transfert dans les systèmes connus à bus parallèle. L'exemple comparatif ci-dessous donné avec des valeurs de paramètre courantes pour la technologie actuelle, illustre clairement ce fait qui semble paradoxal.

On suppose que chaque bloc d'informations (bi) est d'une taille égale à 64 octets.

Dans le système de l'invention, le temps de transfert entre la mémoire centrale et une mémoire-cache se décompose en :

- un temps de transfert mémoire centrale (RAM)/registre à décalage mémoire (RDM$_j$) : 100 nanosecondes (performance d'une mémoire centrale à accès aléatoire de type courant),

- un temps de transfert série sur la liaison-série correspondante : $64 \times 8 \times 1/500.10^6$, soit 1 024 nanosecondes, en supposant une fréquence de transfert de 500 Mégahertz (non exceptionnelle avec les technologies actuelles qui autorisent des fréquences atteignant 3 000 Mégahertz),

- un temps de transfert registre à décalage processeur (RDP$_j$)/mémoire-cache (MC$_j$) : 50 nanosecondes (mémoire-cache de type très courant).

Le temps de transfert total d'un bloc est donc de l'ordre de 1 200 nanosecondes (en intégrant des délais d'enchaînement de second ordre).

Dans les systèmes connus à mémoires-caches dans lesquels les échanges d'informations s'effectuent directement en parallèle par mots de 4 octets (systèmes les plus courants conduisent à des bus de type habituel à 32 fils de données), le temps de transfert d'un bloc est égal au temps de transfert des 16 mots de 4 octets qui constituent ce bloc, c'est-à-dire : $16 \times 100 = 1\ 600$ nanosecondes.

On voit donc que, avec des hypothèses moyennes dans les deux solutions, ces temps sont comparables. Or, si l'on compare l'architecture du système conforme à l'invention et celle à bus parellèle commun avec mémoires-caches (première solution évoquée précédemment), l'on constate que :

. dans la solution classique (bus commun parallèle), la mémoire centrale et le bus commun sont occupés à 100 % pendant le transfert, puisque des informations circulent entre les deux pendant toute le durée du transfert,

. dans le système conforme à l'invention, la liaison série est occupée à 100 % pendant le transfert, mais la mémoire centrale est occupée moins de 10 % du temps de transfert (temps de lecture mémoire et de chargement du registre à décalage mémoire (RDM$_j$)), de sorte que la mémoire centrale peut servir 10 fois plus de processeurs que dans le cas précédent (l'occupation de la liaison série étant sans importance puisqu'elle est privée et affectée au processeur).

Il faut souligner, par ailleurs, que dans le système de l'invention, chaque liaison série qui relie chaque processeur de façon individuelle à la mémoire centrale est une liaison simple (à un ou deux fils de données), de sorte que le réseau série ainsi constitué n'est pas comparable sur la plan de la complexité avec, par exemple, un réseau crossbar dont chaque liaison est une liaison parallèle à multiplicité de fils (32 fils de données dans l'exemple comparatif précité), avec tous les commutateurs nécessaires.

En outre, comme on le verra plus loin sur les courbes comparatives, le système conforme à l'invention possède des performances très améliorées par rapport aux systèmes traditionnels à bus commun et permet en pratique la mise en oeuvre d'un nombre de processeurs de traitement beaucoup plus élevé (de plusieurs dizaines à une centaine de processeurs) ; ces performances sont compatibles à celles d'un système crossbar, mais le système conforme à l'invention est d'une simplicité architecturale beaucoup plus grande.

Dans le système de l'invention, chaque liaison série peut en pratique être réalisée soit eu moyen de deux liens-séries unidirectionnels de transfert bit à bit, soit au moyen d'un seul lien bidirectionnel.

Dans le premier cas, chaque registre à décalage mémoire ($RDM_j$) et chaque registre à décalage processeur ($RDP_j$) sont dédoublés en deux registres, l'un spécialisé pour le transfert dans un sens, l'autre pour le transfert dans l'autre sens. Les deux liens-séries unidirectionnels sont alors connectés au registre à décalage mémoire ($RDM_j$) dédoublé et au registre à décalage processeur correspondant ($RDP_j$) dédoublé, de façon à permettre, l'un un transfert dans un sens, l'autre un transfert dans l'autre sens.

Ce mode de réalisation à deux liens unidirectionnels présente l'avantage de ne nécessiter aucune gestion de transfert sur lien, mais l'inconvénient de doubler les ressources nécessaires (lien, registres).

Dans le second cas, une logique de validation du sens de transfert est associée au lien bidirectionnel de façon à permettre un transfert alterné dans les deux sens sur ledit lien. Cette logique peut être intégrée au processeur de gestion ($PG_j$) associé à la mémoire-cache ($MC_j$) à laquelle est relié ledit lien bidirectionnel.

Bien entendu chaque liaison série peut éventuellement être réalisée avec un nombre plus élevé de liens séries.

Dans le système multiprocesseur conforme à l'invention, les moyens de communication d'adresses peuvent revêtir essentiellement deux formes de réalisation : en premier lieu, ils peuvent consister en un bus de communication parallèle d'adresses de blocs (BUSA), commun à tous les processeurs ($CPU_j$) et reliant ces derniers et la mémoire centrale (RAM) avec de façon classique un arbitre de bus (AB) adapté pour gérer les conflits d'accès audit bus. Il faut noter que ce bus d'adresses n'est utilisé que pour la communication des adresses de blocs : sur le plan de la structure, ce bus est identique au bus de communication parallèle d'adresses des systèmes connus, pour lequel ne se pose aucun problème de saturation, puisqu'il peut être libéré aussitôt après transfert de l'adresse de bloc.

Toutefois, un autre mode de réalisation de ces moyens de communication d'adresses peut être envisagé dans le système multiprocesseur de l'invention, consistant à exploiter les liaisons séries de transfert des blocs d'informations (bi) pour transférer les adresses de ces blocs.

Dans ce cas, un registre à décalage complémentaire ($RDC_j$) est connecté sur chaque liaison série ($LS_j$) en parallèle avec le registre à décalage mémoire correspondant ($RDM_j$) : les adresses transmises par ladite liaison série sont ainsi chargées dans chacun de ces registres complémentaires ($RDC_j$) ; un arbitre de gestion d'accès (ABM) relié auxdits registres ($RDC_j$) et à la mémoire centrale (RAM) est alors prévu pour prélever les adresses contenues dans lesdits registres et pour gérer les conflits d'accès à la mémoire centrale (RAM). Un tel arbitre est de conception connue en elle-même, ce type de conflits d'accès étant maintenant résolu depuis de nombreuses années. Dans ce mode de réalisation, on évite la présence d'un bus parallèle de communication d'adresses, mais les ressources en gestion sont alourdies.

Par ailleurs, le système multiprocesseur conforme à l'invention est particulièrement bien adapté pour gérer de façon performante les problèmes de cohérence des données partagées entre processeurs de traitement. En effet, les solutions classiques pour gérer ces données partagées trouvent leur limite dans les systèmes connus du fait du goulot d'étranglement au niveau de la communication des informations, mais deviennent au contraire parfaitement satisfaisantes et performantes dans le système de l'invention où un tel goulot n'existe plus, de sorte que ce système peut être équipé de moyens de gestion des données partagées de conception analogue à ceux des systèmes connus.

Par exemple, une solution traditionnelle de gestion des données partagées consiste à éviter que celles-ci transitent par les mémoires-caches : de façon classique, une logique de partition ($LP_j$) est associée à chaque processeur de traitement ($CPU_j$) en vue de différencier les adresses des données partagées et celles des données non partagées de façon à aiguiller les premières directement vers la mémoire centrale (RAM) et les secondes vers la mémoire-cache correspondante ($MC_j$).

Dans une première version de l'architecture conforme à l'invention, le système comprend :

. un bus spécial de communication parallèle de mots (BUSD) reliant les processeurs ($CPU_j$) et la mémoire centrale (RAM),

. une logique de partition ($LP_j$), associée à chaque processeur ($CPU_j$) et adaptée pour différencier les adresses des données partagées et celles des données non partagées de façon à transmettre celles-ci sur les moyens de communication d'adresses avec leur identification,

. une logique de décodage (DEC) associée à la mémoire centrale (RAM) et adaptée pour recevoir les adresses avec leur identification et aiguiller les données en sortie mémoire soit vers le registre à décalage mémoire correspondant ($RDM_j$) pour les données non partagées, soit vers le bus spécial de communication de mots (BUSD) pour les données partagées.

Cette solution présente l'avantage d'être très simple sur le plan architectural ; la présence du bus spécial de communication parallèle (BUSD) conduit à de meilleures performances par rapport à une solution qui consisterait à utiliser les liaisons séries pour transférer non seulement les blocs de données non partagées mais également les mots de données partagées. Il est à noter que cette dernière solution peut, le cas échéant, être envisagée en cas de faible taux de données partagées.

Dans une autre version, le système est doté d'un bus spécial de communication parallèle de mots (BUSD) et d'un bus spécial commun de communication d'adresses de mots (BUSAM), reliant les processeurs ($CPU_j$) et la mémoire centrale (RAM). La logique de partition ($LP_j$) aiguille les adresses des données partagées vers le bus spécial commun (BUSAM) en vue du transfert des données par le bus spécial de mots (BUSD), et aiguille les données non partagées vers les moyens de communication d'adresses (que ceux-ci soient constitués par un bus parallèle de communication ou que la communication s'effectue via les liaisons séries).

La présence d'un bus spécial de communication d'adresses de mots permet, dans cette version, de reculer la limite de saturation des moyens de communication d'adresses, en cas de demandes élevées de données partagées.

Une autre version qui sera préférée en pratique dans le cas où les moyens de communication d'adresses sont constitués par un bus parallèle de communication d'adresses (BUSA), consiste à équiper le système d'un processeur de gestion mémoire (PGM) associé à la mémoire (RAM) et d'un processeur espion de bus ($PE_j$) associé à chaque processeur de traitement ($CPU_j$) et au répertoire de gestion correspondant ($RG_j$) ; le processeur de gestion mémoire (PGM) et chaque processeur espion de bus ($PE_j$), de structures connues en soi, sont connectés au bus de communication d'adresses (BUSA) en vue respectivement de surveiller et de traiter les adresses de blocs transmises sur ledit bus de façon à permettre une mise à jour de le mémoire centrale (RAM) et de la mémoire-cache associée ($MC_j$) en cas de détection d'une adresse de bloc présente dans le répertoire associé ($RG_j$).

Le processeur de gestion mémoire (PGM) et chaque processeur espion ($PE_j$) associent des bits d'état à chaque bloc d'informations, les tiennent à jour en fonction de la nature (lecture ou écriture) des demandes de bloc qui transitent sur le bus (BUSA) et assurent la cohérence des données partagées en utilisant ces bits d'états qui leur permettent de forcer ou non l'écriture d'un bloc en mémoire centrale au moment des demandes sur le bus (BUSA).

Dans le cas évoqué précédemment où les communications d'adresses se font par les liaisons séries, la gestion des données partagées peut également être assurée de façon centralisée, par un processeur de gestion mémoire (PGM) associé à la mémoire centrale (RAM) et un processeur de maintien de la cohérence des données partagées ($PMC_j$) associé à chaque processeur de traitement ($CPU_j$) et au répertoire de gestion correspondant ($RG_j$), chaque processeur de maintien de cohérence ($PMC_j$) étant connecté à un bus de synchronisation (SYNCHRO) piloté par le processeur de gestion mémoire (PGM), de façon à permettre une mise à jour de le mémoire centrale (RAM) et de la mémoire-cache associée ($MC_j$) en cas de détection d'une adresse de bloc, une mise à jour de la mémoire centrale (RAM) et des mémoires-caches ($MC_j$) à chaque prélèvement d'adresses dans les registres à décalage complémentaires ($RDC_j$).

Comme précédemment, cette mise à jour est assurée grâce à des bits d'état associés à chaque bloc d'information par le processeur (PGM).

Il est à noter qu'un bus de synchronisation du type ci-dessus défini peut le cas échéant être prévu sur l'architecture précédente où les adresses de blocs transitent sur un bus commun d'adresses BUSA. Dans ce cas, les processeurs espions ($PE_j$) sont sollicités par le processeur de gestion mémoire (PGM) via le bus de synchronisation, et ce, uniquement lorsqu'ils sont concernés par le transfert. On évite ainsi des accès inutiles vers les mémoires-caches ; les processeurs espions deviennent alors passifs (puisque sollicités par le processeur PGM) et on les désignera plutôt par l'expression plus appropriée de "processeur de maintien de la cohérence" selon la terminologie ci-dessus utilisée.

Une autre solution consiste à réserver le bus parallèle de communication d'adresses (BUSA) au transfert des adresses des blocs de données partagées et à utiliser les liaisons séries pour le transfert des blocs de données non partagées.

Par ailleurs le système multiprocesseur conforme à l'invention se prête à des regroupements de processeurs de traitement sur une même liaison série, de façon à limiter les liaisons séries et les registres à décalage mémoire correspondant (RDM$_j$) nécessaires.

Le nombre de registres à décalage mémoire (RDM$_j$) peut correspondre au nombre de liaisons séries (LS$_j$), auquel cas chaque registre à décalage mémoire (RDM$_j$) est connecté de façon statique à une liaison série (LS$_j$) spécifiquement affectée audit registre.

Le nombre de registres à décalage mémoire (RDM$_j$) peut également être différent de celui des liaisons-séries (LS$_j$) et notamment inférieur, auquel cas ces registres sont connectés de façon dynami-que aux liaisons séries (LS$_j$) par l'entremise d'un réseau d'interconnexion.

Comme dans les systèmes classiques, la mémoire centrale (RAM) peut être divisée en m bancs mémoires (RAM$_1$... RAM$_p$... RAM$_m$) agencés en parallèle. Chaque registre à décalage mémoire (RDM$_j$) est alors constitué de m registres élémen-taires (RDM$_{j1}$... RDM$_{jp}$... RDM$_{jm}$) reliés en parallèle à la liaison série correspondante (LS$_j$). Cependant, un niveau de parallélisme supplémentaire et une meilleure adaptation électrique ou optique de la liaison sont obtenus dans une variante où chaque banc mémoire RAM$_p$ est relié à chaque processeur CPU$_j$ par une liaison série en point à point LS$_{jp}$.

Par ailleurs, pour présenter des performances de transfert au moins égales à celles des systèmes classiques à bus parallèle, le système conforme à l'invention est de préférence synchronisé par une horloge de fréquence F au moins égale à 100 mégahertz. Les registres à décalage mémoire (RDM$_j$) et registres à décalage processeur (RDP$_j$) peuvent très simplement être d'un type adapté pour présenter une fréquence de décalage au moins égale à F.

Dans le cas de très hautes fréquences (notamment supérieures à 500 mégahertz avec la technologie actuelle), on peut diviser ces registres en sous-registres de fréquence de décalage plus faible, et les multiplexer.

L'invention s'étend à un composant mémoire multiport série, susceptible d'équiper le système multiprocesseur précédemment défini, en vue d'en simplifier la fabrication. Ce composant, qui peut par ailleurs avoir des applications différentes, est constitué par un circuit intégré comprenant une mémoire à accès aléatoire (RAM) de largeur prédéterminée correspondant à un bloc d'informations (bi), un ensemble de registres à décalage (RDM$_1$... RDM$_j$... RDM$_n$), chacun de capacité correspondant à la largeur de la mémoire, un bus parallèle interne (BUSI) relie l'accès de la mémoire et les registres à décalage, une logique de sélection d'un registre à décalage (LSR) adaptée pour valider la liaison sur le bus interne entre la mémoire et un registre à décalage prédéterminé, et un ensemble de broches externes d'entrée/sortie pour l'entrée d'adresses vers la mémoire (RAM), pour l'entrée d'adresses vers la logique de sélection (LSR), pour l'entrée et le validation de commandes de transfert en lecture ou écriture d'un bloc d'informations (bi) entre la mémoire (RAM) et les registres à décalage (RDM$_j$), pour l'entrée d'un signal d'horloge vers chaque registre à décalage (RDM$_j$), pour l'entrée bit à bit d'un bloc d'informations (bi) vers chaque registre à décalage (RDM$_j$) et pour la sortie bit à bit d'un bloc d'informations de chaque registre à décalage (RDM$_j$).

Ce composant peut être rendu paramétrable par l'adjonction de registres de configuration (RC$_1$, RC$_2$, ...) permettant notamment un choix de taille des blocs d'informations (bi) et de divers modes de fonctionnement des registres à décalage.

L'invention ayant été exposée dans sa forme générale est illustrée par la description qui suit en référence aux dessins annexés qui en présentent, à titre non limitatif, plusieurs modes de réalisation ; sur ces dessins qui font partie intégrante de la présente description :

- la figure 1 est un schéma synoptique d'un premier mode de réalisation du système multiprocesseur conforme à l'invention,
- la figure 2 est un diagramme donnant la courbe calculée de performance de ce système (A) et, à titre de comparaison, la courbe (B) correspondante pour une architecture multiprocesseur conventionnelle à bus commun,
- les figures 3, 4 et 5 sont des schémas logiques détaillés d'unités fonctionnelles du système de la figure 1,
- la figure 6 est un schéma synoptique d'un autre mode de réalisation du système,
- la figure 7 est un schéma synoptique d'un système du type de celui de la figure 1, doté de moyens de gestion des données partagées,
- la figure 8 est un schéma logique détail d'un sous-ensemble du système de la figure 7,
- la figure 9 est un schéma synoptique d'un système analogue à celui de la figure 7 avec une variante de moyens de gestion de données partagées,

- la figure 10 est un schéma synoptique d'un système analogue, doté de moyens de gestion de données partagées différents,
- les figures 11, 12a, 12b, 12c, 12d, 13, 14, 15, 16, 17 sont des schémas logiques détaillés d'unités fonctionnelles du système processeur de la figure 10,
- la figure 18 est un schéma synoptique d'un système du type de celui de la figure 6, doté de moyens de gestion de données partagées,
- la figure 19 est un schéma synoptique simplifié d'une variante de système, dans laquelle plusieurs unités centrales partagent un même lien-série,
- la figure 20a est un schéma synoptique d'un mode de réalisation préféré, dans lequel la mémoire centrale est organisée en plusieurs bancs mémoires,
- la figure 20b est une variante de l'architecture représentée à la figure 20a,
- les figures 21a et 21b schématisent une autre structure de mémoire RAM susceptible d'équiper ledit système,
- le figure 22 est un schéma synoptique présentant le structure d'un composant mémoire multiport série, susceptible d'équiper le système.

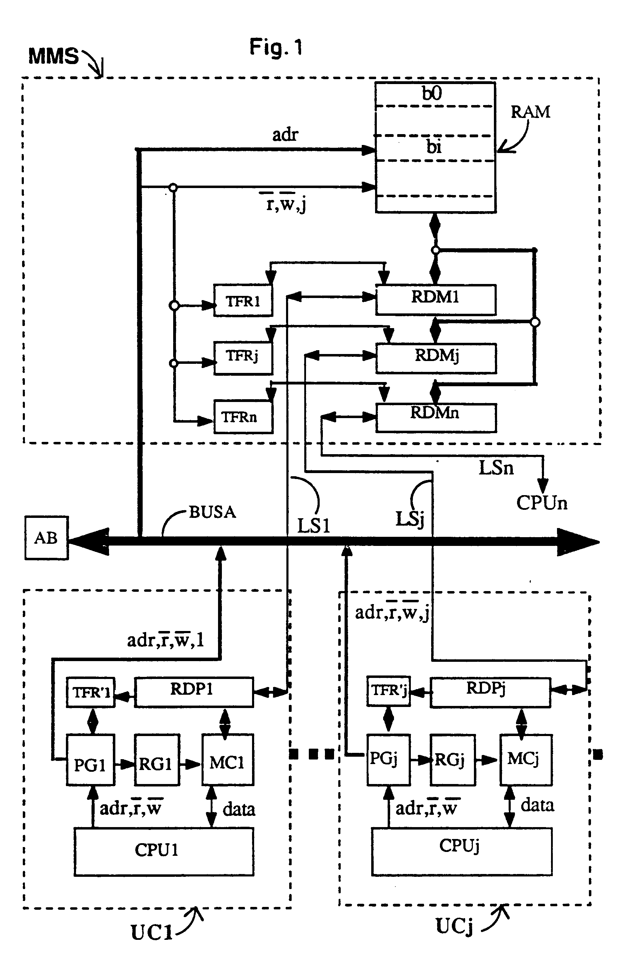

Le dispositif présenté sous forme de synoptique à la figure 1 est un système multiprocesseur possédant n processeurs de traitement $CPU_1$... $CPU_j$... $CPU_n$. On a représenté à cette figure deux processeurs de traitement $CPU_1$ et $CPU_j$ avec leur logique associée. Chacun de ces processeurs de traitement est d'un type traditionnel par exemple "MOTOROLA 68020" ou "INTEL 80386"... et peut comporter des ressources locales en mémoires et en interfaces périphériques et être équipé d'un dispositif de mémoire virtuelle.

Le dispositif comprend une mémoire centrale à accès aléatoire RAM réalisée de façon classique à partir de circuits intégrés mémoires : en particulier RAM dynamique "INTEL" "NEC" "TOSHIBA"... de 256 Kbits, 1 Mbits, 4 Mbits... selon l'application. Cette mémoire est organisée en blocs d'informations bo... bi... de taille t déterminée (habituellement 256 bits à 2 Kbits) et le front d'accès de ladite mémoire correspond à la taille d'un bloc.

La mémoire centrale est reliée en parallèle à n registres à décalage $RDM_1$... $RDM_j$... $RDM_n$ dits registres-mémoire, chaque registre-mémoire ayant la taille t d'un bloc d'informations ; chacun de ces registres est réalisé en technologie très rapide ("ASGA"), un bloc pouvant être chargé ou déchargé en un cycle de la mémoire centrale RAM. Le nombre n de registres est égal au nombre de processeurs $CPU_j$.

Par ailleurs, une mémoire-cache $MC_j$ est associée de façon connue en soi à chaque processeur $CPU_j$ ; chaque mémoire-cache est constituée de façon classique par une mémoire rapide, à accès aléatoire, de faible capacité par rapport à la mémoire centrale RAM. Un répertoire $RG_j$ et un processeur de gestion $PG_j$ sont de façon traditionnelle reliés à la mémoire-cache et au processeur de traitement pour gérer les informations transitant dans la mémoire-cache.

En outre, dans le système de l'invention, un registre à décalage $RDP_j$ dit registre-processeur, est relié par son port parallèle, à chaque mémoire-cache $MC_j$ ; chaque registre-processeur $RDP_j$ est de taille correspondant à celle d'un bloc bi et de structure similaire à celle des registres-mémoire $RDM_j$.

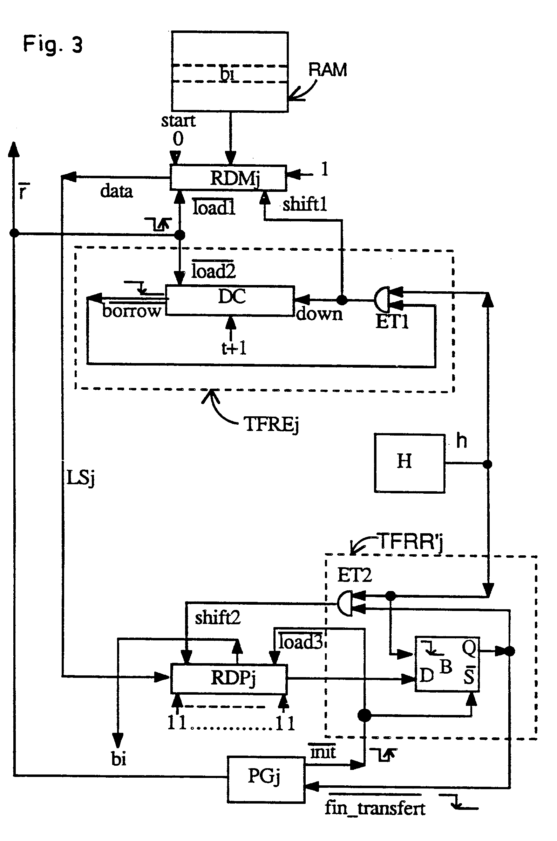

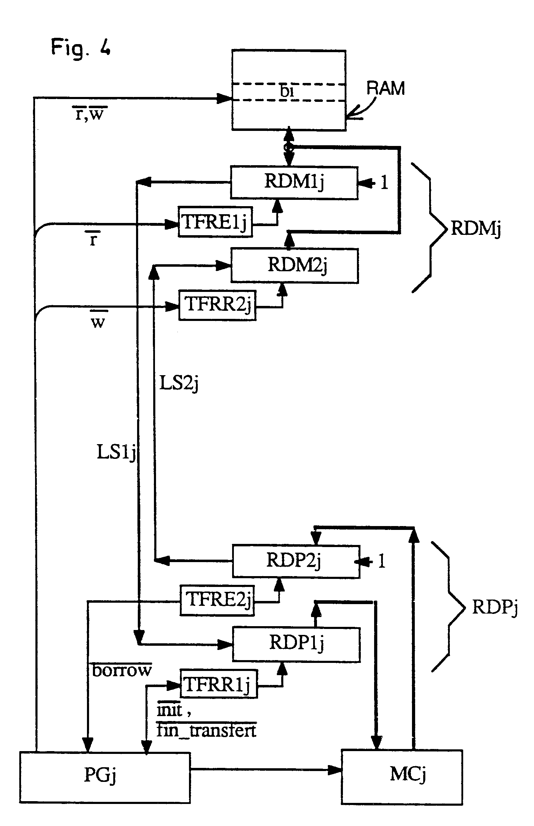

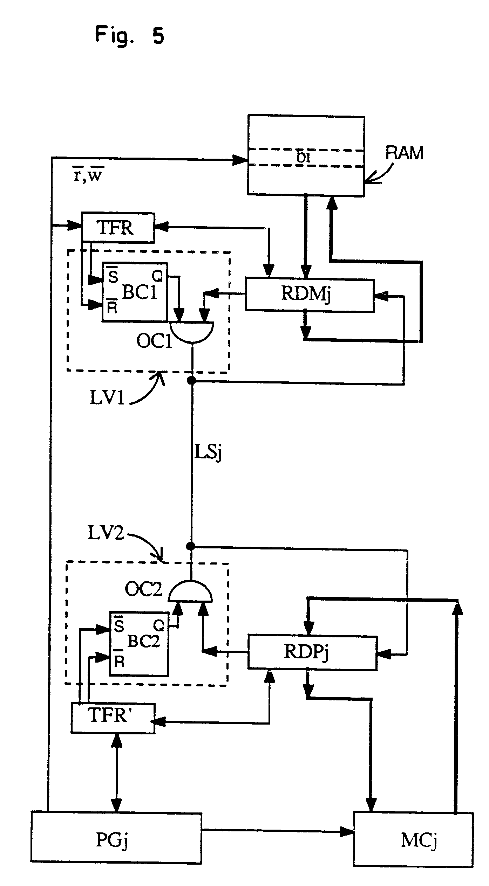

Chaque registre-mémoire $RDM_j$ est relié par son port série, au port série d'un registre-processeur $RDP_j$ par une liaison série $LS_j$. Des exemples de réalisation de cette liaison série qui peut comporter un lien bidirectionnel ou deux liens unidirectionnels sont illustrés aux figures 4 et 5. Le contrôle du transfert des blocs bi entre registres correspondants $RDM_j$ et $RDP_j$ est assuré par des logiques de transfert $TFR_j$ et $TFR'_j$ qui sont associées de façon symétrique au registre-mémoire $RDM_j$ et au registre-processeur $RDP_j$ ; un exemple de réalisation de ces logiques de transfert (en elle-mêmes classiques) est détaillé à la figure 3.

L'ensemble mémoire centrale RAM, registres à décalages mémoires $RDM_1$ ... $RDM_n$ et logiques de transfert associées $TFR_1$ ... $TFR_n$ constituent un ensemble fonctionnel dénommé "mémoire multiport série" MMS. L'ensemble processeur de traitement $CPU_j$, mémoire-cache $MC_j$, répertoire de gestion du cache $RG_j$, processeur de gestion du cache $PG_j$, registre à décalage processeur $RDP_j$ et logique de transfert associée $TFR'_j$ constitue un ensemble "fonctionnel" dénommé "unité centrale" $UC_j$.

Par ailleurs, le système comprend des moyens de communication d'adresses de blocs des processeurs $CPU_j$ vers la mémoire centrale RAM, constitués en l'exemple par un bus commun de communication parallèle BUSA sur lequel se connectent les processeurs $CPU_j$ (par l'entremise de leur processeur de gestion $PG_j$) et la mémoire centrale RAM.

L'accès au bus BUSA est réglementé de façon classique par un arbitre de bus AB.

Le fonctionnement général de l'architecture ci-dessus définie est le suivant :

Un processeur $CPU_j$ exécute un programme propre constitué d'instructions, qui se trouvent sous forme de mots en mémoire centrale RAM avec des extraits dans la mémoire-cache associée $MC_j$. Sur les instructions du programme, le processeur $CPU_j$

est amené soit à lire des mots de données qui elles-mêmes se trouvent dans la mémoire centrale RAM ou dans la mémoire-cache $MC_j$ sous forme d'extraits, soit à écrire des mots de données dans la mémoire centrale RAM et dans la mémoire-cache $MC_j$.

Chaque opération d'un processeur $CPU_j$ - (désignée "demande") nécessite la fourniture de l'adresse adr du mot concerné, la nature r,w de l'opération (lecture, écriture) et l'échange (data) du mot concerné.

Chaque demande de mot active le processeur $PG_j$ qui consulte alors de façon classique le répertoire du cache $RG_j$ lequel indique si le bloc bi contenant le mot concerné est présent dans la mémoire-cache $MC_j$ et, le cas échéant, le cadre de bloc dans la mémoire-cache où se trouve le bloc recherché.

Si le bloc bi contenant le mot concerné est dans la mémoire-cache $MC_j$, alors en cas de lecture ce mot est lu dans ladite mémoire-cache et envoyé au processeur $CPU_j$ ; en cas d'écriture le mot fourni par le processeur $CPU_j$ est écrit dans la mémoire-cache : la transaction mémoire est terminée.

Si le bloc contenant le mot concerné n'est pas dans la mémoire-cache $MC_j$, alors une lecture de bloc bi en mémoire centrale RAM est nécessaire. Deux cas peuvent se produire.

Premier cas

La mémoire-cache $MC_j$ dispose d'au moins un emplacement de bloc libre, déterminé par le processeur $PG_j$ à l'aide de bits d'états associés à chaque entrée du répertoire $RG_j$. Dans ce cas, le processeur $PG_j$ requiert, de façon classique, le bus BUSA en soumettant sa demande à l'arbitre de bus AB. Ce dernier accorde, son tour venu, le bus BUSA au processeur $PG_j$ qui accède en lecture à la mémoire centrale RAM, le bloc lu en mémoire étant chargé dans le registre $RDM_j$, identifié par l'origine j de l'appel. La fin du cycle de lecture se traduit par la libération du bus BUSA et l'activation du transfert avec la liaison série $LS_j$ permettent de transférer le contenu du registre-mémoire $RDM_j$ dans le registre-processeur $RDP_j$. La fin du transfert active l'écriture dans la mémoire-cache $MC_j$ du contenu du registre-processeur dans l'emplacement de bloc réservé à cet effet et la transaction peut se terminer comme précédemment.

Deuxième cas

La mémoire-cache $MC_j$ ne dispose pas d'emplacement de libre alors, par un algorithme classique, un emplacement de cache est rendu candidat pour recevoir le bloc demandé. Deux situations peuvent se rencontrer :

- le bloc contenu dans l'emplacement candidat n'a pas été modifié depuis son installation : il est simplement éliminé en libérant le cadre de bloc par une simple écriture d'un bit d'état dans le répertoire ($RG_j$) et la transaction peut se poursuivre comme précédemment,

- le bloc contenu dans l'emplacement candidat a été modifié et une mise à jour de la mémoire centrale RAM est nécessaire. Pour ce faire, le processeur de gestion $PG_j$ transfère le bloc candidat dans le registre-processeur $RDP_j$, active le transfert du registre-processeur $RDP_j$ au registre-mémoire $RDM_j$, puis requiert le bus commun BUSA en soumettant sa demande à l'arbitre AB. Lorsque l'arbitre accorde le bus au processeur de gestion $PG_j$, ce dernier active une commande d'écriture qui a pour effet de transférer le contenu du registre-mémoire $RDM_j$ à son emplacement en mémoire centrale RAM. La mise à jour mémoire RAM est terminée et la transaction peut se poursuivre comme précédemment.

Ainsi, dans le dispositif de l'invention, les échanges entre les processeurs de traitement $CPU_j$ et leur mémoire-cache $MC_j$ et logiques associées $RG_j$ , $PG_j$ , s'effectuent de façon classique ; par contre, les transferts de blocs entre mémoire centrale RAM et mémoire-caches $MC_j$ passent, non plus par un bus parallèle commun mais par des liaisons-séries $LS_j$ dédiées à chaque processeur de traitement $CPU_j$, le bus commun BUSA ne servant qu'au transfert des adresses et ayant ainsi un trafic considérablement allégé.

On sait que, pour les architectures classiques à bus commun, une modélisation étudiée par "PATEL" (analysis of multiprocessors with private cache, JANAK H. PATEL - IEEE Transactions on computers vol. C.31, N° 4 APRIL 1982) a conduit à la formule approchée suivante donnant le rendement U en fonction du nombre de processeurs en présence :

$$U = \frac{1}{1 + m\ (W+tf)}$$

où

le rendement U
est le taux moyen d'utilisation de chaque processeur de traitement,

m
est la probabilité pour qu'un processeur de traitement fasse une requête mémoire, non présente dans sa mémoire-cache (cette probabilité m = $\alpha$ .Pa est proportionnelle à la probabilité d'absence Pa de l'information dans la mémoire-cache et à un facteur $\alpha$ fonction de la puissance du processeur de traitement ramené à un pourcentage de requêtes mémoire),

W

est le temps moyen d'attente du bus commun, qui est fonction du nombre n de processeurs,

tf

est le temps de transfert d'un bloc de la mémoire centrale vers une mémoire-cache.

Les hypothèses à partir desquelles a été établie cette formule montrent que celle-ci est applicable à l'architecture conforme à l'invention, avec un niveau d'approximation comparable au niveau d'approximation de la formule pour des architectures classiques à bus commun.

Il est ainsi possible de comparer les performances des deux types d'architecture en supposant que les composants communs aux deux architechtures sont de caractéristiques identiques.

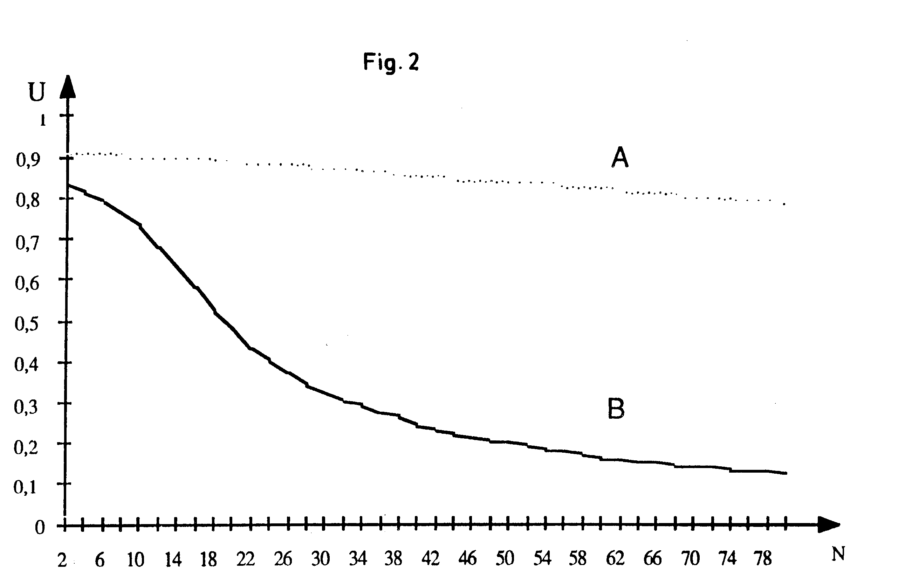

La figure 2 donne les courbes obtenues du rendement U en fonction du nombre n de processeurs pour les paramètres suivants, les paramètres communs aux deux dispositifs étant identiques, et tous de valeur usuelle :

- taille du bloc bi = 64 octets,
- taille du mot pour le transfert parallèle sur bus commun = 4 octets,
- temps d'accès mémoire centrale RAM = 100 nanosecondes,
- temps du cycle bus BUSA = 50 nanosecondes,
- fréquence de transfert série = 500 Mhz,
- probabilité d'absence Pa = 0,005 (mémoire-cache de 16 Koctets),
- facteur de puissance des processeurs : $\alpha$ = 0,5.

On constate en comparant les courbes A (architecture de l'invention) et B (architecture classique) que l'architecture conforme à l'invention possède un rendement nettement supérieur à l'architecture classique ; l'architecture de l'invention permet de mettre en place un nombre de processeurs très supérieur aux architectures classiques à bus commun qui en pratique ne peuvent dépasser la dizaine de processeurs. Par exemple, dans le cas classique, un rendement de 0,75 est obtenu dès le dizième processeur, alors qu'il est obtenu pour plus de 80 processeurs dans le cas de l'invention.

La figure 3 présente un mode de réalisation d'une logique de transfert $TFR_j$ ou $TFR'_j$ permettant de transférer un bloc bi d'information d'un registre-mémoire $RDM_j$ vers un registre-processeur $RDP_j$ (le transfert inverse est assuré par des moyens symétriques non représentés à cette figure). Chaque logique $TFR_j$ ou $TFR'_j$ comporte une partie de contrôle de l'émission $TFRE_j$ et $TFRE'_j$ et une partie de contrôle de la réception $TFRR_j$ et

$TFRR'_j$ qui sont activées de façon croisée (émission $TFRE_j$ activée en synchronisme avec la réception $TFRR'_j$). Le système comporte un générateur d'horloge H dont la fréquence fixe la vitesse de transmission et fournit le signal d'horloge h à la partie émission $TFRE_j$ et à la partie réception $TFRR'_j$.

Dans la partie émission $TFRE_j$ un registre décompteur DC recevant par son entrée dc chargement $\overline{load_2}$ le signal de lecture $\overline{r}$ du processeur de gestion $PG_j$ permet de laisser passer t + 1 impulsions d'horloge h à travers une porte logique $\overline{ET1}$ commandée par un signal de passage à zéro "$\overline{borrow}$", la sortie de cette porte ET1 étant reliée à l'entrée de décomptage "down" du décompteur DC et à l'entrée de décalage shift1 du registre-mémoire $RDM_j$.

Dans la partie réception $TFRR'_j$, une bascule B est reliée par son entrée de donnée D à la sortie série du registre-processeur $RDP_j$, l'entrée horloge clk de cette bascule étant reliée à l'horloge H pour recevoir le signal h. Un signal d'initialisation "$\overline{init}$" fourni par le processeur de gestion $PG_j$ est relié à l'entrée $\overline{S}$ de la bascule B et à l'entrée de chargement $\overline{load3}$ du registre-processeur $RDP_j$. La sortie Q de la bascule transmet un signal de commande $\overline{fin\_transfert}$ à la porte logique ET2, permettant de laisser passer le signal d'horloge h vers l'entrée de décalage shift2 du registre-processeur $RDP_j$. Ce signal de commande est également délivré vers le processeur de gestion $PG_j$ pour indiquer la fin de transfert de bloc.

Le fonctionnement de l'ensemble est le suivant : le processeur de gestion $PG_j$, après avoir obtenu l'accès à la mémoire centrale RAM via le bus BUSA, effectue sa lecture de bloc bi en fournissant l'adresse du bloc concerné et le signal de lecture $\overline{r}$. Ce signal déclenche l'activation de la partie émission $TFRE_j$ : le front final du signal de lecture r provoque le chargement du bloc bi dans le registre-mémoire $RDM_j$ en activant le signal $\overline{load1}$ et le chargement de la valeur t + 1, correspondante à la taille en bits du bloc bi plus un bit supplémentaire dit de "start", dans le registre décompteur DC par le signal $\overline{load2}$ ; ceci a pour effet de remettre à l le signal $\overline{borrow}$ et d'autoriser l'horloge de transfert H à fournir, à travers la porte logique ET1 conditionnée par ce signal borrow, t + 1 impulsions d'horloge h : ces impulsions ont pour effet de décaler par l'entrée shift1 t + 1 Dits du registre-mémoire $RDM_j$ et de faire atteindre la valeur 0 par l'entrée down au décompteur DC : le signal $\overline{borrow}$ est remis à zéro et verrouille le fonctionnement de la partie émission $TFRE_j$.

Ainsi, la liaison série $LS_j$, initialement à l'état repos logique 1, transmet le bit 0 dit de start, puis les t bits du bloc bi, et repasse ensuite à l'état repos logique 1, le dernier bit émis étant la valeur l forcée sur l'entrée série du registre-mémoire RDM$_j$.

En préalable à la demande de lecture, le processeur de gestion PG$_j$ a initialisé la partie réception TFRR'$_j$ en activant le signal $\overline{init}$ qui a pour effet de charger le registre-processeur RDP$_j$ avec t bits à 1 par l'entrée $\overline{load3}$ et de mettre la sortie Q de la bascule B à l'état logique 1 par l'entrée $\overline{S}$. Cette sortie Q valide alors la porte logique ET2 qui laisse passer le signal d'horloge h vers l'entrée shift2 du registre-processeur RDP$_j$. A chaque impulsion d'horloge ce registre-processeur fournit un bit sur sa sortie série qui est mémorisé dans la bascule B. Le premier bit 0 qui se présente a pour effet de mettre à zéro la sortie Q de la bascule B et verrouiller le signal d'horloge h sur la porte ET2. Ce premier bit 0 étant le bit de start qui précède le bloc bi, ce dernier est donc piégé dans le registre-processeur RDP$_j$ lorsque le processeur de gestion PG$_j$ est prévenu du $\overline{changement}$ d'état de la bascule B par le signal $\overline{fin\_transfert}$ : le processeur de gestion PG$_j$ n'a plus qu'à venir lire ce bloc bi sur la sortie parallèle du registre RDP$_j$.

L'écriture d'un bloc bi vers la mémoire centrale RAM nécessite la présence d'une logique TFRE'$_j$,identique à la logique TFRE$_j$, associée au registre-processeur RDP$_j$, et d'une logique TFRR$_j$, identique à la logique TFRR'$_j$, associée au registre-mémoire RDM$_j$. Dans ce cas, le signal init de la logique TFRR$_j$ est relié au signal d'écriture $\overline{w}$ : la libération du registre-mémoire RDM$_j$ réarme automatiquement la logique de réception TFRR$_j$.

Ce mode de réalisation de la logique de contrôle du transfert n'est qu'un exemple possible : le registre émetteur peut être en décalage permanent lui aussi, et le registre récepteur activé pour t impulsions d'horloge sur détection du bit de start en début de transfert.

L'horloge H peut être connectée aux deux registres, ou deux horloges locales indépendantes peuvent être utilisées, la synchronisation étant obtenue de façon classique par un préambule dit de synchronisation.

Le système représenté à la figure 4 comprend un registre à décalage mémoire dédoublé RDM1$_j$ et RDM2$_j$, un registre à décalage processeur dédoublé RDP1$_j$ et RDP2$_j$, deux liens séries unidirectionnels LS1$_j$ et LS2$_j$, l'un reliant le registre-mémoire RDM1$_j$ au registre-processeur RDP1$_j$ de façon à transmettre le contenu du premier vers le second, l'autre reliant le registre-mémoire RDM2$_j$ au registre-processeur RDP2$_j$ de façon à transmettre le contenu du second vers le premier, et des logiques associées pour le contrôle du transfert : TFRE1$_j$ pour RDM1$_j$, TFRR2$_j$ pour RDM2$_j$, TFRE2$_j$ pour RDP2$_j$, TFRR1$_j$ pour RDP1$_j$.

Pour lire un bloc d'information bi en mémoire centrale RAM, le processeur de gestion PG$_j$ initialise par le signal $\overline{init}$ la logique TFRR1$_j$ associée au registre-processeur RDP1$_j$ puis active sa demande de lecture à la mémoire RAM par le signal de lecture $\overline{r}$. Ce signal active la logique TFRE1$_j$ associée au registre-mémoire RDM1$_j$ : celle-ci assure le transfert sur le lien LS1$_j$ du bloc bi d'information. La fin du transfert est détectée par le logique TFRR1$_j$ associée au registre-processeur RDP1$_j$ qui prévient le processeur de gestion PG$_j$ de l arrivée du bloc bi par le signal $\overline{fin\_transfert}$. Le processeur de gestion PG$_j$ transfère alors le contenu du registre-processeur RDP1$_j$ dans la mémoire-cache MC$_j$.

Pour écrire un bloc mémoire bi, le processeur de gestion PG$_j$ charge le registre-processeur RDP2$_j$ avec le bloc bi concerné extrait de la mémoire-cache MC$_j$, ce qui active le transfert de ce bloc sur le lien LS2$_j$. La logique de transfert TFRR2$_j$ associée au registre-mémoire RDM2$_j$ assure la bonne réception de ce bloc. Le processeur de gestion PG$_j$ est prévenu de la fin du transfert par le changement d'état du signal $\overline{borrow}$ issu de la logique de transmission TFRE2$_j$. Le processeur de gestion PG$_j$ effectue alors sa demande d'écriture qui devient effective lors de l'activation du signal d'écriture $\overline{w}$ ; celui-ci a pour effet de transférer le contenu du registre RDM2$_j$ dans la mémoire centrale RAM et de réinitialiser pour un prochain transfert la logique TFRR2$_j$.

Ce dispositif autorise un transfert simultané de blocs dans les deux sens et permet de traiter plus rapidement les défauts de blocs bi dans la mémoire cache MC$_j$ lorsque cette dernière est saturée ; il autorise également la mise en place d'un mécanisme classique d'anticipation de lecture de blocs.

Dans un autre mode de réalisation présenté à la figure 5, la liaison LS$_j$ comprend un seul lien bidirectionnel doté à chaque extrémité d'une logique de validation LV$_1$ et LV$_2$ constituée par une porte logique à 2 entrées à collecteur ouvert OC$_1$ et OC$_2$, l'une des entrées étant reliée à la sortie série du registre-mémoire RDM$_j$ pour la porte OC$_1$ et du registre-processeur RDP$_j$ pour la porte OC$_2$, l'autre entrée étant reliée à la sortie Q d'une bascule de commande BC$_1$ et BC$_2$ ; chacune de celles-ci est reliée par ses entrées $\overline{S}$ et $\overline{R}$ à la logique de transfert TFR pour la bascule BC$_1$ et TFR' pour la bascule BC$_2$.

Lectures et écritures sont effectuées de façon exclusive, à la seule initiative du processeur de gestion PG$_j$.

Une lecture mémoire active le signal de lecture $\overline{r}$ qui provoque la mise à l de la bascule BC$_1$ par son entrée $\overline{S}$, la remise à zéro étant commandée, sur l'entrée $\overline{R}$, par la logique de transfert TFR à la fin du transfert du bloc.

Une écriture mémoire déclenche un mécanisme identique sur la logique de validation LV$_2$.

D'autres combinaisons registres/liens sont possibles, et dans le cas d'un lien bi-directionel, on peut notamment utiliser des registres à décalage bi-directionnels recevant un signal de sens de transfert. Cette solution conduit à l'utilisation de registres à décalage plus complexes en logique, donc a priori moins performants en vitesse de transfert.

La vitesse de transfert devant être très élevée, les registres à décalages $RDM_j$ et $RDP_j$, leurs logiques de commandes associées TFR et TFR', les logiques de validations $LV_1$ et $LV_2$, sont choisis dans une technologie rapide (ECL, ASGA), et synchronisés par une horloge de fréquence F au moins égale à 100 MHz .

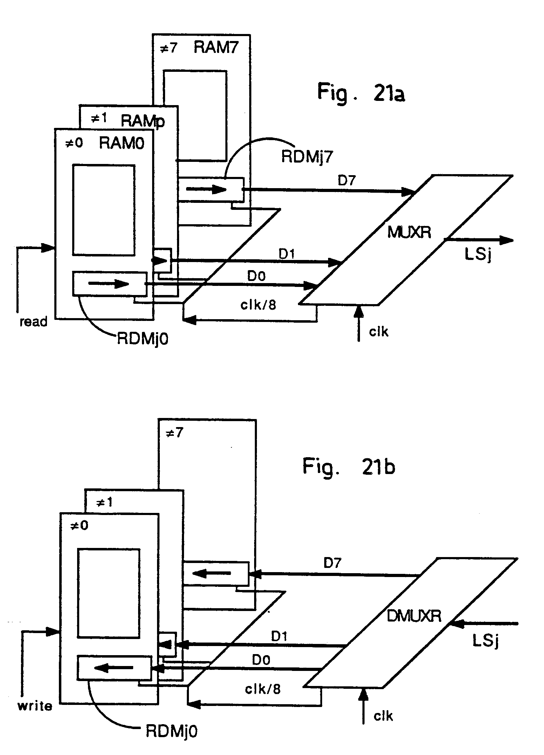

Une autre solution à registres multiplexés présentée à la figure 21 permet, comme on le comprendra plus loin, de réduire considérablement la quantité de logique performante, donc coûteuse, nécessaire.

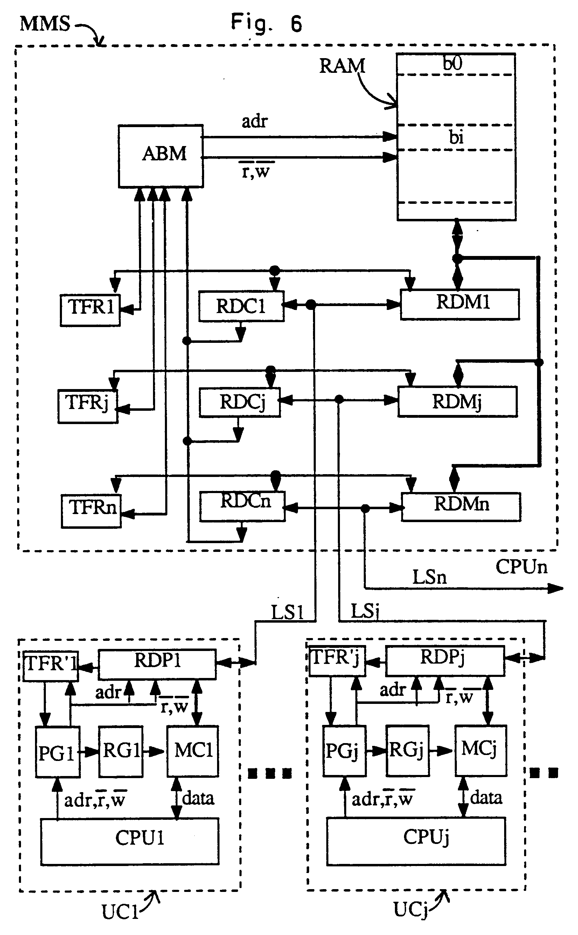

Le système multiprocesseur de la figure 1 était doté, à la fois, d'un bus commun de communication d'adresses de bloc et de liaisons-séries de transfert de données. La figure 6 présente, en variante, un système multiprocesseur de même principe général, mais dans lequel données et adresses transitent par les liaisons séries, en l'absence de bus commun.

Ce système comprend, en plus des registres-mémoires $RDM_j$, des registres à décalages complémentaires $RDC_j$ aptes à mémoriser les adresses des blocs demandés et contrôlés par une logique de type $TFR_j$. En outre, un arbitre de gestion d'accès ABM est relié à la mémoire centrale RAM et aux registres complémentaires $RDC_j$ par leur sortie parallèle. Chaque logique $TFR_j$ est reliée à cet arbitre ABM de structure classique. Le processeur de gestion $PG_j$ de chaque mémoire-cache $MC_j$ est relié à une partie de l'entrée parallèle du registre-processeur $RDP_j$, en vue d'avoir accès à celui-ci en écriture.

Pour lire un bloc bi en mémoire centrale RAM, le processeur de gestion $PG_j$ place l'adresse du bloc demandé et la nature de la demande (par un bit de préfixe : 1 = lecture, 0 = écriture) dans la partie qui lui est accessible du registre-processeur $RDP_j$, ce qui a pour effet d'initialiser le transfert de cette information. La logique de transfert $TFR_j$ détecte la fin de transfert sur le registre complémentaire $RDC_j$ et active une demande d'opération vers l'arbitre ABM ; celui-ci est chargé de sérialiser et de traiter les demandes de lecture de bloc en mémoire centrale RAM en allant lire l'adresse du bloc demandé dans le registre complémentaire $RDC_j$ correspondant à la logique de transfert élue par l'arbitre ABM, puis en allant lire le bloc en mémoire centrale RAM qui sera ensuite chargé dans le registre-mémoire $RDM_j$ et transmis comme précédemment.

Pour écrire un bloc en mémoire centrale RAM, le processeur de gestion $PG_j$ enchaîne la transmission de l'adresse puis du bloc à écrire à travers le registre-processeur $RDP_j$. Le registre complémentaire $RDC_j$ reçoit ainsi tout d'abord l'adresse et la nature de la demande.

La logique de transfert $TFR_j$ analyse cette demande et valide la réception du bloc dans le registre-mémoire $RDM_j$ du fait de la nature de la demande (écriture). La logique de transfert $TFR_j$ est prévenue de la fin de transfert du bloc bi et transmet alors sa requête de service à l'arbitre ABM. Cette demande est traitée, son tour venu, par ledit arbitre qui active l'écriture du bloc bi en mémoire.

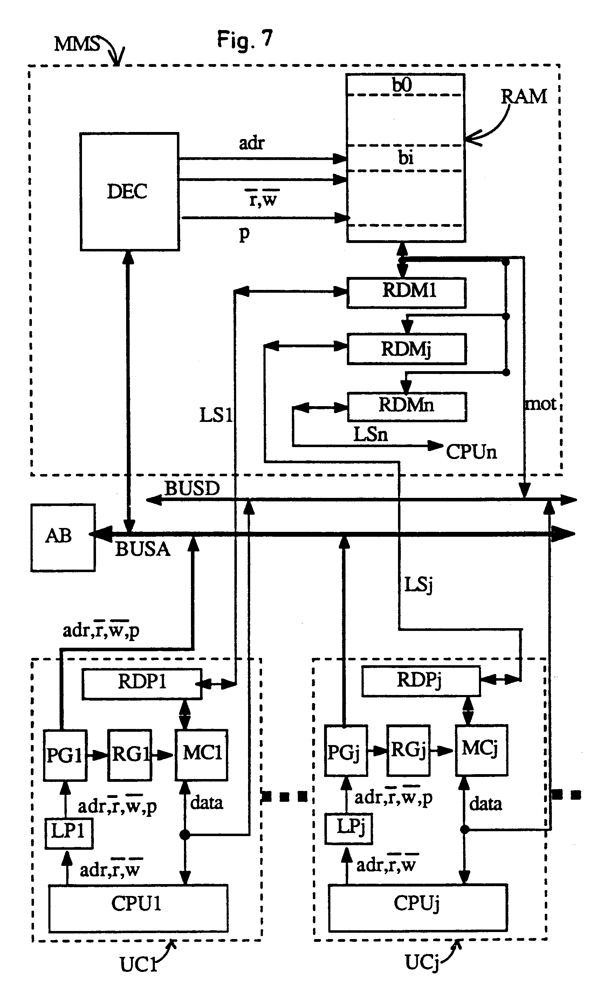

Par ailleurs, le système multiprocesseur représenté à la figure 7 comprend des moyens de gestion des données partagées, permettant de traiter, de façon statique, le problème classique du maintien de la cohérence des données partagées. Ce système comprend les ressources du système de la figure 1 (mêmes désignations) avec les logiques et les ressources supplémentaires suivantes :

Un bus spécial de communication parallèle de mots BUSD relie les processeurs $CPU_j$ et la mémoire centrale RAM. Une logique de partition $LP_j$ est associée à chaque processeur $CPU_j$ ; chaque logique $LP_j$ est constituée de façon classique par un ensemble de couples registres-comparateurs connectés en parallèle sur le bus adresse adr du processeur $CPU_j$, en vue de réaliser une partition de l'espace mémoire de la mémoire centrale RAM en zone de données non partagées et de données partagées, ladite logique $LP_j$ délivrant à cet effet un signal p (indiquant la nature des données, partagées ou non). Une logique de décodage DEC est associée à la mémoire centrale RAM, elle-même aménagée pour être commandée en écriture par mot ou par bloc par ladite logique DEC.

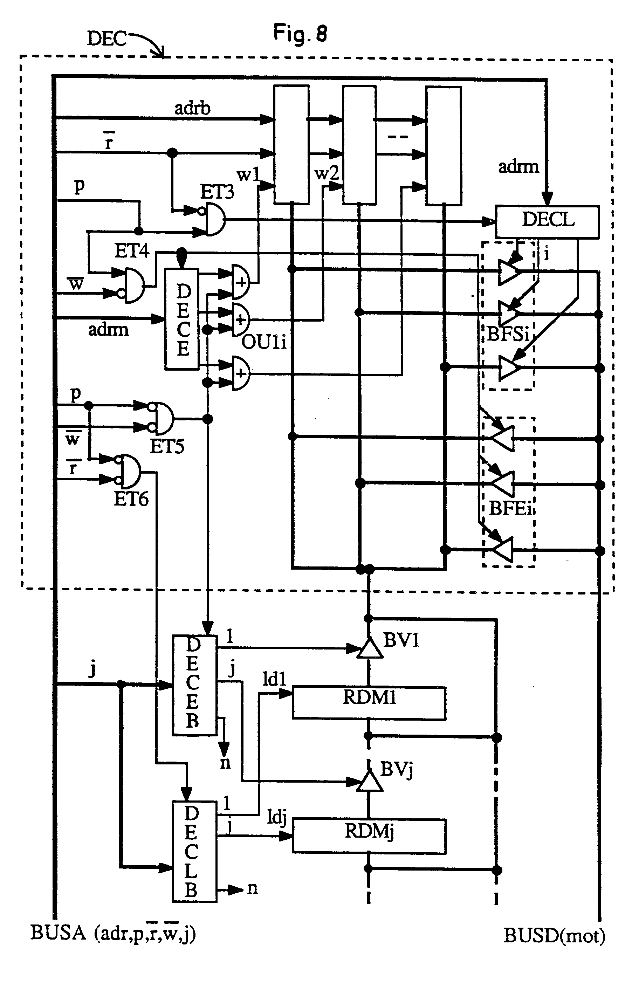

La logique de décodage DEC est détaillée à la figure 8 et comporte un décodeur DECL, recevant sur son entrée de donnée la partie adresse mot adrm de l'adresse adr, et relié par son entrée de validation à la sortie d'une porte logique ET3, chaque sortie i dudit décodeur étant reliée à un "buffer" de validation de sortie $BFS_i$. La porte logique ET3 reçoit sur ses entrées le signal p et le signal $\bar{r}$ inversé. Un décodeur DECE est relié lui aussi par son entrée de donnée au bus adrm, et par son entrée de validation à la sortie d'une porte logique ET4, ses sorties étant reliées à un ensemble de portes logiques $OU1_i$ en nombre égal au nombre de mots dans un bloc. La porte logique ET4 reçoit sur ses entrées le signal p et le signal $\bar{w}$ inversé. La sortie de la porte ET4 est également reliée à un ensemble de "buffers" de validation d'entrées $BFE_1$, $BFE_i$... La mémoire centrale RAM peut être commandée en écriture par mot. Chaque "tranche" mot ainsi définie a son entrée de commande d'écriture $w_i$. La sortie de chaque porte logique $OU1_i$ est reliée à l'entrée $w_i$ de chaque "tranche" mot de la mémoire centrale RAM.

La figure 8 présente en outre le détail de l'adressage des registres mémoires $RDM_j$, qui comprend en premier lieu un décodeur DECEB relié par son entrée de donnée au bus commun BUSA, en vue de recevoir le numéro j du processeur concerné par la requête de l'unité centrale $UC_j$ ; ce décodeur DECEB est relié par son entrés de validation à la sortie d'une porte logique ET5 et par ses sorties 1, 2... j à des "buffers" de validation $BV_1$, $BV_j$... La porte logique ET5 reçoit sur ses entrées les signaux p et $\bar{w}$ inversés. De même, un décodeur DECLB est relié par son entrée de donnée au champ j du bus commun BUSA et par son entrée de validation à la sortie d'une porte logique ET6 ; les sorties 1, 2... j de ce décodeur DECLB sont reliées aux entrées de chargement $ld_1$, $ld_j$ des registres à décalages mémoire $RDM_j$. La porte logique ET6 reçoit sur ses entrées les signaux p et $\bar{r}$ inversés.

Le fonctionnement du système est le suivant : à chaque référence mémoire, le processeur $CPU_j$ fournit une adresse sur son bus adresse adr, et la nature de la requête : lecture $\bar{r}$ ou écriture $\bar{w}$. Il attend une donnée en cas de lecture et fournit une donnée en cas d'écriture. L'adresse adr traverse la logique de partition $LP_j$, laquelle indique, par le signal p, si l'adresse adr appartient à une zone de données non partagées (p = 0) ou de données partagées (p = 1). Dans le premier cas, la demande est aiguillée vers le processeur de gestion $PG_j$ et est traitée selon le mode de fonctionnement décrit en référence à la figure 1. Dans le second cas, la requête est directement aiguillée vers le bus commun BUSA ; le bus adresse adr comporte des fils supplémentaires d'adresse permettant d'identifier le mot concerné : l'adresse adr est constituée d'une partie adresse bloc adrb et d'une partie adresse mot adrm. Ainsi, après accord de l'arbitre de bus AB, la mémoire centrale RAM reçoit soit une demande de transaction bloc (p = 0) et dans ce cas, seule la partie bloc adrb de l'adresse adr est significative, soit une demande de transaction mot (p = 1) et, dans ce cas, toute l'adresse adr (bloc adrb et mot adrm) est significative.

En cas de lecture bloc, p = 0 et r = 0, la porte logique ET6 valide le décodeur DECLB qui délivre un signal de chargement $LD_j$ sur le registre à décalage $RDM_j$, permettant de charger dans ce dernier le bloc lu en mémoire centrale RAM à l'adresse adrb par le signal de lecture $\bar{r}$.

En cas d'écriture bloc, p = 0 et w = 0, la porte logique ET5 valide le décodeur DECEB qui délivre un signal de validation sur le "buffer" $BV_j$, permettant au contenu de ce registre d'être présenté à la mémoire centrale RAM et d'être ainsi écrit à l'adresse adrb, la sortie de la porte logique ET5 fournissant le signal d'écriture bloc. Ce dernier est diffusé sur les entrées d'écriture $w_1$, $w_i$, ... aux "tranches" mot de la mémoire centrale RAM à travers les portes logiques $OU1_i$.

En cas de lecture mot, p = 1 et r = 0, la porte logique ET3 valide le décodeur DFCL qui délivre un signal de validation sur le "buffer" $BFS_i$, permettant au mot demandé (d'adresse adrm dans le bloc adrb) dont la lecture est assurée par le signal $\bar{r}$, d'être aiguillé vers le bus spécial de communication BUSD. Ce mot est récupéré directement par le processeur $CPU_j$ sur son entrée de donnée data.

En cas d'écriture mot, p = 1 et w = 0, la porte logique ET4 valide le décodeur DECE qui fournit sur sa sortie i un signal aiguillé à travers la porte logique $OU1_i$ vers l'entrée d'écriture $w_i$ de la "tranche" mot de la mémoire centrale RAM concernée ; ce signal présent à l'entrée $w_i$ permet d'écrire dans cette seule "tranche" mot le mot fourni par le processeur $CPU_j$ sur le bus de donnée BUSD. Le contenu de ce bus est présenté en parallèle sur toutes les "tranches" mot de la mémoire centrale RAM, grâce à une activation des "buffers" $BFE_i$ par le signal issu de la porte logique ET4.

Une caractéristique essentielle de l'architecture de l'invention est de présenter une charge minimale de requêtes sur le bus commun BUSA. Dans l'architecture schématisée à la figure 7, le bus commun BUSA est sollicité par des adresses de bloc et par des adresses de mot. La fréquence des demandes en adresses de mot est fonction du taux de données partagées et peut conduire à une saturation du bus commun BUSA.

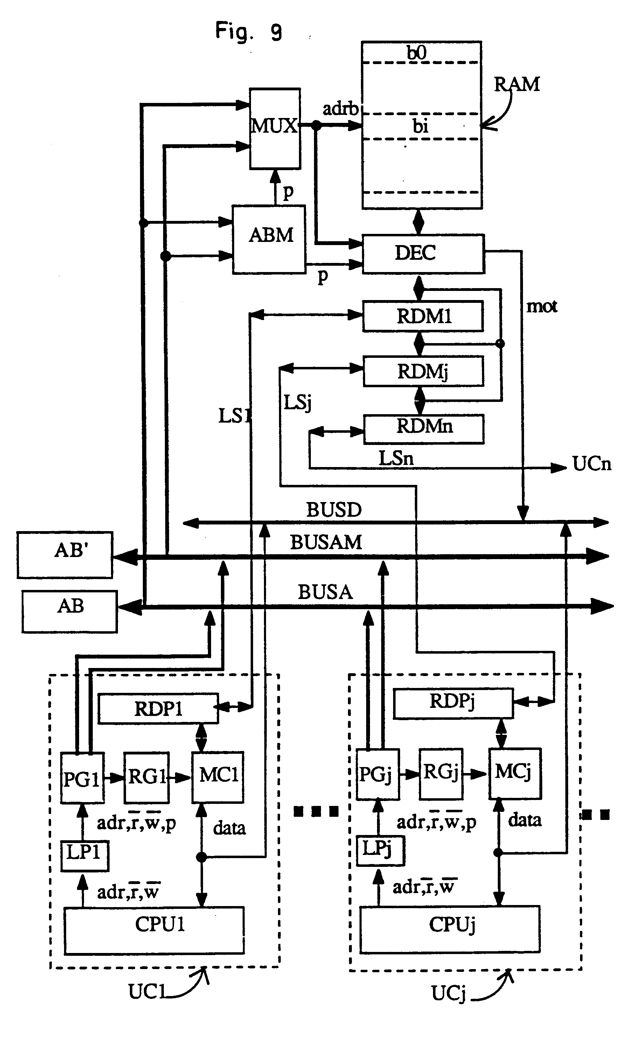

La figure 9 présente en variante une solution pour réduire cette charge. Le système visé comprend, en plus des ressources de la figure 7, un bus BUSAM pour les adresses de mot, un arbitre AB' pour arbitrer les conflits d'accès au bus BUSAM, un arbitre ABM chargé d'arbitrer les conflits d'accès en provenance des bus BUSA et BUSAM, et relié à un multiplexeur MUX lui-même relié par ses entrées aux deux bus BUSA et BUSAM.

Le fonctionnement de ce système est le suivant : comme précédemment, la logique de partition $LP_j$ fournit le signal p permettant d'identifier la nature des données manipulées.

Si la demande concerne des données non partagées (p = 0), tout défaut d'information entraîne une requête mémoire de type bloc qui transite par le bus commun BUSA.

Si la demande concerne des données partagées (p = 1), la requête est aiguillée vers le bus commun BUSAM. Ainsi, la mémoire centrale RAM peut recevoir des demandes simultanées sur les deux bus BUSA et BUSAM, qui doivent donc être arbitrées. L'arbitre ABM alloue, de façon classique, l'accès à la mémoire centrale RAM à l'une des deux requêtes et reconstitue le signal p à partir de l'origine de la demande (p = 0 pour BUSA, p = 1 pour BUSAM). Le signal p commande alors, d'une part, le multiplexeur MUX qui laisse passer les signaux du bus concerné par la requête, d'autre part, la logique de décodage DEC : on se retrouve dans la situation du système précédent.

On notera que la charge s'est déplacée du bus commun vers la mémoire centrale RAM, puisque le taux de requête au niveau de cette dernière reste le même et que son temps de cycle est du même ordre de grandeur ou même supérieur à celui du cycle bus.

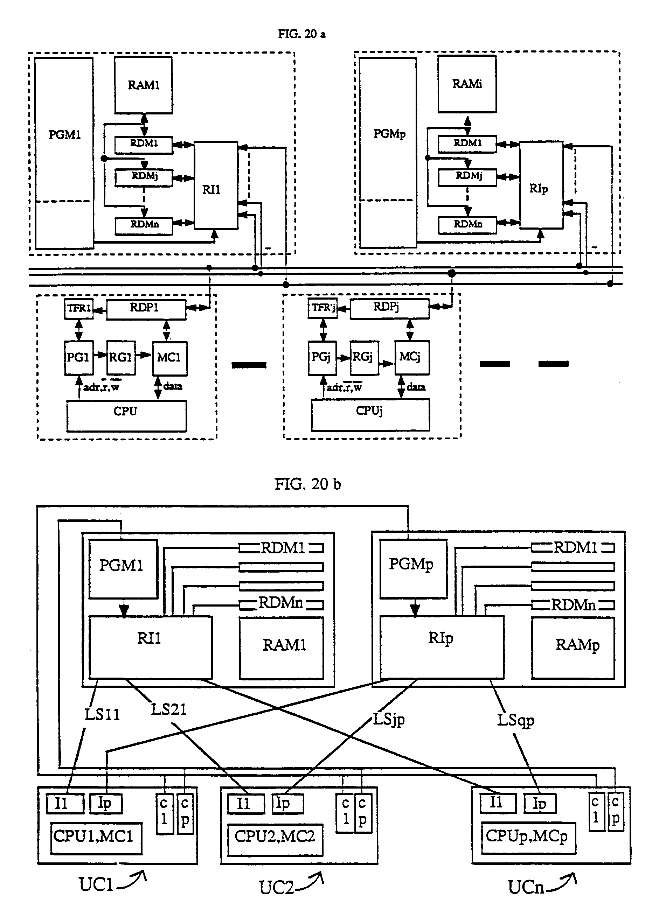

Cette solution n'est donc intéressante que si la mémoire centrale RAM est constituée de bancs mémoire centrale indépendants organisés selon la description donnée plus loin en référence à la figure 20 : plusieurs transactions peuvent dans ce cas, si elles affectent différents bancs mémoires, avoir lieu simultanément.

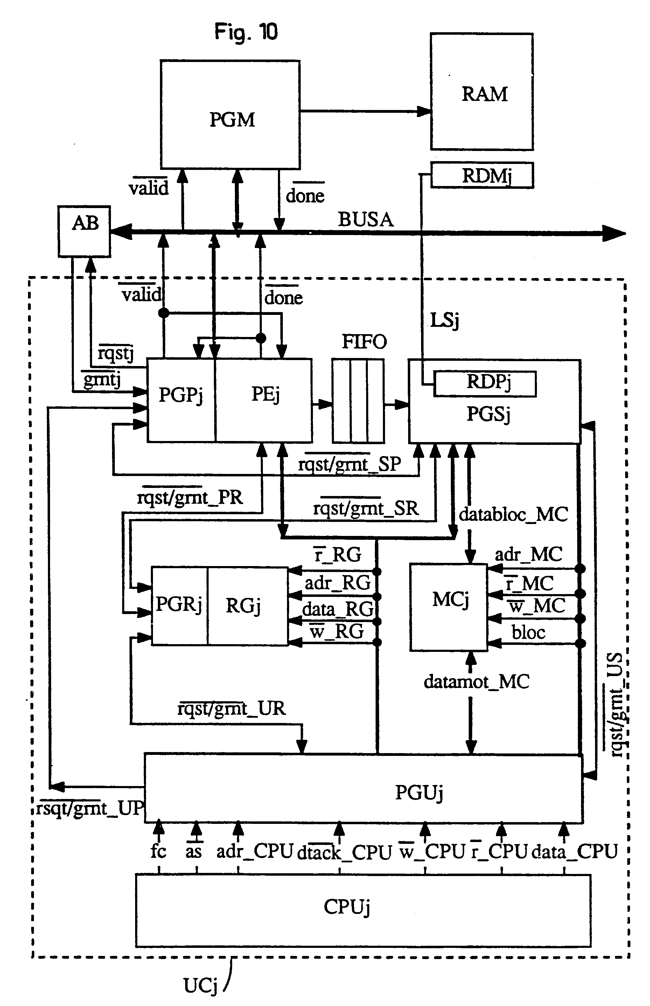

La figure 10 présente un schéma synoptique d'un mode de réalisation d'architecture conforme à l'invention, dans lequel le problème des données partagées est traité de façon dynamique. A cet effet, le dispositif conforme à ce mode de réalisation comporte un processeur espion de bus $PE_j$, couplé à un processeur de gestion du lien parallèle $PGP_j$. Un processeur de gestion du lien série $PGS_j$ est lié au processeur espion $PE_j$ par une file d'attente $FIFO_j$. Un processeur de gestion de requêtes de l'unité centrale $PGU_j$ est lié, d'une part, au processeur de traitement $CPU_j$, d'autre part, aux processeurs de gestion du lien parallèle $PGP_j$ et de gestion du lien série $PGS_j$. La logique correspondant au processeur de gestion $PG_j$ de chaque mémoire-cache est dans ce mode de réalisation éclatée dans les divers processeurs présentés ci-dessus. L'accès à la mémoire-cache $MC_j$ et à son répertoire $RG_j$ est règlementé par un processeur de gestion du répertoire et du cache $PGR_j$.

Enfin, un processeur de gestion PGM de la mémoire centrale RAM est connecté au bus BUSA et à la mémoire centrale RAM, et à ses registres à décalages $RDM_j$.

Le fonctionnement de l'ensemble est le suivant :

Chaque transaction sur le bus commun BUSA correspond à une demande de lecture ou d'écriture de bloc bi. Les processeurs espions de bus $PE_j$ sont activés par chaque demande de lecture de bloc de données. Cette opération réalisée dans le même cycle par tous les processeurs espions va permettre de garantir l'unicité de valeur des données partagées. Le processeur espion $PE_j$ dispose d'un accès au répertoire $RG_j$. La fonction d'application utilisée pour la gestion de la mémoire-cache $MC_j$ est dans le mode de réalisation décrit du type application directe. Chaque élément du répertoire est un descripteur de bloc qui contient un champ "tag" (adresse du bloc), des bits classiques d'états du bloc : un bit de validation v et un bit de modification m et deux bits supplémentaires a pour noter que le bloc est connu de la mémoire-cache mais encore en cours de transfert sur la liaison série, f pour indiquer que le bloc est dans la file d'attente FIFO et éviter ainsi qu'il y soit placé plusieurs fois.

Le processeur de gestion mémoire PGM dispose, d'une part, d'une file d'attente AFIFO d'adresses de blocs bi et d'adresses de processeurs, accessible de façon associative, d'autre part, d'un répertoire d'état des blocs constitué de 2 bits par bloc ro et rw indiquant les états possibles de bloc suivant :

.　ro = rw = 0 : bloc non encore diffusé,

.　ro = 1 ; rw = 0 : bloc déjà diffusé en lecture : une ou plusieurs copies de ce bloc se trouvent dans les mémoires-caches,

.　ro = 0 ; rw = 1 : bloc diffusé en écriture : la copie à jour de ce bloc se trouve dans une mémoire-cache.

L'évolution des bits d'états de blocs est la suivante, différente selon la nature de la demande du processeur de traitement $CPU_j$ :

- si le processeur $CPU_j$ fait une demande de lecture de données non partagées (espace programme ou de données explicitement non partagées) : le bloc est marqué déjà diffusé en lecture (ro = 1 ; rw = 0) côté mémoire centrale lors du transfert dudit bloc de la mémoire centrale RAM vers le registre $RDM_j$ et marqué non modifié (m = 0) côté mémoire-cache dans le même cycle de mise à jour du répertoire $RG_j$ de la mémoire-cache (bloc valide). Les espions n'ont pas réagi à la requête sur le bus commun (la demande ayant été faite avec l'indication "données non partagées").

- si le processeur $CPU_j$ fait une demande de lecture de données (a priori partagées), le bus commun BUSA est occupé pour le temps du passage des informations d'adresses et de type de requête, le temps de leur traitement par le processeur PGM et les espions du bus commun $PE_j$. En mémoire centrale RAM, ce bloc peut être :

1. Non encore diffusé : ro = rw = 0. Il est alors transmis à l'unité centrale $UC_j$ et prend l'état non modifié,

2. Déjà diffusé en lecture : ro = 1 ; rw = 0. Il est alors transmis à l'unité centrale $UC_j$. Son état ne change pas,

3. Déjà diffusé en écriture : ro = 0 ; rw = 1. La copie à jour de ce bloc se trouve dans une mémoire-cache $MC_i$. Le processeur es-

pion $PE_i$ associé à cette mémoire-cache a noté la demande de l'unité centrale $UC_j$ lors du passage de l'adresse sur le bus commun et a entrepris son transfert en mémoire centrale RAM dès que possible sur sa liaison série $LS_i$. En attendant son transfert effectif, le processeur de gestion mémoire PGM met la demande en attente dans la file d'attente associative qui comporte un nombre d'éléments égal au nombre de processeurs.

Lors de la demande de lecture sur le bus commun BUSA, tous les processeurs espions $PE_i$ ont réagi en consultant le répertoire $RG_i$ associé à leur mémoire-cache $MC_i$. Le bus commun BUSA n'est libéré que lorsque tous les processeurs espions $PE_i$ ont eu leur accès au répertoire de gestion $RG_i$, ce qui garantit le même état du bloc dans tout le système. Le processeur qui possède la copie à jour dans sa mémoire-cache effectue dès que sa liaison série est libre, le transfert de ce bloc dans le registre $RDM_i$ et fait une demande d'écriture de bloc sur le bus commun qui aura pour effet de libérer la demande en attente dans la file associative AFIFO et d'effectuer la mise à jour des bits d'états du bloc.

La mise à jour du bloc n'a donc nécessité qu'une écriture en mémoire centrale RAM sans activation d'espion.

- si le processeur $CPU_j$ demande l'écriture d'une donneé dans un bloc présent dans sa mémoire-cache $MC_j$ avec l'état non modifié, une demande d'écriture informative doit être émise sur le bus commun BUSA car il est possible que d'autres mémoires-cache $MC_i$ possèdent ce bloc avec le même état. Ces autres mémoires doivent être informées du changement d'état. A cet effet, tous les processeurs espions $PE_i$ (activés par l'écriture informative diffusée sur le bus commun BUSA) consultent leur répertoire de gestion $RG_i$ et invalident ce bloc, cependant que la mémoire centrale note dans le même temps le changement d'état de ce bloc ainsi que le processeur de gestion parallèle $PGP_j$, dans le répertoire de gestion $RG_j$. La libération du bus commun BUSA par tous les processeurs espions et la mémoire centrale RAM permet au processeur $CPU_j$ de réaliser l'écriture dans sa mémoire-cache $MC_j$, la mise à jour du bit d'état du répertoire de gestion $RG_j$ ayant été effectuée.

Si une unité centrale est en attente d'accès au bus BUSA pour la même requête sur le même bloc, sa demande se transforme en écriture simple et suit alors le protocole de demande de bloc en écriture.

- si le processeur $CPU_j$ demande l'écriture d'une donnée dans un bloc absent de la

mémoire-cache $MC_j$, ce bloc est lu en mémoire centrale RAM et amené dans la mémoire-cache $MC_j$ pour que l'écriture soit rendue effective.

En mémoire centrale RAM, ce bloc peut être :

1. Non encore diffusé : ro = rw = o. Le bloc est alors émis sur la liaison série $LS_j$ vers la mémoire-cache $MC_j$. Il prend les états ro = 0 ; rw = 1 en mémoire centrale et l'état modifié (m = 1) dans la mémoire-cache,

2. Déjà diffusé en lecture : ro = 1 ; rw = 0. Le bloc est émis sur la liaison série $LS_j$ vers la mémoire-cache $MC_j$. Il prend les états ro = 0 ; rw = 1 en mémoire centrale et l'état modifié (m = 1) dans la mémoire-cache. Lors de la demande sur le bus commun BUSA, les processeurs espions $PE_i$ ont noté la requête et invalidé ce numéro de bloc dans leur mémoire-cache $MC_i$,

3. Déjà diffusé en écriture : ro = 0 ; rw = 1. La demande est mise dans la file d'attente associative AFIFO et le bus commun BUSA est libéré.

Le processeur espion $PE_i$ de la mémoire-cache $MC_i$, détenteur de la copie à jour, active dès que possible le transfert du bloc demandé de sa mémoire-cache $MC_i$ vers la mémoire centrale RAM. Ce bloc est ensuite invalidé dans la mémoire-cache $MC_i$.

L'unité centrale $UC_j$ fait une demande d'écriture de mise à jour de bloc dans les deux cas suivants :

a) la mémoire-cache est saturée et la purge d'un bloc nécessite la mise à jour de ce bloc en mémoire centrale,

b) une unité centrale $UC_i$ est en attente d'un bloc dont la seule copie à jour se trouve dans la mémoire-cache $MC_j$. Le processeur espion $PE_j$ note la demande et réalise dès que possible la purge de ce bloc.

Côté mémoire centrale RAM, chaque demande d'écriture de mise à jour entraîne une consultation de la file d'attente associative AFIFO et, en cas de découverte d'une unité centrale $UC_i$ en attente de ce bloc, le chargement de ce bloc dans le registre à décalage $RDM_i$ et la mise à jour des bits d'états correspondant à ce bloc. Ce type de demande d'écriture ne sollicite donc pas les processeurs espions.

Le processeur de gestion du répertoire $PGR_j$ qui est ajouté dans ce mode de réalisation, permet le déroulement de l'algorithme évoqué ci-dessus, en coordonnant les accès au répertoire de la mémoire-cache $MC_j$ qui reçoit des requêtes de trois unités fonctionnelles asynchrones :

1. Le processeur de traitement $CPU_j$, en vue de lire les instructions du programme en cours d'exécution et de lire ou écrire les données manipulées par ce programme,

2. Le bus commun BUSA, en vue de maintenir la cohérence des données dans la mémoire-cache $MC_j$,

3. La liaison série $LS_j$, en vue de charger/décharger un bloc d'information de/vers la mémoire centrale RAM.

Chacune de ces requêtes accède au répertoire de gestion $RG_j$ de la mémoire-cache. La sérialisation de ces accès sur ledit répertoire de gestion permet d'assurer le bon fonctionnement de l'algorithme sus-évoqué de cohérence de l'information dans les mémoires-caches. On obtient ainsi un couplage fort des requêtes au niveau du répertoire de gestion $RG_j$ mais la synchronisation qui doit exister au niveau du traitement de ces requêtes est suffisamment faible pour envisager un fonctionnement asynchrone de la logique de traitement de ces requêtes, ce qui conduit au découpage fonctionnel suivant :

L'interface de chaque processeur $CPU_j$ et de ses auxiliaires ($PGS_j$, $PGU_j$) avec le bus commun BUSA est composée de deux parties ayant un fonctionnement mutuellement exclusif : le processeur de gestion du lien parallèle $PGP_j$ est chargé de requérir le bus commun BUSA à la demande du processeur de gestion de requêtes $PGU_j$ ou du processeur de gestion du lien série $PGS_j$ et de piloter le bus commun BUSA en écriture. Le processeur espion de bus $PE_j$ assure la fonction d'espionnage, ce qui revient à piloter le bus commun BUSA en lecture. Il accède de façon fréquente au répertoire $RG_j$ de la mémoire-cache $MC_j$.

Le processeur de gestion du lien série $PGS_j$ gère l'interface avec la liaison série $LS_j$. Il assure le chargement et le déchargement de blocs d'informations bi à la demande du processeur de gestion de requêtes $PGU_j$ et du processeur espion de bus $PE_j$. Il accède de façon peu fréquente à la mémoire-cache $MC_j$ et au répertoire de gestion $RG_j$ correspondant.

Le processeur de gestion de requêtes $PGU_j$ assure le suivi des requêtes issues du processeur $CPU_j$. Il accède de façon très fréquente à la mémoire-cache $MC_j$ et au répertoire de gestion $RG_j$. Cette interface inclut l'éventuelle logique de "MMU" ("Memory Management Unit") habituellement associée au processeur de traitement $CPU_j$.

Le processeur de gestion $PGR_j$ du répertoire de gestion $RG_j$ est l'arbitre chargé d'allouer l'accès à la mémoire-cache $MC_j$.

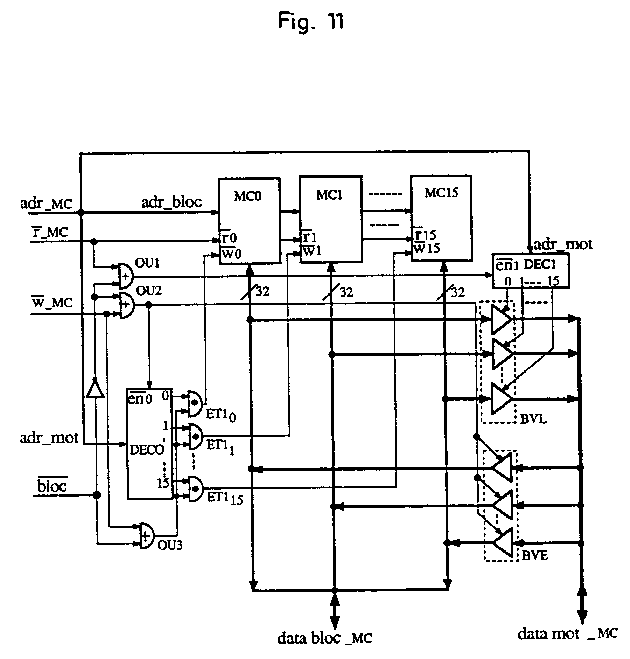

Les figures 11, 12, 13, 14, 15, 16 et 17 représentent à titre d'exemples des modes de réalisation des diverses unités fonctionnelles du dispositif de la figure 10. Les désignations des signaux ou entrées et sorties des unités sont choisies de façon habituelle. Les signaux de même fonctionnalité qui sont engendrés dans chaque unité fonctionnelle à partir d'un signal de base seront désignés par la même référence, par exemple : dnp = données non partagées, dl = demande de lecture, maj = mise à jour, de = demande d'écriture, ei = écriture informative. Le dispositif possède plusieurs processeurs et l'indice j utilisé jusqu'à présent visait un processeur courant et ses auxiliaires ; pour alléger la description, cet indice a été omis sur ces figures et il est bien entendu que la description qui suit vise chacune des unités fonctionnelles qui se rattachent à chaque processeur de traitement. Par ailleurs, les signaux notés x_YZ définissent le nom et l'origine du signal dans le cas où YZ = RG, MC, UC, et la source et la destination du signal dans les autres cas, avec Y et Z représentant : U = PGU, R = PGR, P = PGP ou PE, S = PGS.

La mémoire-cache MC présentée à la figure 11 a par exemple une capacité de 16 KØ. Elle est organisée en 16 modules de mémoire vive rapide de 1 KØ $MC_0$, ... $MC_{15}$, chacun accessible sur un front de 4 octets : le bus adresse de la mémoire-cache MC (noté adr_MC) comporte une partie adresse de bloc adr_bloc et une partie adresse de mot dans le bloc adr_mot. Le bus adresse adr_MC est constitué de 14 fils, permettant d'adresser les 16 KØ de la mémoire-cache MC. La partie adr_bloc comporte 8 fils permettant d'adresser les 256 emplacements de blocs de la mémoire-cache MC, et la partie adr_mot 6 fils permettant d'adresser un mot dans le bloc dont la taille est dans l'exemple de 64 octets.

La partie adresse adr_ bloc est reliée à l'entrée adresse de chacun des modules mémoires $MC_0$... $MC_{15}$. La partie adresse mot adr_mot est reliée à l'entrée de deux décodeurs DEC0 et DEC1 (seuls les 4 bits de forts poids du bus adresse adr_mot sont utilisés : l'adresse est une adresse octet et le cache a une unité d'accès qui est un mot de 4 octets). Le signal de lecture $\overline{r}$_MC est délivré à chacune des entrées de lecture des modules mémoires $MC_0$... $MC_{15}$ et à l'une des entrées d'une porte logique OU1. L'autre entrée de cette porte logique OU1 reçoit le signal $\overline{bloc}$ inversé. Le signal d'écriture $\overline{w}$_MC est délivré à l'une des deux entrées de portes logiques OU2 et OU3. La porte logique OU2 reçoit sur son autre entrée le signal $\overline{bloc}$ inversé. La porte logique OU3 reçoit sur son autre entrée le signal $\overline{bloc}$. La sortie de la porte logique OU1 est reliée à l'entrée de validation $\overline{en1}$ du décodeur DEC1, et la sortie de rang i de ce décodeur DEC1 active un "buffer" de validation BVL de rang i. La sortie de la porte logique OU2 est reliée à l'entrée de validation $\overline{en0}$ du décodeur DEC0 et à des "buffers" de validation BVE. La sortie de la porte logique OU3 est reliée à des portes logiques $ET1_0$... $ET1_{15}$, qui reçoivent sur leur autre entreé la sortie de rang correspondant du décodeur DEC0. La sortie i de chaque porte logique ET1$_0$... ET1$_{15}$ est reliée à l'entrée d'écriture $\overline{w_0}$... $\overline{w_{15}}$ de chaque module mémoire MC$_0$... MC$_{15}$. Un bus de donnée relie chaque module mémoire MC$_0$... MC$_{15}$ à l'un des buffers de validation BVL et à l'un des buffers de validation BVE. La sortie des buffers RVL et l'entrée des buffers RVE reçoivent en parallèle un bus de donnée datamot_MC (relié au processeur de gestion des requêtes PGU).

Le fonctionnement de l'exemple de la mémoire-cache ci-dessus décrit est le suivant :

### Cas 1

La demande provient du processeur de gestion du lien série PGS. Ce cas est signalé par la présence d'un état logique zéro sur le signal bloc.

En lecture mémoire-cache, le processeur de gestion du lien série PGS présente sur le bus adresse adr_MC l'adresse de l'emplacement de bloc à lire (dans ce cas, seule la partie adr_bloc du bus adr_MC est utilisée) et active le signal de lecture $\overline{r}$_MC. A l'issue des temps d'accès, le bloc est disponible sur le bus databloc_MC.

En écriture mémoire-cache, le processeur de gestion du lien série présente sur le bus adresse adr_MC l'adresse de l'emplacement du bloc à écrire, sur le bus de donnée databloc_MC la donnée à y inscrire, et active la ligne $\overline{w}$_MC. L'état zéro du signal bloc aiguille le signal $\overline{w}$_MC vers les entrées de commande d'écriture des modules de la mémoire-cache MC$_0$... MC$_{15}$, via les portes logiques OU3 et ET1$_i$. L'information présente sur le bus de donnée databloc_MC est inscrite en mémoire-cache à l'issue du temps d'écriture.

### Cas 2

La demande provient du processeur de gestion de requête PGU du processeur de traitement CPU. Ce cas est signalé par la présence d'un état logique un sur le signal bloc.

En lecture mémoire-cache, le processeur de gestion PGU présente sur le bus adr_MC l'adresse du mot demandé, et active le signal de lecture $\overline{r}$_MC. Le bloc correspondant à la partie adr_bloc est lu en mémoire-cache, et le mot demandé est aiguillé, via l'un des buffers de validation BVL, vers le bus de donnée datamot_MC. Le buffer de validation BVL concerné est activé par la sortie du décodeur DEC1 correspondant à l'adresse mot adr_mot demandée.

En écriture mémoire-cache, le processeur de gestion PGU présente sur le bus adr_MC l'adresse du mot à écrire, sur le bus de données datamot_MC la donnée à écrire, et active le signal d'écriture $\overline{w}$_MC. La donnée présente sur le bus datamot_MC est diffusée sur chaque module mémoire-cache, via les buffers BVE validés par le signal d'écriture. Le signal d'écriture $\overline{w}$_MC est ensuite présenté au seul module mémoire concerné. Il est délivré à la sortie du décodeur DEC0 correspondant à l'adresse adr_mot concerné.

Dans le mode de réalisation ci-dessus décrit, les problèmes d'accès en octet et double octet, et d'accès en double octet et mot à cheval sur deux modules mémoires sont résolus de la même façon que dans les systèmes informatiques traditionnels et ne sont pas décrits ici.

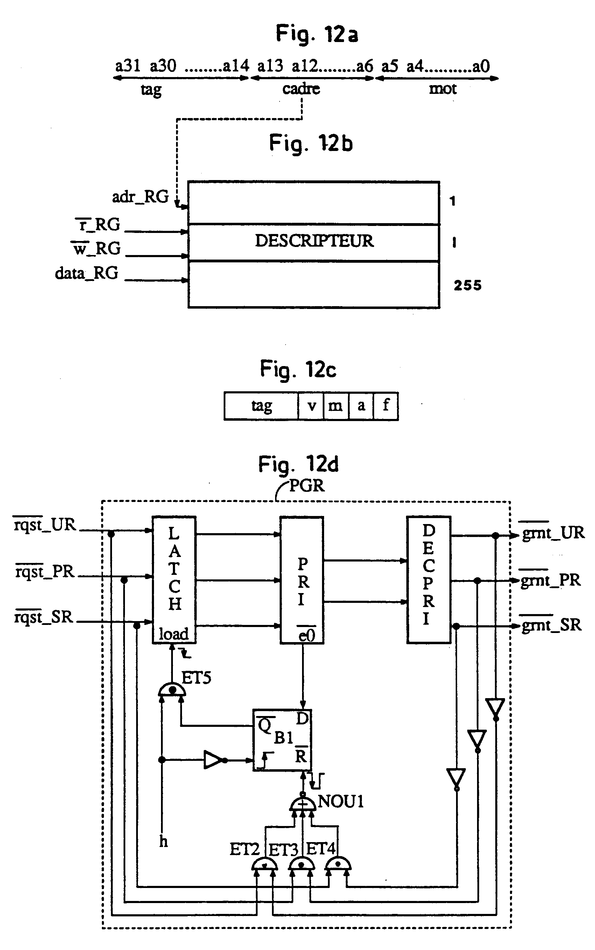

Les figures 12a, 12b, 12c, 12d présentent, à titre d'exemple, les caractéristiques d'un répertoire de gestion du cache RG et d'un processeur de gestion associé PGR. La figure 12a illustre la structure logique de l'adresse adr_RG dans l'hypothèse d'un espace d'adressage sur 32 bits et avec les caractéristiques de la mémoire-cache décrite précédemment. Le champ -tag-, composante de l'adresse bloc, est codé sur 18 bits. Le champ -cadre- est codé sur 8 bits et permet d'adresser les 256 emplacements de bloc de la mémoire-cache MC. Les 6 derniers bits définissent l'adresse mot dans le bloc, en unité octet.

La figure 12b présente la structure du répertoire de gestion du cache RG, qui est une simple mémoire rapide vive de 256 mots de 22 bits. Chaque mot d'adresse i contient le descripteur du bloc inscrit dans l'emplacement i de la mémoire-cache.

La figure 12c schématise la structure du descripteur qui comporte :
- un champ tag de 18 bits, définissant l'adresse du bloc dans l'emplacement ou cadre de bloc courant,
- le bit de validation v,
- le bit de modification m,
- le bit d'attente de fin de transfert a,
- le bit d'attente de purge f.

La figure 12d fournit la structure du processeur PGR, qui n'est autre qu'un arbitre classique avec priorité fixe.

Cet arbitre comprend un registre LATCH, dont trois entrées reçoivent respectivement des signaux $\overline{rqst}$_UR, $\overline{rqst}$_PR, $\overline{rqst}$_SR, également délivrés respectivement vers des portes logiques ET2, ET3, ET4. Les sorties correspondantes du registre LATCH sont reliées aux entrées d'un encodeur de priorité PRI, dont les sorties sont reliées aux entrées d'un décodeur DECPRI. Les sorties de rang correspondant à ceux du registre LATCH sont reliées aux signaux $\overline{grnt}$_UR, $\overline{grnt}$_PR, $\overline{grnt}$_SR ainsi que, de façon inversée, respectivement aux entrées des portes logiques ET2, ET3, ET4. Les sorties des portes logiques ET2, ET3, ET4 sont reliées aux entrées de la porte logique NOU1. La sortie de la porte logique NOU1 est reliée à une bascule B1, qui reçoit sur son entrée D la sortie $\overline{e0}$ de l'encodeur de priorité PRI. L'ensemble du dispositif est synchronisé par une horloge générale qui délivre un signal h à l'une des entrées clk d'une porte logique ET5 et, de façon inversée, sur l'entrée horloge de la bascule B1. La sortie $\overline{Q}$ de la bascule B1 est reliée à l'autre entrée de la porte logique ET5. La sortie de la porte logique ET5 est reliée à l'entrée load du registre LATCH.

Le fonctionnement de cet arbitre est le suivant : en l'absence de toute requête sur les lignes $\overline{rqst}$, la bascule B1 mémorise en permanence l'état de la ligne $\overline{e0}$, inactive, et valide ainsi à travers la porte logique ET5 le chargement du registre LATCH.

L'arrivée d'un signal $\overline{rqst}$ provoque le verrouillage de l'horloge et l'activation du signal $\overline{grnt}$ associé au signal $\overline{rqst}$, jusqu'à désactivation de ce dernier : l'arbitre est figé dans son état pendant toute la durée de la transaction en cours.

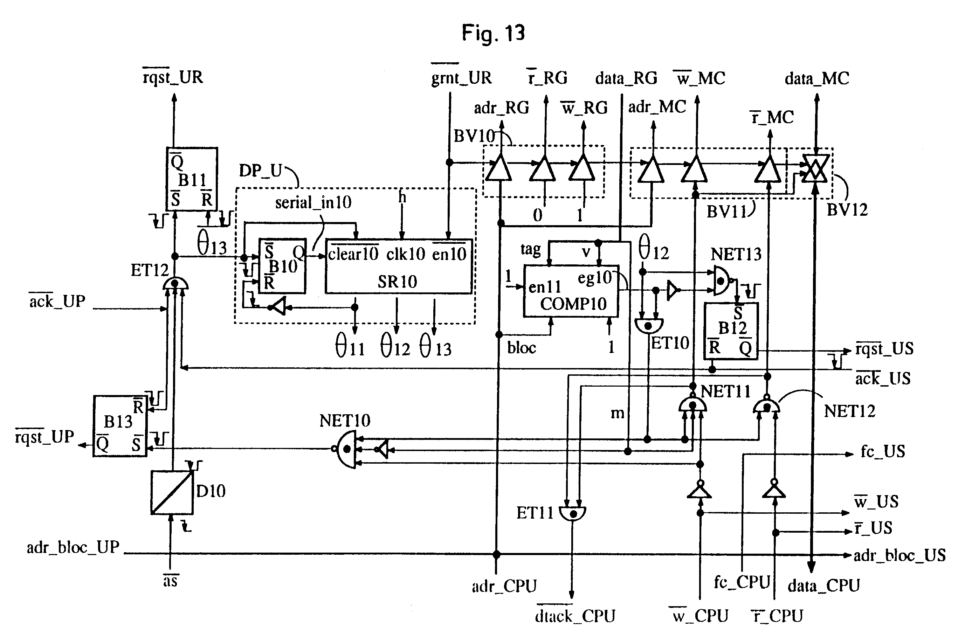

Le processeur de gestion des requêtes PGU, représenté à la figure 13, constitue une interface entre le processeur de traitement CPU et :

- d'une part, les divers processeurs avec lesquels il doit échanger des informations : processeur de gestion parallèle PGP, processeur de gestion série PGS, processeur de gestion du répertoire du cache PGR,
- d'autre part, le répertoire de gestion de la mémoire-cache RG et la mémoire-cache MC.

Le processeur de traitement CPU déclenche l'activité du processeur de gestion des requêtes PGU en activant le signal $\overline{as}$ ("address strobe"). Ce signal valide le bus adresse adr__CPU, les signaux de lecture $\overline{r}$__CPU et d'écriture $\overline{w}$__CPU ainsi que les lignes fonction fc__CPU du processeur de traitement CPU. Le processeur de traitement CPU se met alors en attente jusqu'à acquittement de la requête par le signal $\overline{dtack}$__CPU.

Le signal $\overline{as}$ est relié à l'entrée d'un circuit différenciateur D10. La sortie de ce circuit est connectée à l'une des trois entrées d'une porte logique ET12, les deux autres entrées recevant respectivement des signaux $\overline{ack}$__US et $\overline{ack}$__UP. Ce dernier signal est également délivré à l'entrée $\overline{R}$ d'une bascule B13. L'entrée $\overline{S}$ de la bascule B13 reçoit la sortie d'une porte logique NET10. La sortie de la porte logique ET12 est reliée à l'entrée $\overline{S}$ d'une bascule B11, à l'entrée $\overline{S}$ de la bascule B10 et à l'entrée $\overline{clear10}$ d'un registre à décalages SR10. La sortie $\overline{Q}$ de la bascule B11 fournit le signal $\overline{rqst}$__UR. La bascule B11 reçoit sur son entrée $\overline{R}$ la phase $\theta13$ inversée et la bascule B10 la phase $\theta11$ inversée. La sortie Q de la bascule B10 est reliée à l'entrée série sérial__in10 du registre SR10. Le registre à décalage $\overline{SR10}$ reçoit sur son entrée clk10 le signal horloge -h- et sur son entrée de validation en10 le signal grnt__UR.

L'activation du signal $\overline{as}$ déclenche le fonctionnement du circuit de différenciation D10. L'impulsion produite par ce circuit traverse la porte logique ET12, met à l'état logique un les bascules B10 et B11 par leur entrée $\overline{S}$, et effectue également la remise à zéro du registre à décalage SR10 par son entrée $\overline{clear10}$.

La bascule B10 et le registre à décalage SR10 constituent le sous-ensemble logique "distributeur de phases" DP__U. L'activation de ce distributeur de phases est déclenchée par la mise à un de la bascule B10 et la remise à zéro du registre à décalage SR10. Si le registre à décalage est validé par la présence d'un niveau zéro sur son entrée $\overline{en10}$, alors la prochaine impulsion d'horloge h sur l'entrée clk du registre à décalage produit le décalage d'un pas dudit registre.

L'état logique un de la bascule B10 est répercuté sur la sortie $\theta11$ du registre à décalage SR10 par son entrée série serialin10. La sortie $\theta11$, appelée phase $\theta11$, inversée, remet la bascule B10 à zéro par son entrée $\overline{R}$. Ainsi, un bit unique est introduit dans le registre à décalages SR10 à chaque activation du distributeur de phases DP__U. A chaque impulsion d'horloge h, ce bit va se décaler dans le registre à décalage SR10 et produire les phases consécutives disjointes $\theta11, \theta12, \theta13$.

La mise à l'état logique un de la bascule B11 provoque l'activation du signal $\overline{rqst}$__UR. Ce signal est émis à destination du processeur de gestion du répertoire PGR. Ce dernier, dès que possible, va accorder l'accès au répertoire de gestion RG et à la mémoire-cache MC en activant le signal $\overline{grnt}$__UR, qui va valider l'ensemble des buffers de passage BV10, BV11 et BV12 situés respectivement sur les bus du répertoire de gestion et sur les bus de la mémoire-cache. Ce signal $\overline{grnt}$__UR valide également le distributeur de phases qui va donc produire séquentiellement les phases $\theta11, \theta12, \theta13$.

La phase $\theta11$ correspond à une temporisation permettant de lire le descripteur du bloc demandé par le processeur de traitement CPU dans le répertoire de gestion RG, adressé par le champ cadre de l'adresse adr__CPU et relié au bus adr__RG à travers des buffers de passage BV10. Le signal $\overline{r}$__RG est toujours actif à l'entrée d'un buffer BV10, le signal w__RG toujours inactif à l'entrée d'un buffer BV10. A l'issue de la temporisation, le descripteur est retourné au processeur PGU via le bus data__RG. La partie tag de ce descripteur et le bit de validation v sont délivrés à l'une des entrées de comparaison d'un comparateur COMP10, l'autre entrée étant reliée à la partie tag de l'adresse adr__CPU. Le bit en regard du bit de validation v est toujours à un. Le comparateur COMP10 est validé en permanence par la présence d'un niveau un sur son entrée en11.

Temps d'accès au répertoire de gestion RG et fréquence d'horloge h sont en rapport tel, qu'à la fin de la phase θ11, la sortie eg10 du comparateur COMP10 est positionnée et fournit l'information "le bloc demandé est présent dans la mémoire-cache ou absent de la mémoire-cache".

Si le bloc demandé est présent dans la mémoire-cache MC (eg10 = 1) alors le signal eg10, délivré à l'une des deux entrées de la porte logique ET10, fournit un signal calibré par la phase θ12, présente sur l'autre entrée de la porte logique ET10.

Ce signal calibré présent sur la sortie de la porte logique ET10, est relié aux entrées des portes logiques NET10, NET11, NET12.

La porte logique NET10 reçoit sur ses entrées, outre la sortie de la porte logique ET10, le bit inversé d'état m̄ issu du descripteur, et le signal inversé de demande d'écriture w̄__CPU.

L'activation de la porte logique NET10 correspond à l'état "demande d'écriture d'un mot dans un bloc présent dans le cache et qui n'a pas encore été modifié (m = 0)". La sortie de la porte logique NET10 est reliée à l'entrée S̄ d'une bascule B13. L'activation de la porte logique NET10 met la bascule B13 dans l'état logique un, ce qui déclenche une requête d'écriture informative par la ligne rqst__UP au processeur de gestion du lien parallèle PGP. L'adresse du bloc concerné est fournie par les lignes adr__bloc__UP, dérivée des lignes adr__CPU.

Le processeur de gestion des requêtes PGU a terminé la première partie de sa tâche : le répertoire de gestion RG et la mémoire-cache sont libérés par désactivation du signal rqst__UR, conséquence de l'arrivée de la phase θ13 inversée sur l'entrée R̄ de la bascule B11.

Le mécanisme de l'écriture informative est décrit au paragraphe "processeur de gestion du lien parallèle PGP", et a pour effet de mettre le bloc demandé dans l'état modifié (m = 1) ou invalide (v = 0). On notera que la libération du répertoire de gestion RG et de la mémoire-cache MC par le processeur de gestion des requêtes PGU est nécessaire afin que le processeur de gestion du lien parallèle PGP puisse y avoir accès. La fin de l'opération "écriture informative" est signalée au processeur de gestion des requêtes PGU par l'activation du signal ack__UP, qui a pour effet de remettre à zéro la bascule B13 et d'activer, à travers la porte logique ET12, la bascule B11 et le distributeur de phases : le cycle initialement lancé par le signal as se reproduit, mais la séquence conséquence de l'activation de le porte NET10 ne se reproduira pas une seconde fois dans ce cycle de requête.

La porte logique NET11 reçoit sur ses entrées, outre la sortie de la porte logique ET10, le bit inversé d'état m̄ issu du descripteur, et le signal inversé de demande d'écriture w̄__CPU.

L'activation de la porte NET11 correspond à l'état "demande d'écriture dans un bloc présent dans le cache et qui a déjà été modifié".

La sortie de la porte NET11 est reliée, à travers un des buffers BV11, au signal d'écriture w̄__MC de la mémoire-cache MC. Ce signal permet d'écrire dans la mémoire-cache, à l'adresse présente sur le bus adr__MC, relié au bus adr__CPU, via les buffers BV11, la donnée présente sur le bus data__MC, relié au bus data__CPU via les buffers bidirectionnels BV12. Le sens d'activation de ces buffers est fourni par le signal w̄__MC.

La sortie de la porte NET11 est également reliée à l'une des entrées de la porte logique ET11, qui renvoie ainsi le signal dtack__CPU au processeur de traitement CPU. L'opération d'écriture dans le cache se fait en parallèle avec l'activation du signal dtack__CPU, ce qui est conforme aux spécifications habituelles des processeurs de traitement.

L'opération se termine par la libération du répertoire de gestion RG et de la mémoire-cache MC par désactivation du signal rqst__UR, conséquence de l'arrivée de la phase θ13 inversée sur la bascule B11.

La porte logique NET12 reçoit sur ses entrées, outre la sortie de la porte logique ET10, le signal inversé de demande de lecture r̄__CPU. L'activation de la porte logique NET12 correspond à l'état "demande de lecture d'un mot dans un bloc présent dans le cache".

La suite des opérations est identique à l'opération précédente, à le seule différence du signal activé (r̄__MC plutôt que w̄__MC) associé au sens de transit des données sur les bus data__CPU et data__MC.

Si le bloc demandé est absent de la mémoire-cache (eg10 = 0), alors le signal eg10, inversé, relié à l'une des deux entrées de la porte logique NET13, fournit un signal calibré par le phase θ12, présente sur l'autre entrée de la porte logique NET13. La sortie de la porte logique NET13 est reliée à l'entrée S̄ de la bascule B12. Ce signal calibré force le bascule B12 à un, ce qui a pour effet d'émettre une requête de service rqst__US vers le processeur de gestion du lien série PGS. Ce processeur reçoit également l'adresse du bloc à requérir sur les lignes adr__bloc__US et la nature de la requête sur les lignes w̄__US, r̄__US et fc__US.

Le processeur de gestion des requêtes PGU a terminé la première partie de sa tâche : le répertoire de gestion RG et la mémoire-cache MC sont libérés par désactivation de la ligne rqst__UR, conséquence de l'arrivée de la phase θ13 inversée sur le bascule B11.

Le mécanisme de mise à jour du cache est décrit au paragraphe "processeur de gestion de la liaison-série PGS".

On notera que la libération du répertoire de gestion RG et de la mémoire-cache MC est nécessaire pour que le processeur de gestion de le liaison série PGS puisse y avoir accès.

La mise à jour du cache est signalée au processeur de requête PGU par l'activation du signal $\overline{ack\_US}$. Ce signal est délivré à l'entrée $\overline{R}$ de la bascule B12 et à l'entrée de la porte ET12. Il a ainsi pour effet de remettre à zéro le bascule B12 et d'activer à travers le porte logique ET12, le bascule B11 et le distributeur de phases : le cycle initialement lancé par le signal $\overline{as}$ se reproduit, mais cette fois avec succès du fait de le présence du bloc dans la mémoire-cache.

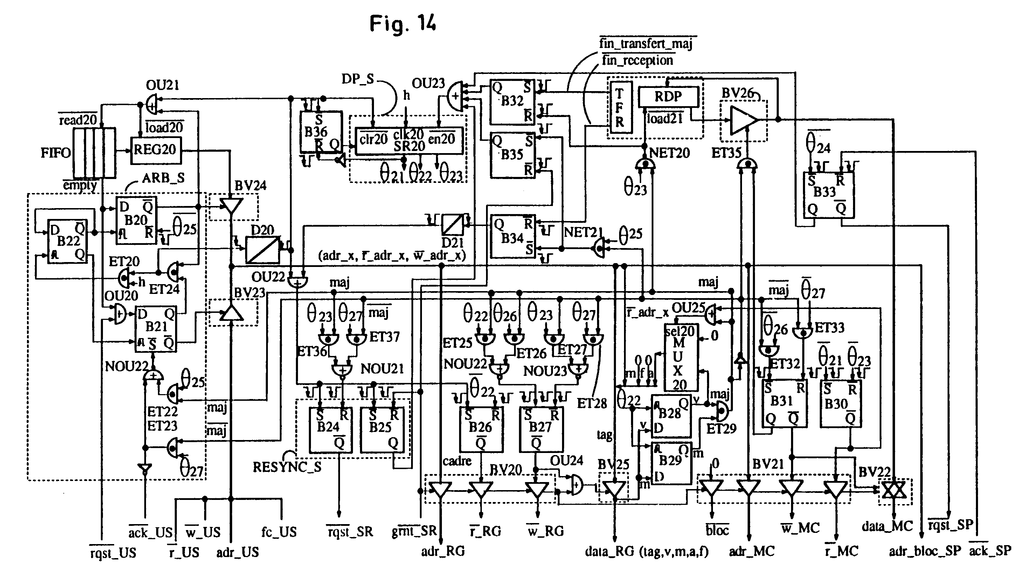

Le processeur de gestion série PGS représenté à titre d'exemple à la figure 14 est chargé de gérer la liaison série LS et à ce titre de réaliser les demandes de transfert de blocs entre mémoire centrale RAM et mémoire-cache MC et de réaliser les mises à jour correspondantes dans le répertoire de gestion RG. Il traite en priorité les demandes issues du processeur espion PE en attente dans une file d'attente FIFO. Il traite également les demandes issues du processeur de requêtes PGU.

Ce processeur de gestion de la liaison série PGS comprend une bascule B20 qui reçoit sur son entrée de donnée D le signal $\overline{empty}$ issu de la file d'attente FIFO et sur son entrée horloge la sortie $\overline{Q}$ d'une bascule B22. Une bascule B21 reçoit sur son entrée de donnée le sortie d'une porte logique OU20. Cette porte logique OU20 valide le signal $\overline{rqst\_US}$, reçu à l'une de ses deux entrées, l'autre entrée étant reliée au signal $\overline{empty}$. L'entrée horloge de la bascule B21 provient de le sortie Q de la bascule B22. La sortie $\overline{Q}$ de la bascule B22 est rebouclée sur son entrée de donnée D, ce qui le conditionne en diviseur par deux. L'entrée d'horloge de la bascule B22 est connectée à la sortie d'une porte logique ET20, laquelle reçoit sur l'une de ses entrées l'horloge générale de fonctionnement h et sur l'autre entrée un signal de validation. Ce signal de validation provient de le sortie d'une porte logique ET24, qui reçoit respectivement sur ses deux entrées les sorties $\overline{Q}$ et Q des bascules B20 et B21.

La bascule B20 reçoit sur son entrée $\overline{R}$ la phase $\theta25$, inversée, issue d'un distributeur de phases $\overline{DP\_S}$. La bascule B21 reçoit sur son entrée $\overline{S}$ le sortie d'une porte logique NOU20. Cette porte logique NOU20 reçoit sur ses deux entrées les sorties respectives de portes logiques ET22 et ET23. La porte logique ET22 reçoit sur ses entrées le phase $\theta25$ issue du distributeur de phases et le signal maj issu d'une porte logique ET29. La porte logique ET23 reçoit sur ses entrées

la phase $\theta27$ issue du distributeur de phases et le signal maj inversé.

L'ensemble des circuits B20, B21, B22, ET20, ET22, ET23, OU20, ET24, NOU20 constitue un arbitre à priorité fixe ARB_S. Son fonctionnement est le suivent : le bascule B22 fournit sur ses sorties $\overline{Q}$ et Q des signaux alternés de fréquence moitié de celle de l'horloge générale. Ces signaux valident alternativement les bascules B20 et B21. Si une requête de service est présente sur l'une des entrées des bascules B20 ou B21, alors ces signaux alternés mémorisent la demande dans la bascule correspondante (B20 pour le processeur espion PE, B21 pour le processeur de gestion de requête PGU) qui, en retour, verrouille le fonctionnement alterné. On notera que le signal $\overline{rqst\_US}$ en provenance du processeur de gestion de requêtes PGU est conditionné par le signal $\overline{empty}$ à travers la porte OU20 : ce signal n'est ainsi pris en compte que si le file d'attente FIFO est vide. La bascule B20 (respectivement B21) n'est remise à zéro que lorsque la transaction à effectuer est terminée.

L'échantillonnage d'une demande sur l'une ou l'autre des bascules B20 et B21 se traduit par un changement d'état de la sortie de la porte logique ET24. La sortie de la porte logique ET24 est également reliée à un circuit différenciateur D20 qui délivre une impulsion lors du changement d'état de la sortie de la porte logique ET24. La sortie du circuit différenciateur est reliée d'une part au distributeur de phases DP_S (entrée $\overline{S}$ d'une bascule B36 et $\overline{clr20}$ d'un registre à décalege SR20) du processeur de gestion de la liaison-série et d'autre part à l'une des deux entrées de la porte logique OU22. La sortie de le porte logique est reliée aux entrées $\overline{S}$ de deux bascules B24 et B25. La bascule B24 reçoit sur son entrée $\overline{R}$ la sortie d'une porte logique NOU21 et la bascule B25 le signal $\overline{grnt\_SR}$. La porte logique NOU21 reçoit sur ses deux entrées les sorties de portes logiques ET36 et ET37. Le porte logique E36 reçoit sur ses entrées le phase $\theta23$ issue du distributeur de phases et le signal maj, et le porte logique E37 la phase $\theta27$ issue du distributeur de phases et le signal maj inversé.

L'impulsion issue du circuit différenciateur D20 initialise ainsi le distributeur de phases et met à l'état logique un les bascules B24 et B25 à travers la porte logique OU22.

Le distributeur de phases DP_S est constitué du registre à décalages SR20 et de la bascule B36. Son fonctionnement est identique à celui décrit dans le paragraphe concernant le processeur de gestion de requêtes PGU.

La sortie $\overline{Q}$ de la bascule B24 est reliée au signal $\overline{rqst\_SR}$, à destination du processeur de gestion du répertoire PGR. Son activation déclenche une demande de service à ce processeur, qui répond par la ligne $\overline{grnt\_SR}$, reliée à l'entrée $\overline{R}$ de la bascule B25. La sortie Q de la bascule B25 est reliée à l'une des entrées d'une porte logique OU23. La sortie de la porte logique OU23 est reliée à l'entrée $\overline{en20}$ du registre à décalages SR20.

L'ensemble logique B24 et B25 constitue une logique de resynchronisation RESYNC_S entre unités asynchrones. Son fonctionnement est le suivant :

Une demande de service $\overline{rqst\_SR}$ vers le processeur de gestion du répertoire PGR se fait par activation des bascules B24 et B25 à travers la porte logique OU22, ce qui autorise deux origines d'activations. La logique propre au processeur de gestion du répertoire PGR assure une réponse $\overline{grnt\_SR}$ dans un temps indéterminé, qui remet à zéro la bascule B25. La bascule B24 maintient sa demande jusqu'à sa remise à zéro par activation de son entrée $\overline{R}$. En retour, le processeur de gestion du répertoire PGR désactive sa ligne $\overline{grnt\_SR}$ : la logique de resynchronisation est prête à fonctionner pour une prochaine demande de service. La sortie Q de la bascule B25 sert à bloquer le distributeur de phases par action sur son entrée $\overline{en20}$ via la porte logique OU23 : la remise à zéro de la bascule B25 libère le distributeur de phases qui fournira la première phase $\theta21$ lors de la prochaine transition active de l'horloge générale h, connectée à l'entrée clk20 du distributeur de phases.

La ligne $\overline{grnt\_SR}$ est également reliée aux buffers de validation BV20, BV25 et BV21, BV22 qui ouvrent g'accès respectivement eu répertoire de gestion RG et à la mémoire-cache MC.

Si la bascule B20 est active, alors la transaction en cours est une purge de bloc demandée par le processeur espion PE via la file d'attente FIFO. La sortie $\overline{Q}$ de le bascule B20 est reliée à des buffers de validation BV24. Ces buffers reçoivent sur leur entrée le sortie d'un registre REG20. La sortie $\overline{Q}$ de la bascule B20 est reliée à l'une des deux entrées d'une porte logique OU21, qui reçoit sur son autre entrée la sortie du circuit différenciateur D20. La sortie de la porte logique OU21 est reliée à l'entrée $\overline{load20}$ du registre REG20 et à l'entrée $\overline{read20}$ de la file d'attente FIFO.

Ainsi, l'activation de la bascule B20 provoque :
1. L'initialisation du distributeur de phases,
2. Une demande d'accès au répertoire de gestion RG et à la mémoire-cache MC,
3. Le chargement de l'élément en tête de la file d'attente FIFO dans le registre REG20 et l'avance de la file d'attente,
4. Le validaticn du buffer BV24 : le bus adr_X contient l'adresse du bloc à purger. La nature de l'opération (mise à jour) sera retrouvée à partir de la combinaison des bits v et m (signal maj).

Si la bascule B21 est active, alors la transaction en cours provient d'un défaut d'information dans la mémoire-cache MC. La sortie $\overline{Q}$ de la bascule B21 est reliée à des buffers de validation BV23. Ces buffers reçoivent sur leur entrée les informations en provenance du processeur de gestion de requête PGU.

Ainsi l'activation de la bascule B21 provoque :
1. L'initialisation du distributeur de phases,
2. Une demande d'accès au répertoire de gestion RG et à la mémoire-cache MC,
3. La validation des buffers BV23 : le bus adr_X contient l'adresse du bloc qui a provoqué le défaut d'information dans la mémoire-cache MC, et la nature de la requête : lecture ou écriture, données partagées ou non partagées (lignes fc_US).

Le champ "cadre" du bus adr_X est relié aux lignes d'adresses adr_RG du répertoire de gestion RG à travers des buffers de validation BV20. Les sorties $\overline{Q}$ de bascule B26 et B27 sont respectivement reliées aux lignes $\overline{r\_RG}$ et $\overline{w\_RG}$ du répertoire de gestion à travers les buffers de validation BV20. La bascule B26 reçoit sur son entrée $\overline{S}$ la sortie de la porte logique OU22 et sur son entrée $\overline{R}$ la phase $\theta22$ inversée issue du distributeur de phases. La bascule B27 reçoit sur son entrée $\overline{S}$ la sortie d'une porte logique NOU22 et sur son entrée $\overline{R}$ la sortie d'une porte logique NOU23. La porte logique NOU22 reçoit sur ses deux entrées les sorties respectives de portes logiques ET25 et ET26, elles-mêmes recevant sur leurs entrées, pour la porte ET25 le phase $\theta22$ et le signal maj et pour la porte ET26 le phase $\theta26$ et le signal maj. La porte logique NOU23 reçoit sur ses deux entrées les sorties respectives de portes logiques ET27 et ET28, elles-mêmes recevant sur leurs entrées, pour la porte ET27 la phase $\theta23$ et le signal maj inversé et pour la porte ET28 la phase $\theta27$ et le signal maj inversé.

Le champ tag du bus adr_X est relié au champ tag des lignes data_RG à travers des buffers de validation BV25. Ces derniers reçoivent sur leur entrée de validation la sortie d'une porte logique OU24 qui reçoit sur ses entrées le signal $\overline{grnt\_SR}$ et la sortie $\overline{Q}$ de la bascule B27.

Les entrées D de bascules B28 et B29 sont respectivement reliées aux lignes bit de validation v et bit de modification m du bus data_RG. Les entrées horloges de ces bascules B28 et B29 sont reliées à le phase $\theta22$ du distributeur de phases. La sortie Q de la bascule B28 et la sortie Q de la bascule B29 sont reliées aux deux entrées d'une porte logique ET29, qui fournit sur sa sortie le signal maj. Une porte logique OU25 reçoit sur ses entrées le signal maj et la sortie $\overline{Q}$ d'une bascule B30. La sortie de la porte logique OU25 est reliée à l'entrée de sélection sel20 d'un multiplexeur MUX20, qui reçoit sur ses deux entrées de données la sortie Q de la bascule B28 (bit v) et la constante 0, la constante zéro étant choisie lorsque l'entrée de sélection sel20 est à l'état logique un. La sortie du multiplexeur MUX20 est reliée à la ligne bit de validation v du bus adr__X. La ligne bit d'attente -a- du bus adr__X est forcée à l'état logique zéro. Le Dit de modification -m- est relié à la ligne de lecture r̄__adr__x du bus adr__X.

L'ensemble logique décrit ci-dessus constitue la logique d'accès et de mise à jour du répertoire de gestion RG. Son fonctionnement est le suivant : l'activation du signal grnt̄__SR, autorisant l'accès au répertoire de gestion et à la mémoire-cache, valide les buffers de validation BV20. La lecture du descripteur concerné est commandée du début de l'autorisation d'accès jusqu'à l'arrivée de la phase θ22, instant de mémorisation des bits -v- et -m- dans les bascules B28 et B29. L'état combiné de ces deux bits produit, à travers la porte logique ET29, le signal maj qui conditionne la suite des opérations.

1er cas : maj = 1. Ce cas se produit lorsque le bit de validation est égal à 1 et le bit de modification est égal à 1. Ce cas correspond soit à une demande de purge de bloc du processeur espion PE, soit à un défaut d'information constaté par le processeur de gestion de requêtes PGU sur un emplacement de bloc occupé et modifié : dans les deux cas, le bloc concerné doit être écrit en mémoire centrale RAM.

A cet effet, le champ -cadre- du bus adr__X est relié aux lignes adr__MC via les buffers de validation BV21. Les sorties Q̄ des bascules B30 et B31 sont respectivement reliées aux lignes r̄__MC et w̄__MC de la mémoire-cache MC, à travers les buffers de validation BV21. La ligne bloc est forcée à zéro via un des buffers de validation BV21. Les, lignes de données data__MC de la mémoire-cache sont reliées, via les buffers de validation bi-directionnels BV22, aux entrées du registre à décalage RDP et aux sorties des buffers de validation BV26, qui reçoivent sur leurs entrées les lignes de sortie du registre à décalage RDP. Les buffers BV22 sont validés par le ligne grnt̄__SR, et leur sens de validation commandé par la sortie Q̄ de la bascule B31. La bascule B30 reçoit sur ses entrées S̄ et R̄ respectivement les phases θ21 et θ23, inversées, en provenance du distributeur de phases. La bascule B31 reçoit sur ses entrées S̄ et R̄ respectivement les sorties de portes logiques ET32 et ET33. La porte logique ET32 reçoit sur ses entrées la phase θ26 et le signal maj inversé, la porte logique ET33 la phase θ27 et le signal maj inversé. Une porte logique NET20 reçoit sur ses entrées la phase θ23 et le signal maj. La sortie d'une porte logique ET35 commande les buffers de validation BV26, et reçoit sur ses deux entrées respectivement le signal maj inversé et la sortie Q de le bascule B31. La sortie de la porte logique NET20 est reliée au signal load2̄1 du registre à décalage RDP et à l'entrée S̄ d'une bascule B32. L'entrée R̄ de cette bascule B32 reçoit le signal fin__transfert__maj issu de la logique TFR associée au registre à décalage RDP. La sortie Q de la bascule B32 est reliée à l'une des entrées de la porte logique OU23.

La logique décrite ci-dessus permet de purger un bloc de la mémoire-cache. Son fonctionnement est le suivant :

En parallèle avec l'accès au répertoire de gestion RG, une lecture de la mémoire-cache MC est activée par la ligne r̄__MC, issue de la bascule B30, durant les phases θ21 et θ22. A l'issue de cette lecture, les données lues, représentant le bloc à décharger, sont présentes à l'entrée du registre à décalage RDM. L'activation du signal maj, dont l'état est connu en début de la phase θ22, provoque :

1. L'invalidation du bloc dans le répertoire de gestion : l'entrée sel20 du multiplexeur MUX20 étant à l'état logique un, la valeur zéro est forcée sur le bit de validation, le descripteur étant écrit dans le répertoire de gestion RG avec l'activation du signal w̄__RG, commandée par la bascule B27 durant le cycle θ22,

2. Le chargement du registre à décalage RDM et l'activation du transfert, lors du passage de la phase θ22 à la phase θ23,

3. La mise à l'état logique un de la bascule B32, qui va bloquer le distributeur de phases sur la phase θ23 jusqu'à la fin du transfert, signalée par le signal fin__transfert__maj issu de la logique TFR,

4. La libération du répertoire de gestion RG et de la mémoire-cache MC par remise à zéro de la bascule B24 sur la phase θ23.

Ainsi, l'accès au répertoire est libéré (donc accessible pour le processeur espion PE), le transfert de mise à jour est en cours, et le distributeur de phases bloqué sur θ23.

Dès que le transfert est terminé, le bloc est en attente dans le registre à décalage RDM et il faut activer le processeur de gestion du lien parallèle pour que l'écriture en mémoire centrale RAM soit effective.

A cet effet, la bascule B33 est reliée par sa sortie Q à le ligne de requête de service rqst__SP à destination du processeur de gestion du lien parallèle PGP. La sortie Q est reliée à l'une des entrées de la porte logique OU23, l'entrée S̄ à la phase θ24 inversée du distributeur de phases et l'entrée R̄ au signal ack__SP. Le bus adr__X est relié au bus adr__bloc__SP du processeur de gestion du lien parallèle PGP. Une des lignes du bus adr__bloc__SP reçoit le signal maj afin d'indiquer la nature de la requête : mise à jour.

Dès libération du distributeur de phases par le signal fin__transfert__maj, la prochaine transition active de l'horloge générale h provoque le passage de la phase $\theta23$ à la phase $\theta24$. La phase $\theta24$ provoque une requête de service au processeur de gestion du lien parallèle PGP (activation de la ligne rqst__SP) et le blocage du distributeur de phases jusqu'à l'acquittement de la requête par le signal ack__SP. A ce moment, l'écriture en mise à jour aura été effectivement réalisée par le processeur de gestion du lien parallèle PGP. Le distributeur de phases, sur la prochaine transition active de l'horloge h, va passer de la phase $\theta24$ à la phase $\theta25$.

La mise à jour de la mémoire centrale RAM est terminée : la bascule B20 est mise à zéro par activation de son entrée $\overline{R}$ par la phase $\theta25$ inversée. La bascule B21 est mise à un par activation de son entrée $\overline{S}$ par la phase $\theta25$, conditionnée par le signal maj au moyen de la porte logique ET22 via le porte logique NOU22. En cas de défaut d'information dans la mémoire-cache, la purge d'un bloc ne constitue que la première partie de le requête : la demande rqst__US est toujours présente, mais la libération de la bascule B21 va permettre de prendre en compte d'éventuelles demandes de mises à jour en attente dans la file d'attente FIFO. Dès que la file d'attente FIFO est vide (empty = 0), tout le cycle décrit précédemment se reproduit, avec cette fois le bit de validation à zéro. On se retrouve alors dans le cas suivant.

2ème cas : maj = 0. Ce cas se produit lorsque le bit de validation est égal à zéro (par suite, peut-être, d'une purge de bloc) ou lorsque le bit de validation est égal à un mais le bit de modification est égal à zéro : la copie à jour de ce bloc est déjà en mémoire centrale RAM.

Ainsi, la requête de service rqst__SR va entraîner en retour un accord d'accès au répertoire de gestion RG et à la mémoire-cache MC avec lecture du descripteur, mémorisation des bits m et v, génération du signal maj, réécriture du descripteur avec v = 0 (maj est à l'état logique zéro, la bascule B31 est à l'état logique zéro et sa sortie Q vaut donc un, ce qui impose un signal logique à l'état un sur l'entrée sel20 du multiplexeur MUX20 et donc force la constante 0) et libération de l'accès au répertoire de gestion RG et de la mémoire-cache MC. Ces opérations sont effectives dès activation de la phase $\theta23$.

Le bloc demandé doit maintenant être lu dans la mémoire centrale RAM. A cet effet, le signal maj inversé est reçu à l'une des entrées d'une porte logique NET21, qui reçoit sur son autre entrée la phase $\theta25$. La sortie de la porte logique NET21 est reliée aux entrées $\overline{S}$ des bascules B34 et B35. La bascule B34 reçoit sur son entrée $\overline{R}$ le signal

fin__réception en provenance de la logique de transfert TFR. Sa sortie Q est reliée au circuit différenciateur D21. Ce circuit est relié à le porte logique OU22. L'entrée $\overline{R}$ de la bascule B35 est reliée au signal grnt__SR et la sortie Q à l'une des entrées de la porte logique OU23.

La lecture d'un bloc en mémoire centrale RAM et son transfert dans la mémoire-cache sont réalisés de la façon suivante : la transition de la phase $\theta23$ à la phase $\theta24$ déclenche une requête de service au processeur de gestion du lien parallèle par activation de la ligne rqst__SP, issue de la bascule B33. Le type d'opération est cette fois une lecture (r__adr__X = 0) ou une écriture (w__adr__X = 0) et le bus adr__X fournit l'adresse du bloc demandé sur le bus adr__bloc__SP. Le distributeur de phases est bloqué jusqu'à arrivée du signal d'acquittement ack__SP : la demande de lecture ou d'écriture a été faite à la mémoire centrale RAM par le processeur de gestion du lien parallèle PGP, et le bloc a été en même temps validé et marqué "en attente" par ce même processeur. Le transfert est donc en cours, de la mémoire centrale RAM vers le registre à décalage RDP.

Le distributeur de phases, libéré, fournit ensuite la phase $\theta25$. Cette phase, par l'intermédiaire de la porte logique NET21 qui reçoit sur son autre entrée le signal maj inversé, va mettre à l'état logique un les bascules B34 et B35. La bascule B35 bloque le distributeur de phases. La bascule B34 est remise à zéro dès arrivée du bloc demandé dans le registre RDP, signalé par l'activation de la ligne fin__réception issue de la logique de transfert TFR, ce qui déclenche l'activation du circuit différenciateur D21 et une demande d'accès au répertoire de gestion RG et à la mémoire-cache MC, par activation de la ligne rqst__SR issue de la bascule B24.

L'accord d'accès, signalé par la ligne grnt__SR, libère le distributeur de phases par remise à zéro des bascules B25 et B35 et ouvre l'accès au répertoire de gestion RG et à la mémoire-cache MC. Le distributeur de phases, sur la prochaine transition active de l'horloge générale h, fournit la phase $\theta26$.

La bascule B27, reliée au signal $\overline{w}$__RG du répertoire de gestion, est active de $\theta26$ à $\theta27$, ce qui permet de réaliser la mise à jour du répertoire de gestion avec :
- champ tag du bus date__RG = champ tag du bus adr__X,
- bit de validité v = 1 (maj = 0 et la sortie Q de la bascule B31 est à zéro : le multiplexeur MUX20 laisse passer v, qui a été forcé à un par le processeur de gestion du lien parallèle PGP, ou déjà remis à zéro par le processeur espion PE),

- bit de modification m = état de la ligne $\overline{r\_adr\_X}$ du bus $adr\_X$ (demande d'écriture entraîne m = 1, demande de lecture m = 0),
- bit d'attente de transfert a = 0,
- bit f = 0.

La bascule B31 active le signal $\overline{w\_MC}$ de la mémoire-cache MC de $\theta26$ à $\theta27$, ce qui permet d'écrire le contenu du registre à décalage RDM (les buffers BV26 sont validés par le sortie $\overline{Q}$ de la bascule B31 et le signal maj inversé) dans le bon emplacement (champ -cadre- du bus $adr\_X$ relié eu bus $adr\_MC$) de la mémoire-cache, vie les buffers de validation BV22, commandés en sens de transfert par le bascule B31.

A l'arrivée de la phase $\theta27$, le mise à jour du répertoire de gestion et de le mémoire-cache est terminée. L'arrivée de la phase $\theta27$ provoque le remise à zéro de la bascule B24, ce qui libère l'accès au répertoire de gestion RG et à la mémoire-cache MC et l'activation de la sortie de la porte logique ET23, remettant à un la bascule B21 et activant le signal $\overline{ack\_US}$ à destination du processeur de gestion des requêtes PGU : la requête est terminée.

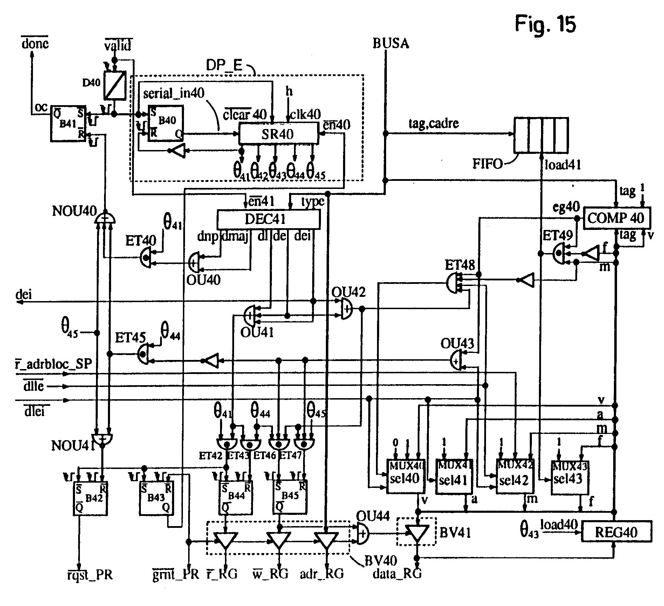

Par ailleurs, le processeur espion PE est chargé du maintien de la cohérence des données dans le mémoire-cache MC ; à titre d'exemple, on a représenté à la figure 15 une architecture de ce processeur. Celui-ci est déclenché à chaque transition active du signal $\overline{valid}$ du bus commun BUSA.

Si le signal $\overline{valid}$ est activé par un processeur de gestion du lien parallèle PGP autre que celui associé au processeur espion PE, alors la tâche de ce dernier est la suivante, fonction du type de requête :
- requête en lecture de bloc de données non partagées ou requête d'écriture de mise à jour du bloc : néant,
- requête en lecture de bloc de données partagées :
  - bloc absent : néant,
  - bloc présent et non modifié : néant,
  - bloc présent et modifié : demande de purge du bloc (que ce bloc soit présent ou en cours de transfert de la mémoire centrale RAM vers la mémoire-cache MC, état signalé par le bit -a- du descripteur),
- requête en écriture de bloc de données partagées :
  - bloc absent : néant,
  - bloc présent non modifié : invalider le bloc,
  - bloc présent modifié : demande de purge de bloc (même remarque que ci-dessus),
- requête d'écriture informative de bloc :
  - bloc absent : néant,

- bloc présent non modifié : invalider le bloc,
- bloc présent modifié : cas impossible,
- si une demande d'écriture informative est en attente sur ce même bloc, elle est transformée en requête en écriture de bloc, car ce bloc a été invalidé ; à cet effet, la requête en cours est annulée et un acquittement est renvoyé au processeur de gestion des requêtes PGU. Ce dernier consulte le répertoire RG et va trouver le bloc absent : une requête est émise vers le processeur de gestion PGS. Cette opération est prise en compte par le processeur de gestion parallèle PGP.

Si le signal $\overline{valid}$ est activé par le processeur de gestion du lien parallèle PGP associé eu processeur espion, alors la tâche de ce dernier est la suivante, fonction du type de requête (dite requête locale) :
- requête en lecture de bloc de données non partagées ou requête d'écriture de mise à jour de bloc : néant,
- requête en lecture de bloc de données partagées : marquer le bloc valide, en attente de transfert et non modifié (v = a = 1 et m = 0),
- requête en écriture de bloc de données partagées : marquer le bloc valide, en attente de transfert et modifié (v = m = a = 1),
- requête d'écriture informative de bloc : marquer le bloc "modifié" (m = 1).

Pour assurer les fonctions ci-dessus décrites, le processeur espion PE comprend un distributeur de phases DP\_E, constitué d'un registre à décalage SR40 et d'une bascule B40. La sortie d'un circuit différenciateur D40 est reliée à l'entrée $\overline{S}$ de la bascule B40 et à l'entrée $\overline{clear40}$ du registre SR40, ainsi qu'à l'entrée $\overline{S}$ d'une bascule B41. La sortie 0 de la bascule B40 est reliée à l'entrée serial\_in40 du registre SR40. L'entrée clk40 du registre SR40 reçoit le signal h d'horloge générale et l'entrée de validation $\overline{en40}$ est reliée à la sortie 0 de la bascule B43. La phase $\theta41$, inversée, issue du registre SR40 est reliée à l'entrée $\overline{R}$ de la bascule B40.

Le fonctionnement du distributeur de phases est conforme à la description faite dans le processeur de gestion des requêtes PGU.

Le signal $\overline{valid}$ du bus BUSA est relié à l'entrée du circuit différenciateur D40 et à l'entrée de validation $\overline{en41}$ d'un décodeur DEC41. La bascule B41 reçoit sur son entrée $\overline{R}$ la sortie de la porte logique NOU40. La sortie $\overline{Q}$ de la bascule B41, à collecteur ouvert, est reliée au signal $\overline{done}$ du bus BUSA.

Les signaux $\overline{valid}$ et $\overline{done}$ assurent la synchronisation du processeur espion PE avec les autres processeurs espions du système multiprocesseur :

la transition négative du signal valid déclenche le circuit différenciateur D40 qui produit une impulsion permettant d'activer le distributeur de phases et de mettre le signal $\overline{done}$ à l'état logique zéro par l'intermédiaire de la bascule B41. La fin du travail de l'espion est signalée par un changement d'état sur la sortie de la porte logique NOU40, qui produit la mise à l'état logique un du signal $\overline{done}$ par l'intermédiaire de la bascule B41.

Le travail de l'espion est fonction de la nature de le demande et, à cet effet, le champ type du bus BUSA est connecté à l'entrée du décodeur DEC41. Les sorties dnp et dmaj du décodeur DEC41 sont reliées aux entrées d'une porte logique OU40. Les sorties dl, de, dei du décodeur DEC41 sont reliées aux entrées d'une porte logique OU41, les sorties de et dei étant également reliées aux entrées d'une porte logique OU42. La sortie de la porte logique OU40 est reliée à l'une des entrées de la porte logique NOU40 par l'intermédiaire d'une porte logique ET40, qui reçoit sur son autre entrée le signal $\theta 41$. La sortie de la porte logique OU41 est reliée respectivement à l'une des entrées de portes logiques ET42, ET43, qui reçoivent sur leur autre entrée respectivement le signal de phase $\theta 41$ et $\theta 44$. Les sorties des portes logiques ET42 et ET43 sont reliées respectivement aux entrées $\overline{S}$ et $\overline{R}$ d'une bascule B44. La sortie de la porte logique ET42 est également reliée aux entrées $\overline{S}$ de bascules B42 et B43. Une porte logique NOU41 reçoit sur ses entrées le signal de phase $\theta 45$ et la sortie d'une porte logique ET45, qui reçoit sur ses deux entrées la phase $\theta 44$ et la sortie inversée d'une porte logique OU43. La sortie de le porte logique NOU41 est reliée à l'entrée $\overline{R}$ de la bascule B42. La sortie $\overline{Q}$ de la bascule B42 est reliée au signal $\overline{rqst\_PR}$ et le signal $\overline{grnt\_PR}$ est délivré à l'entrée $\overline{R}$ de la bascule B43, aux entrées de validation de buffers de passage BV40, et à l'une des entrées de la porte logique OU44. La porte logique OU44 reçoit sur son autre entrée la sortie $\overline{Q}$ d'une bascule B45, et sa sortie valide les buffers de passage BV41. La sortie de la porte logique ET45 est également reliée à l'une des entrées de la porte logique NOU40 qui reçoit sur une autre entrée le signal de phase $\theta 45$. La sortie de la porte logique OU42 est reliée aux entrées de portes logiques ET46 et ET47, qui reçoivent également sur leurs entrées la sortie d'une porte logique OU43 et respectivement les phases $\theta 44$ et $\theta 45$. La sortie $\overline{Q}$ de la bascule B44 délivre le signal $\overline{r\_RG}$ via un buffer BV40, la sortie $\overline{Q}$ de la bascule B45 délivre le signal $\overline{w\_RG}$ via un buffer BV40. Le champ cadre du bus commun BUSA est relié au bus adr\_RG via un buffer BV40. Le bus data\_RG est relié aux sorties des buffers de validation BV41 et à l'entrée du registre REG40, qui reçoit sur son entrée load40 le signal de phase $\theta 43$. La sortie du

registre REG40 est reliée, pour la partie tag, aux entrées des buffers BV41 et à l'une des entrées d'un comparateur COMP40. Le comparateur COMP40 reçoit sur son autre entrée la partie tag du bus BUSA. Le bit de validation v, issu du registre REG40, connecté au comparateur COMP40 a en regard la valeur constante 1. Les bits v, a, m, f en sortie du registre REG40 sont reliés respectivement à l'une des entrées des multiplexeurs MUX40, MUX41, MUX42, MUX43. Les sorties de ces multiplexeurs fournissent l'état de ces mêmes bits à l'entrée des buffers BV41. Le multiplexeur MUX40 reçoit sur ses autres entrées les constantes zéro et un, les entrées sel40 sont reliées à la sortie d'une porte logique ET48 et à un signal $\overline{dlle}$. Le multiplexeur MUX41 reçoit sur son autre entrée la constante un, sélectée lorsque son entrée sel41, recevant un signal dlle issu du processeur de gestion PGP, est à l'état logique un. Le multiplexeur MUX42 reçoit sur ses autres entrées le constante un et le signal $\overline{r\_adrbloc\_SR}$, ses entrées sel42 reçoivent les signaux $\overline{dlei}$ et $\overline{dlle}$ issus du processeur de gestion PGP. Le multiplexeur MUX43 reçoit sur son autre entrée la constante un sélectée lorsque son entrée sel43, reliée à la sortie d'une porte logique ET49, est à l'état logique un. La porte logique ET49 reçoit sur ses entrées la sortie eg40 du comparateur COMP40, le signal f inversé et le signal m. La porte logique ET48 reçoit sur ses entrées le sortie eg40, le signal m inversé, le signal dlei et le sortie de la porte logique OU42. La porte logique OU43 reçoit sur l'une de ses entrées le signal eg40, et sur son autre entrée le signal dlle. La sortie de la porte logique ET49 est également reliée à l'entrée load41 de la file d'attente FIFO, déjà décrite dans le processeur de gestion du lien série PGS. Les champs cadre et tag du bus BUSA sont reliés à l'entrée de la file d'attente FIFO. Les signaux $\overline{dlei}$, $\overline{dlle}$ et $\overline{r\_adrbloc\_SP}$ proviennent du processeur de gestion du lien parallèle PGP, qui reçoit par ailleurs le signal dei du décodeur DEC41.

Le fonctionnement de l'ensemble est le suivant : l'activation du signal $\overline{valid}$ initialise le distributeur de phases DP\_E et valide le décodeur DEC41 qui produit l'activation d'une sortie fonction de l'information type codant la nature de la demande en cours sur le bus commun BUSA. La sortie active peut être :

- dnp : requête en lecture de données non partagées. Le signal $\overline{done}$ est désactivé à l'apparition de la phase $\theta 41$ ;
- dmaj : requête d'écriture de mise à jour de bloc. Le signal $\overline{done}$ est désactivé à la phase $\theta 41$ ;
- dl : requête de lecture de bloc ;
- de : requête d'écriture de bloc ;
- dei : requête d'écriture informative.

Ces trois cas nécessitent un accès en lecture au répertoire RG, et les deux derniers une réécriture éventuelle du répertoire. A cet effet, une requête d'accès est émise vers le processeur de gestion du répertoire PGR par la bascule B42 (signal $\overline{rqst\_PR}$), la bascule B43 inhibant le distributeur de phases jusqu'à accord d'accès, signifié par le signal $\overline{grnt\_PR}$. La lecture s'effectue donc de $\theta41$ à $\theta44$ (bascule B44) et l'éventuelle écriture de $\theta44$ à $\theta45$ (bascule B45) avec mémorisation du descripteur dans le registre REG40 lors de la phase $\theta43$. Si le bloc absent de la mémoire-cache MC (eq40 = 0), alors le signal $\overline{done}$ est désactivé sur la phase $\theta44$. Si le bloc est présent dans le cache (eq40 = 1), alors :

- si m = 1, une demande de purge est activée (activation porte logique ET49) à condition que ce bloc ne soit pas déjà dans la file (f = 0) ; le seul bit modifié est f, mis à un, lors de la réécriture du descripteur,
- si m = 0, le bloc est invalidé par le multiplexeur MUX40 (activation de le porte logique ET48),
- si la demande est locale ($\overline{dlle}$ ou $\overline{dlei}$ actif), alors :
  1) en cas de lecture ou d'écriture, les bits v et a sont mis à 1 et m est mis à 0 (lecture) ou 1 (écriture) (état du signal $\overline{r\_adrbloc\_SP}$),
  2) en cas d'écriture informative, le bit m est forcé à 1.

Dans ces derniers cas qui demandent une réécriture dans le répertoire de gestion RG, le signal $\overline{done}$ est désactivé sur la phase $\theta45$.

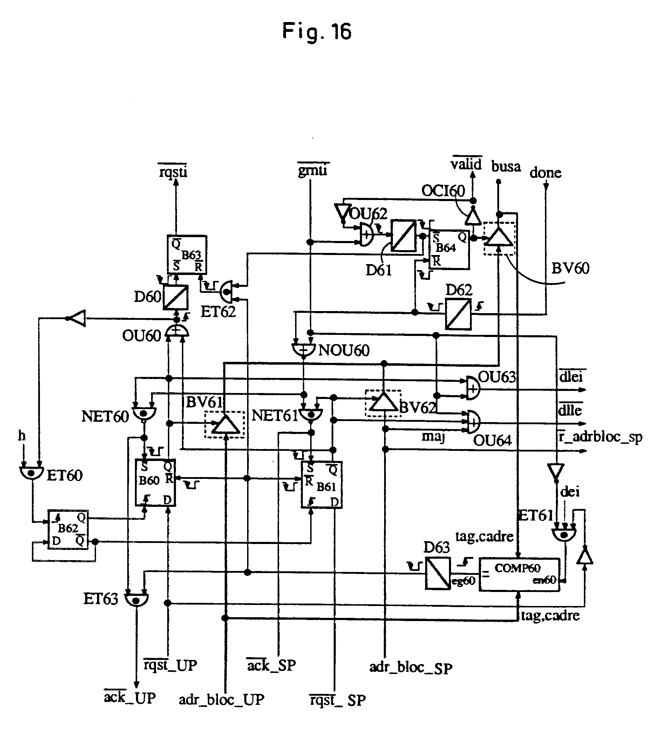

Le processeur de gestion du lien parallèle PGP, dont un exemple est représenté à la figure 16, est chargé de requérir le bus commun BUSA et de réaliser la transaction demandée, soit par le processeur de gestion des requêtes PGU, soit par le processeur de gestion de la liaison série PGS.

Une demande issue du processeur de gestion des requêtes PGU ne peut être qu'une requête d'écriture informative. Une demande issue du processeur de gestion de la liaison série PGS est, soit une demande de lecture ou d'écriture de bloc, soit une demande de mise à jour de bloc.

Le processeur de gestion du lien parallèle PGP comprend une bascule B60, reliée par son entrée de donnée D au signal $\overline{rqst\_UP}$. Une bascule B61 est reliée par son entrée de donnée D au signal $\overline{rqst\_SP}$. Les sorties Q et $\overline{Q}$ d'une bascule B62 sont reliées respectivement aux entrées horloges des bascules B60 et B61. La sortie $\overline{Q}$ de la bascule B62 est rebouclée sur son entrée de donnée. Les sorties $\overline{Q}$ des bascules B60 et B61 sont reliées aux entrées d'une porte logique OU60. Le sortie de le porte logique OU60 est reliée, d'une part, à un circuit différenciateur D60, d'autre part et de façon inversée, à une entrée d'une porte logique ET60, qui reçoit sur son autre entrée le signal d'horloge générale h. La sortie de le porte logique ET60 est reliée à l'entrée horloge de la bascule B62. La sortie du circuit différenciateur D60 est reliée à l'entrée $\overline{S}$ d'une bascule B63. La sortie $\overline{Q}$ de la bascule B63 délivre un signal $\overline{rqsti}$ à destination de l'arbitre AB, et son entrée $\overline{R}$ est reliée à la sortie d'une porte logique ET62. Le signal $\overline{grnti}$ issu de l'arbitre AB est relié à des portes logiques OU62 et NOU60. La porte logique OU62 reçoit sur son autre entrée le signal $\overline{valid}$ inversé, et se sortie est reliée à l'entrée d'un circuit différenciateur D61. La sortie de ce circuit D61 est reliée à l'une des entrées de la porte logique ET62 et à l'entrée $\overline{S}$ d'une bascule B64. La sortie Q de cette bascule B64 est reliée à l'entrée de validation de buffers de passage BV60 et de façon inversée, à travers un inverseur à collecteur ouvert I60, au signal $\overline{valid}$. Le signal $\overline{done}$ est relié à l'entrée d'un circuit différenciateur D62. La sortie de ce circuit D62 est reliée à l'entrée $\overline{R}$ de la bascule B64 et à l'une des entrées de le porte logique NOU60. La sortie de cette porte logique NOU60 est reliée à l'une des entrées de portes logiques NET60 et NET61, qui reçoivent sur leur autre entrée, respectivement les sorties $\overline{Q}$ des bascules B60 et B61. Les sorties $\overline{Q}$ des bascules B60 et B61 sont également reliées respectivement aux entrées de validation des buffers de passage BV61 et BV62. La sortie de la porte logique NET60 est reliée, d'une part, à l'entrée $\overline{S}$ de la bascule B60, d'autre part, à l'une des entrées d'une porte logique ET63, qui reçoit sur son autre entrée la sortie d'un circuit différenciateur D63. La sortie de la porte logique ET63 délivre le signal $\overline{acq\_UP}$ vers le processeur de gestion PGU. La sortie de la porte logique NET61 est reliée à l'entrée $\overline{S}$ de la bascule B61 et fournit le signal $\overline{ack\_SP}$. Le bus $adr\_bloc\_UP$ est relié à l'entrée des buffers de validation BV61 et à l'une des entrées d'un comparateur COMP60.

Le bus $adr\_bloc\_SP$ est relié à l'entrée des buffers de validation BV62. Les sorties des buffers BV61 et BV62 sont reliées ensemble et à l'entrée des buffers de validation BV60. La sortie des buffers BV60 est reliée au bus commun BUSA. Des portes logiques OU63 et OU64 reçoivent sur leurs entrées respectives les sorties $\overline{Q}$ des bascules B60 et B61, le signal logique $\overline{grnti}$ et le signal mej pour OU64. La sortie de le porte logique OU63 délivre le signal $\overline{dlei}$, et la sortie de le porte logique OU64 le signal $\overline{dlle}$. L'autre entrée du comparateur COMP60 reçoit les champs tag et cadre du bus commun BUSA. L'entrée en60 du comparateur COMP60 est reliée à la sortie de la porte logique ET61, qui reçoit sur ses entrées le signal $\overline{grnti}$ inversé, le signal dei et le signal $\overline{rqst\_UP}$ inversé. La sortie eg60 du comparateur COMP60 est reliée à l'entrée du circuit différenciateur D63. La sortie de ce circuit est également reliée aux entrées $\overline{R}$ des bascules B60 et B61 et à l'autre entrée de la porte logique ET62.

Le fonctionnement de l'ensemble est le suivant :

Les bascules B60, B61 et B62 associées aux portes logiques ET60 et OU60 constituent un arbitre local. Cet arbitre examine alternativement les requêtes $\overline{\text{rqst\_UP}}$ et $\overline{\text{rqst\_SP}}$, et les répercute vers l'arbitre AB du bus commun BUSA par le signal $\overline{\text{rqsti}}$. L'accord d'accès est fourni par la validation du signal $\overline{\text{grnti}}$ et le cycle bus a lieu dès désactivation du signal $\overline{\text{valid}}$ qui libère l'arbitre AB. L'activation du signal $\overline{\text{done}}$ libère l'arbitre local : la transaction est terminée.

Si la requête provient du processeur de gestion de la liaison série PGS, alors les signaux $\overline{\text{dlei}}$ et $\overline{\text{dlle}}$ indiquent au processeur espion PE associé la nature de le mise à jour des bits d'états du bloc à effectuer dans le répertoire RG.

Si la requête provient du processeur de gestion des requêtes PGU, alors en cas de détection d'écriture informative sur le même bloc (signal dei en provenance du processeur espion PE), une libération immédiate a lieu : le processeur de gestion des requêtes PGU, après consultation du répertoire (le bloc a été invalidé) aiquillera sa demande vers le processeur de gestion de la liaison série PGS.

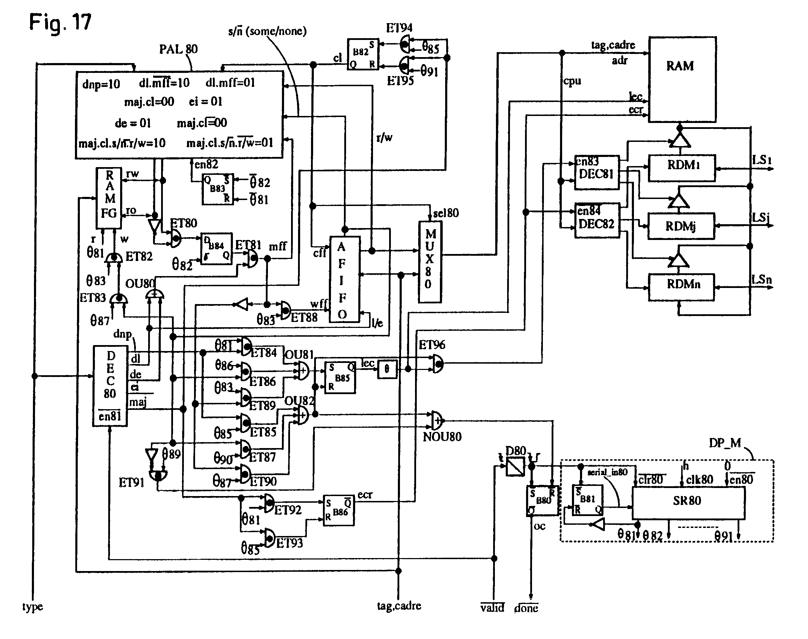

Le processeur de gestion mémoire PGM dont un exemple est représenté à la figure 17, est chargé d'assurer la lecture ou l'écriture de bloc en mémoire centrale RAM et de participer au maintien de la cohérence de l'information dans les diverses mémoires-caches MC du système multiprocesseur.

A cet effet, il comprend un circuit différenciateur D80 recevant sur son entrée un signal $\overline{\text{valid}}$ et relié par sa sortie aux entrées $\overline{S}$ de bascules B80 et B81 ainsi qu'à l'entrée $\overline{\text{clr\_80}}$ d'un registre à décalages SR80. Sur la sortie $\overline{Q}$ de la bascule B80, à collecteur ouvert, est délivré le signal $\overline{\text{done}}$. La sortie Q de la bascule B81 est reliée à l'entrée serial_in80 du registre SR80 ; cette bascule B81 est reliée par son entrée $\overline{R}$ à la sortie θ81, inversée, du registre SR80. Le registre SR80 reçoit sur son entrée clk80 le signal d'horloge générale h et son entrée de validation $\overline{\text{en80}}$ est toujours active. La bascule B81 et le registre à décalage SR80 constituent un distributeur de phases DP_M. Le signal $\overline{\text{valid}}$ est également délivré sur l'entrée de validation $\overline{\text{en81}}$ d'un décodeur DEC80. Ce décodeur est relié par son entrée de donnée à la partie type du bus commun BUSA, et fournit les signaux dnp, dl, de, ei et maj. Une mémoire vive RAMFG de largeur 2 bits (dénommés respectivement ro et rw) reçoit sur son bus adresse les champs tag et cadre du bus commun BUSA. Le bus de donnée de cette mémoire, constitué des bits ro et rw, est relié d'une part à une logique PAL80, d'autre part à une porte logique ET80, en direct pour rw, de façon inversée pour ro. La logique PAL80 est reliée au champ type et reçoit des signaux logiques cl, r/w, s/n, mff et en82 : le signal cl est issu d'une hascule B82, les signaux r/w et s/n d'une file d'attente associative AFIFO, le signal mff d'une porte logique ET81, et le signal en82 d'une bascule B83, qui reçoit sur ses entrées $\overline{S}$ et $\overline{R}$ respectivement des signaux θ82 et θ81 inversés du distributeur de phases DP_M. La logique PAL câble sur ses sorties ro-rw les équations logiques suivantes : $\overline{\text{dnp}}$ = 10 : $\overline{\text{dl.mff}}$ = 10 ; dl.mff = 01 ; de = 01 ; $\overline{\text{maj.cl}}$ = 00 ; ei = 01 ; maj.cl.$\overline{\text{s/n}}$.r/w = 10 ; maj.cl.s/$\overline{\text{n}}$.r/w = 01. La sortie de la porte logique ET80 est reliée à l'entrée D d'une bascule B84, qui reçoit sur son entrée horloge la phase θ82. La sortie Q de cette bascule est reliée à l'une des entrées de la porte logique ET81, qui reçoit sur son autre entrée la sortie de la porte logique OU80. Les deux entrées de cette porte logique OU80 sont reliées aux sorties de et dl du décodeur DEC80. L'entrée de lecture r de la mémoire RAMFG est reliée à la phase θ81, et l'entrée d'écriture w à la sortie d'une porte logique ET82. La porte logique ET82 reçoit sur ses entrées le signal θ83 et la sortie d'une porte logique ET83, dont les entrées sont reliées au signal s/$\overline{\text{n}}$ et à la phase θ87. La sortie dnp du décodeur DEC80 est reliée à des portes logiques ET84 et ET85, qui reçoivent sur leur autre entrée respectivement les phases θ81 et θ85. Le signal s/$\overline{\text{n}}$ est également délivré vers des portes logiques ET86 et ET87 qui reçoivent sur leur autre entrée respectivement les phases θ86 et θ90. La sortie mff de le porte logique ET81 est également reliée à une porte logique ET88, qui reçoit sur son autre entrée la phase θ83, et de façon inversée à des portes logiques ET89 et ET90 qui reçoivent sur leur autre entrée respectivement les phases θ83 et θ87. La sortie de la porte logique ET88 est reliée à l'entrée wff de la file AFIFO. Les sorties des portes logiques ET84, ET86, ET89 sont reliées aux entrées d'une porte logique OU81, dont la sortie est reliée à l'entrée S d'une bascule B85. Les sorties des portes logiques ET85, ET87, ET90 sont reliées aux entrées d'une porte logique OU82, dont la sortie est reliée à l'entrée R de la bascule B85. Le signal s/$\overline{\text{n}}$ est également relié, de façon inversée, à une porte logique ET91 qui reçoit sur son autre entrée la phase θ89. La sortie de la porte logique ET91 est reliée à l'entrée d'une porte logique NOU80 qui reçoit sur son autre entrée la sortie de la porte logique OU82. La sortie de la porte logique NOU80 est reliée à l'entrée $\overline{R}$ de le bascule B80. La sortie maj du décodeur DEC80 est reliée à l'entrée de portes logiques ET92, ET93, ET94, ET95, qui reçoivent sur leur autre entrée respectivement les phases θ81, θ85, θ85, θ91. Les sorties

des portes logiques ET92 et ET93 inversées sont reliées respectivement aux entrées S et R d'une bascule B86, et celles des portes logiques ET94 et ET95 aux entrées S et R d'une bascule B82. La sortie Q de la bascule B82 produit le signal logique cl également délivré à l'entrée cff de la file AFIFO et à l'entrée de commande sel80 d'un multiplexeur MUX80. La partie tag, cadre du bus commun BUSA est reliée à l'entrée de donnée de la file AFIFO et à l'une des entrées de données du multiplexeur MUX80. La sortie d1 du décodeur DEC80 est également reliée à l'une des entrées de données de le file AFIFO afin de produire le signal de lecture/écriture 1/e. La sortie de donnée de le file AFIFO est reliée à l'autre entrée du multiplexeur MUX80. La sortie du multiplexeur MUX80 est reliée au bus adresse de la mémoire centrale RAM pour la partie tag.cadre, et eux entrées de décodeurs DEC81 et DEC82 pour la partie champ cpu. La sortie $\overline{Q}$ de le bascule B86 est reliée à l'entrée d'écriture de la mémoire centrale RAM et à l'entrée $\overline{en84}$ du décodeur DEC82. La sortie Q de le bascule B85, légèrement retardée, est reliée à l'entrée de lecture de la mémoire centrale RAM et à l'une des entrées d'une porte logique ET96, qui reçoit sur son autre entrée le sortie de le porte logique OU82. La sortie de la porte logique ET96 est reliée à l'entrée en83 du décodeur DEC81. La sortie j du décodeur DEC81 est reliée à l'entrée de validation des buffers de passage du registre à décalage mémoire RDM$_j$ et le sortie j du décodeur DEC82 à l'entrée de chargement dudit registre à décalage mémoire RDM$_j$.

Le fonctionnement de cet ensemble est le suivant :

L'activation du signal $\overline{valid}$ provoque le déclenchement du distributeur de phases DP_M, et la validation du décodeur DEC80, qui va permettre de déterminer la nature de la requête. La phase $\theta 81$ est utilisée pour lire l'état des bits correspondant au bloc demandé dans la mémoire RAMFG, et la combinaison ro.rw est mémorisée dans la bascule B84. Une première écriture a lieu dans la mémoire RAMFG sur la phase $\theta 83$, qui permet de mettre à jour les bits d'états. Leur valeur est fournie par la logique PAL80 et permet d'obtenir les enchaînements suivants :

- en cas de requête de bloc de données non partagées (dnp) alors quel que soit l'état des bits ro.rw (rw est forcément à zéro), l'état 10 est forcé ("bloc diffusé en lecture") ;
- en cas de demande de bloc en lecture (dl) ou en écriture (de), si ro.rw = 01, alors la requête est mise en file d'attente sur la phase $\theta 83$ et l'état 01 est forcé (en fait, c'est l'état précédent), sinon l'état 10 est forcé en cas de lecture ("bloc diffusé en lecture") et l'état 01 est forcé en cas d'écriture ("bloc diffusé en écriture") ;
- en cas de demande de mise à jour (maj), l'état 00 est forcé ("bloc non diffusé"). Dans ces divers cas, un lecture ou une écriture en mémoire centrale RAM est opérée, vers ou à partir du registre à décalage mémoire RDM$_j$ identifié par le champ cpu du bus commun BUSA. Dans l'exemple choisi, la durée du cycle mémoire RAM est de 4 périodes de l'horloge générale h. En cas de lecture de données non partagées, le cycle s'effectue de $\theta 81$ à $\theta 85$, dans les autres cas de $\theta 83$ à $\theta 87$. L'écriture s'effectue de $\theta 81$ à $\theta 85$ ;
- en cas d'écriture informative, celle-ci ne provoque pas de mouvement de données, mais force les bits d'états à la valeur 01 (l'état de départ est dans ce cas forcément 10) ;
- en cas de demande de mise à jour, une consultation de la file d'attente AFIFO est systématiquement opérée. Cette consultation peut entraîner la lecture d'un bloc, dans le cas où une unité centrale CPU est en attente dans la file AFIFO de mise à jour de ce bloc.

La lecture s'effectue de $\theta 86$ à $\theta 90$ et l'état des bits est forcé à 10 (demande pour une lecture) ou 01 (demande pour une écriture). La fin de toute opération se traduit par la remise à zéro de la bascule B80 qui active le signal $\overline{done}$. Cette désactivation peut se produire sur les phases $\theta 85$, $\theta 87$ ou $\theta 91$ selon l'opération demandée, ou sur $\theta 89$ si la consultation de la file donne un résultat négatif.

La file d'attente associative n'est pas détaillée. Elle est constituée de façon classique d'une mémoire associative utilisée en file d'attente. Le nombre de mots de cette mémoire est égal au nombre d'unité centrale CPU du système multiprocesseur. Un "daisy-chain" interne identifie sur chaque phase $\theta 81$ le prochain mot candidat à une écriture, qui se produit le cas échéant sur la phase $\theta 83$ par le signal wff. Le signal cff déclenche une comparaison à partir de la phase $\theta 85$, les bascules de la mémoire de réponse ayant été remises à zéro sur la phase $\theta 84$. Le résultat de la comparaison est répercuté sur le signal s/n (some/none) et le contenu du mot concerné est disponible sur la sortie de données à partir de la phase $\theta 86$. Ce mot est ensuite invalidé sur la phase $\theta 90$.

Dans l'architecture ci-dessus décrite, les processeurs espions PE$_j$ sont sollicités à chaque transfert d'adresses sur le bus commun BUSA, avec consultation éventuelle de leur mémoire-cache MC$_j$. Cette consultation est la plupart du temps inutile (faible probabilité de présence de l'adresse du bloc correspondant au transfert, dans les mémoires-caches).

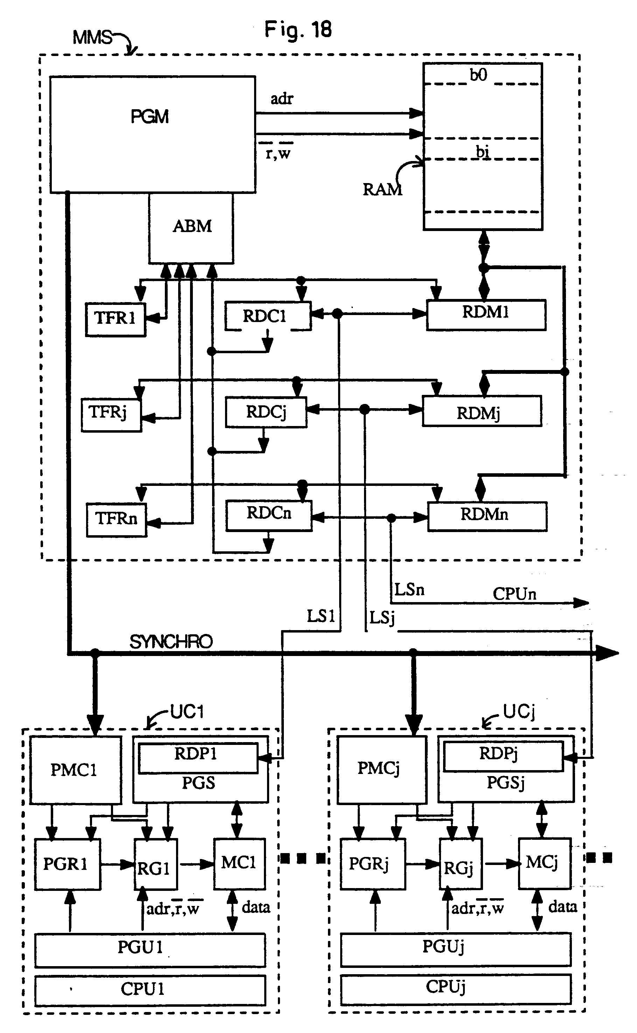

Il est à noter que le processeur de gestion mémoire PGM maintient des bits d'état des blocs et rend possible une gestion centralisée du maintien de cohérence. A cet effet, l'on peut rajouter à l'architecture ci-dessus décrite (figure 10) un bus parallèle de synchronisation fonctionnant selon le même algorithme que le bus de synchronisation SYNCHRO de la variante qui est décrite ci-après. Les processeurs-espions ne sont plus alors à proprement parler des espions (puisque connectés sur le bus de synchronisation et non sur le bus commun BUSA), et sont désignés par processeurs de maintien de cohérence (PMC$_j$ pour la variante de la figure 18). Ainsi, le processeur de gestion mémoire PGM demeure sollicité à chaque transfert sur le bus commun BUSA, mais les processeurs de maintien de cohérence sont sollicités par le processeur PGM uniquement lorsqu'ils sont concernés par le transfert.

La figure 18 présente une variante dans laquelle la cohérence est maintenue selon le principe ci-dessus évoqué. Cette variante reprend l'architecture générale de la figure 6, avec des adresses de blocs qui transitent par les liaisons séries LS$_j$. Ce système comprend un bus parallèle de synchronisation SYNCHRO, de même structure logique que le bus commun BUSA, mais piloté à la seule initiative du processeur de gestion mémoire PGM.

La structure de l'unité centrale UC$_j$ est conforme à celle présentée à la figure 10, avec quelques modifications :

- la structure de la mémoire-cache MC$_j$ reste la même, ainsi que la structure du répertoire de gestion RG$_j$,
- le processeur de gestion parallèle PGP$_j$ disparaît, puisque le bus commun BUSA n'existe plus et les fonctions qui lui étaient attribuées sont reportées sur le processeur de gestion de la liaison série PGS$_j$ ;
- le processeur espion PE$_j$ est remplacé par un processeur de maintien de cohérence PMC$_j$ qui s'occupe du maintien des bits d'états des blocs dans la mémoire-cache MC$_j$ en vue d'en assurer la cohérence et qui est activé à la seule initiative du processeur de gestion mémoire PGM$_j$ via le bus de synchronisation SYNCHRO ;
- le processeur de gestion des requêtes PGU ne connaît plus qu'un seul partenaire : le processeur de gestion de la liaison série PGS$_j$, sur lequel il reporte toutes ses requêtes ;
- le processeur de gestion de la liaison série PGS$_j$ est chargé du transfert des adresses et des données, conformément au principe décrit pour le système de la figure 6, chaque adresse étant préfixée par la nature de la requête ;
- les fonctionnalités du processeur de gestion mémoire PGM sont celles décrites en référence à la figure 17, son activation n'étant plus assurée par le signal $\overline{\text{valid}}$, qui disparaît (puisqu'auparavant associé au bus commun BUSA), mais par l'arbitre ABM décrit dans le système de la figure 6, lequel sérialise les demandes de service qui transitent par les liaisons séries. La mémoire RAMFG est également constituée d'un champ supplémentaire cpu associé aux bits d'états ro.rw.

Le fonctionnement général du mode de réalisation représenté à la figure 18 est le suivant :

Chaque requête du processeur de traitement CPU active le processeur de gestion des requêtes PGU$_j$ avec l'indication lecture ou écriture et code ou données. Ce processeur requiert un accès au répertoire de gestion RG$_j$ auprès du processeur de gestion du répertoie PGR$_j$. La consultation du répertoire conduit à l'un des cas suivants :

- le bloc est présent dans la mémoire-cache MC$_j$, avec l'état non modifié (m = 0) ; si la demande est une lecture, l'information demandée est extraite de la mémoire-cache MC$_j$ et fournie au processeur de traitement CPU$_j$. Si la demande est une écriture, alors une requête d'écriture informative ei est transmise au processeur de gestion de la liaison série PGS$_j$ ;
- le bloc est présent dans la mémoire-cache MC$_j$, avec l'état modifié (m = 1) ; la demande, lecture ou écriture, est satisfaite ;
- le bloc est absent de la mémoire-cache MC$_j$ ; une requête de bloc en lecture ou écriture est transmise au processeur de gestion de la liaison série PGS$_j$.

Ainsi, les requêtes faites au processeur de gestion de la liaison série peuvent être : une demande de lecture de données non partagées (code) : dnp, une demande de lecture de bloc : d1, une demande de lecture de bloc en vue d'y effectuer une écriture : de, une demande d'écriture informative : ei.

A ces divers états, il faut ajouter l'état mise à jour maj correspondant à la purge d'un bloc, soit à la demande du processeur de maintien de cohérence PMC$_j$, soit pour libérer un emplacement de bloc dans la mémoire-cache. Les adresses ainsi préfixées transitent par les liaisons séries LS$_j$, et conformément au principe énoncé lors de la description de l'architecture de la figure 6, sollicitent l'arbitre ABM lorsque :

- en cas de lecture bloc, l'adresse est transmise,
- en cas d'écriture bloc, l'adresse et la donnée sont transmises.

Ces requêtes sont traitées séquentiellement par le processeur de gestion mémoire PGM, de même structure générale que celle décrite à la figure 17. Leur traitement est le suivant :

1/ dnp : demande de données non partagées. Le bloc est transmis et prend l'état ro.rw = 10.

2/ dl : demande de lecture d'un bloc.

Si le bloc est dans l'état "non diffusé" (ro.rw = 00) ou "diffusé en lecture" (ro.rw = 10), il est transmis et prend ou garde l'état ro.rw = 01.

Si le bloc est dans l'état "diffusé en écriture", la demande est mise dans la file d'attente AFIFO. Le processeur de gestion mémoire PGM trouve alors dans le champ cpu de la mémoire RAMFG l'adresse de la mémoire-cache $MC_i$ qui contient la version à jour du bloc demandé. Une requête de purge est alors émise sur le bus de synchronisation SYNCHRO, à seule destination du processeur de maintien de cohérence $PMC_i$ associé à la mémoire-cache $MC_i$ concernée. Cette demande peut être qualifiée de commande adressée.

On notera que le processeur de maintien de cohérence $PMC_i$ n'a pas à consulter le répertoire de gestion $RG_i$ associé puisque le processeur de gestion mémoire PGM a connaissance du fait qu'il est seul possesseur de la copie à jour. Son rôle consiste simplement à prélever la requête et à la déposer dans la file $FIFO_i$ associée.

3/ de : demande de lecture d'un bloc en vue d'y faire une écriture.

Si le bloc est dans l'état "non diffusé" (ro.rw = 00), il est transmis et prend l'état "diffusé en écriture" (ro.rw = 01).

Si le bloc est dans l'état "diffusé en lecture" (ro.rw = 10), alors le processeur de gestion mémoire émet une commande universelle d'invalidation de bloc, puis transmet le bloc avec l'état "diffusé en écriture" (ro.rw = 01). La commande universelle provoque l'activation de tous les processeurs de maintien de cohérence $PMC_j$ qui exécutent strictement les mêmes opérations que celles décrites pour le système de la figure 10.

Si le bloc est dans l'état "diffusé en écriture", la demande est mise en file d'attente AFIFO. Comme précédemment, le processeur de gestion mémoire PGM émet une commande adressée au seul possesseur de la copie à jour.

4/ maj : demande d'écriture d'un bloc par suite d'une purge.

L'algorithme de fonctionnement est dans ce cas strictement le même que celui décrit en référence à la figure 17 pour le processeur PGM.

Il est à noter que le problème de l'acquittement de l'écriture trouve naturellement sa solution dans ce mode de réalisation par une commande adressée d'acquittement.

5/ ei : écriture informative.

Ce cas est traité directement sur le bus commun BUSA dans l'architecture présentée à la figure 10. Dans le mode de réalisation visé ici, et afin de garantir la synchronisation, cette opération est prise en charge par le processeur de gestion mémoire PGM.

Si le bloc est dans l'état "diffusé en lecture", alors une commande, à la fois universelle et adressée, est émise : adressée en ce sens que le processeur de maintien de cohérence $PMC_j$ concerné note l'acquittement de la demande d'écriture informative et passe le bloc concerné dans l'état "modifié" dans le répertoire de gestion $RG_j$ , universelle en ce sens que tous les autres processeurs $PMC_i$ doivent invalider ce bloc dans leur répertoire.

Le bloc dans l'état "diffusé en écriture" indique qu'une demande d'écriture informative a été traitée sur ce même bloc pendant le temps d'attente de traitement de la requête. Dans ce cas, la demande d'écriture informative est transformée en demande d'écriture de, et suit le même traitement que dans le cas correspondant de l'écriture.

Le bus parallèle de synchronisation SYNCHRO est chargé de diffuser des adresses de bloc préfixées par un numéro de processeur et un type de demande, soit environ 30 à 40 bits selon les caractéristiques du multiprocesseur. Ces informations sont de plus transmises de façon unidirectionnelle. Leur transfert peut alors avantageusement là encore se faire par une liaison série. La cadence de transfert est moins critique que pour les blocs, et des solutions simplifiées peuvent être envisagées, par exemple par le biais de circuits "TAXI" fabriqués par la Société "A.M.D.".

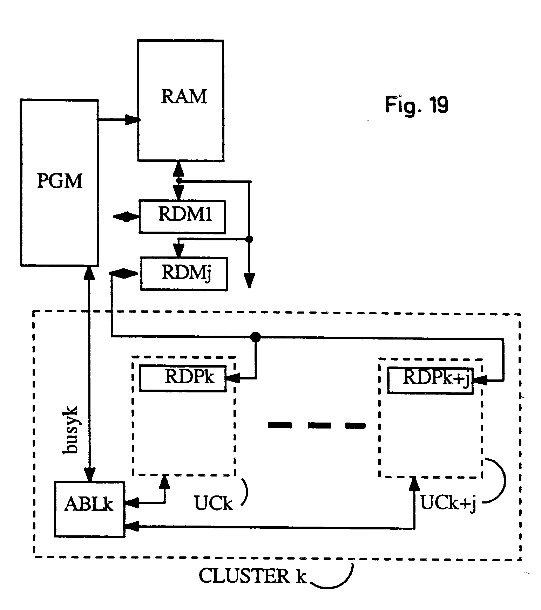

La figure 19 présente un schéma synoptique partiel d'une architecture conforme à l'invention, dans laquelle plusieurs unités centrales $UC_k$... sont réunies en grappe ("cluster") et partagent une même liaison série $LS_k$. Dans ce but, un arbitre local $ABL_k$ associé à la grappe est chargé d'arbitrer les conflits d'accès aux moyens de communication d'adresses de blocs, et partage avec le processeur mémoire PGM, aménagé à cet effet, un signal $busy_k$ indiquant en permanence l'état libre ou occupé de la liaison série $LS_k$. Des moyens de codage et de décodage d'un en-tête d'identification du processeur concerné à l'intérieur d'une grappe sont associés aux logiques d'émission et de réception des blocs de données.

Dans le cas où les moyens de communication d'adresses de blocs sont constitués par le bus commun BUSA, le fonctionnement est le suivant :

Si l'unité centrale $CPU_{k+j}$ désire faire un transfert de bloc dans le sens mémoire centrale RAM vers mémoire-cache $MC_{k+j}$ (cas dnp, dl, de) ou effectuer une écriture informative ei, alors elle requiert l'accès vers le bus commun BUSA à l'arbitre

local $ABL_k$, qui répercute la demande, son tour venu, à l'arbitre AB. L'accord d'accès au bus commun BUSA est renvoyé sur l'unité centrale $CPU_{k+j}$ et le transfert s'effectue de la façon décrite en référence à la figure 10. Tout bloc transmis dans le sens mémoire centrale RAM vers mémoire-cache $MC_{k+j}$ doit alors être identifié, car l'ordre des demandes n'est pas respecté du fait de la possibilité de mise en attente dans la file AFIFO du processeur de gestion mémoire PGM. Si l'unité centrale $CPU_{k+j}$ désire faire un transfert de bloc dans le sens mémoire-cache $MC_{k+j}$ vers la mémoire centrale RAM (cas maj), alors elle requiert tout d'abord de l'arbitre local $ABL_k$ l'accès à la liaison série $LS_k$. L'arbitre local $ABL_k$ et le processeur de gestion mémoire PGM sont susceptibles tous deux de s'attribuer la liaison série $LS_k$ : la contention est évitée en synchronisant la modifiction du signal $busy_k$ avec le signal valid (le processeur de gestion mémoire PGM ne peut lancer ou relancer un transfert qu'au cours d'une transaction memoire). L'accord d'occupation de la liaison série $LS_k$ conduit l'unité centrale $CPU_{k+j}$ à transférer son bloc d'information vers le registre à décalage mémoire $RDM_k$, puis à requérir de l'arbitre local $ABL_k$ l'accès au bus commun BUSA afin d'y effectuer la demande de mise à jour, qui s'effectue selon l'algorithme décrit en référence à la figure 10. L'écriture de mise à jour peut entraîner une libération de bloc dans la file d'attente AFIFO du processeur de gestion mémoire PGM et requérir un registre à décalages $RDM_j$ occupé. Dans ce cas, le transfert demandé est retardé et chaîné au transfert en cours.

Dans le cas où les moyens de communication d'adresses de blocs sont les liaisons séries elles-mêmes, le fonctionnement est alors identique au cas précédent pour ce qui est de la préemption de la liaison série, et identique pour l'algorithme général de fonctionnement à celui présenté en référence à la figure 17.

Par exemple, une demande de lecture de bloc issue de l'unité centrale $CPU_{k+j}$ nécessite tout d'abord un accord d'accès à la liaison série $LS_k$, accord donné par l'arbitre local $ABL_k$ en concertation avec le processeur de gestion mémoire PGM. L'accord d'accès entraîne le transfert de l'adresse du bloc demandé sur la liaison série $LS_k$, qui est aussitôt libérée : elle est disponible pour toute autre transaction si nécessaire. Une demande d'écriture de bloc suit le même protocole pour l'accès à la liaison série $LS_k$.

Dans les architectures décrites en référence aux figures 1 à 19, il existait autant de registres à décalages mémoires $RDM_j$ que d'unités centrales $CPU_j$ : une liaison série $LS_j$ était affectée de façon statique à un couple $(RDM_j, CPU_j)$.

S'il doit à l'évidence exister au moins une liaison série $LS_j$ entre une unité centrale et la mémoire centrale RAM, le nombre de registres à décalages $RDM_j$ peut être inférieur. En effet, si tacc est le temps d'accès à la mémoire centrale RAM et ttfr le temps de transfert d'un bloc, il n'est pas possible de maintenir plus de n = ttfr/tacc registres à décalages simultanément occupés. Par exemple, pour tacc = 100 ns et ttfr = 1 200 ns, on obtient n = 12.

Tacc et ttfr sont alors des critères caractéristiques de la performance du système multiprocesseur conforme à l'invention et la mise en place de n registres à décalages mémoires $RDM_j$ est compatible avec un nombre supérieur de liaisons séries $LS_j$ qu'à la condition d'intercaler une logique de type réseau d'interconnexion RI entre registres et liaisons, l'affectation d'un registre mémoire $RDM_j$ à une liaison série $LS_j$ étant réalisée de façon dynamique par le processeur de gestion mémoire PGM.

Par ailleurs, la mémoire centrale RAM sera généralement constituée par m bancs mémoires $RAM_1$, ... $RAM_p$, $RAM_m$ agencés en parallèles, chaque banc mémoire comportant n registres à décalages $RDM_j$ reliés par un réseau d'interconnexion $RI_p$ à l'ensemble des liaisons séries $LS_j$. Il est alors possible, sous réserve que les adresses de blocs soient uniformément distribués sur les bancs mémoires $RAM_p$, d'obtenir une performance théorique de m x n registres à décalages simultanément actifs. La distribution uniforme des adresses est assurée par des mécanismes classiques d'entrelaçages des adresses.

Sur la figure 20a, on a représenté partiellement une architecture conforme à l'invention, comportant m bancs mémoires $RAM_p$ avec n registres à décalages $RDM_j$ par bancs mémoires et q unités centrales $UC_j$. Chaque banc mémoire est de type à accès aléatoire doté d'une entrée/sortie de données de largeur correspondant à un bloc d'information bi, cette entrée/sortie étant (comme précédemment pour la mémoire RAM) reliée par un bus parallèle à l'ensemble des registres élémentaires $RDM_{1p}$... $RDM_{jp}$.

Le réseau d'interconnexion est de structure connue en soi ("cross-bar", "delta", "banyan"...). On notera qu'un réseau multi-étage est bien adapté dans la mesure où le temps d'établissement du chemin est négligeable devant son temps d'occupation (le temps de transfert d'un bloc) et qu'il ne concerne qu'un bit par liaison.

Le processeur de gestion mémoire PGM est adapté pour pouvoir assurer l'allocation dynamique d'une sortie à une entrée du réseau, c'est-à-dire mettre en relation un registre à décalage mémoire $RDM_j$ et une liaison série $LS_i$.

Dans le cas où les moyens de commmunication d'adresses de blocs sont constituées par le bus commun BUSA, le fonctionnement est le suivant :

En cas de demande de lecture d'un bloc de la part de l'unité centrale CPU$_j$, le processeur de gestion mémoire PGM$_p$ concerné alloue un registre à décalage RDM$_i$, commande le réseau d'interconnexion RI en conséquence et initialise le transfert.

En cas de demande d'écriture d'un bloc de la part de l'unité centrale CPU$_j$, un chemin doit au préalable être établi. A cet effet, une première requête d'établissement de chemin est émise sur le bus commun BUSA, suivie de la demande d'écriture effective dès transfert du bloc de la mémoire-cache MC$_j$ au registre à décalage RDM$_i$. Lors de la première demande, le processeur de gestion mémoire PGM est chargé d'allouer un chemin et de commander le réseau d'interconnexion RI.

Dans le cas où les moyens de communication d'adresses de blocs sont les liaisons séries elles-mêmes, un chemin doit être établi à tout préalable de transfert. Ce problème est identique au problème classique du partage d'un ensemble de n ressources par m utilisateurs et peut être réglé par des solutions classiques d'arbitrages de conflits d'accès (protocoles de communication, signaux supplémentaires).

Dans l'exemple d'architecture représenté à la figure 5, les registres à décalages RDM$_j$ et RDP$_j$, leurs logiques de validation LV1 et LV2 étaient réalisées dans une technologie rapide, l'ensemble étant synchronisé par une horloge de fréquence F au moins égale à 100 MHz.

La figure 20b présente en variante à l'architecture proposée à la figure 20a, une solution conforme à l'invention dans laquelle chaque liaison série LS$_j$, qui relie le processeur CPU$_j$ à tous les bancs mémoires, est éclatée en m liaisons séries LS$_{jp}$ reliant en point en point le processeur CPU$_j$ à chacun des bancs mémoires RAM$_p$.

Ce procédé présente le double avantage suivant :
- chaque liaison étant du type point à point, peut mieux être adaptée du point de vue électrique ou du point de vue fibre optique,
- un niveau de parallélisme supplémentaire est obtenu dès lors que le processeur de traitement est en mesure d'anticiper des demandes de blocs, ce qui est le cas actuellement pour les processeurs les plus performants.

La logique d'interface (notée précédemment TFR$_j$ et RDP$_j$) qui est associée à la liaison série LS$_j$, côté processseur CPU$_j$, est alors dupliquée en m exemplaires I$_1$... I$_p$... I$_m$. On notera la présence d'une liaison de maintien de cohérence de l'information, privée à chaque banc mémoire RAM$_p$. Le fonctionnement de cette liaison est analogue à celui du bus SYNCHRO de la figure 18.

On a représenté aux figures 21a et 21b une autre structure de mémoire RAM qui comprend 2$^u$

plans mémoires, chaque plan mémoire présentant un front de t/2$^u$ informations binaires (pour des raisons de clarté, l'on a représenté à la figure 21a les moyens nécessaires à la lecture d'un bloc bi, et à la figure 21b les moyens nécessaires à l'écriture). Les registres à décalages RDM$_j$ ou RDP$_j$ sont constitués de 2$^u$ sous-registres à décalages élémentaires RDM$_{jp}$ à t/2$^u$ bits de capacité. L'exemple présenté à la figure 20 est une réalisation à 8 plans mémoires (u = 3). (Pour la clarté du dessin, il a été représenté un seul registre à décalage RDM$_j$ formé pour l'ensemble des sous-registres RDM$_{jp}$). Chaque plan mémoire RAM$_p$ comporte en regard de son front d'accès un ensemble de registres à décalages élémentaires RDM$_{jp}$ et est capable de fonctionner avec une fréquence de décalage d'au moins F/2$^u$.

Le fonctionnement de l'ensemble en cas de lecture est illustré à la figure 21a. Un bloc est lu de façon synchrone dans l'ensemble des 2$^u$ plans mémoires et chargé de même dans les registres élémentaires de même rang. Les sorties séries de ces registres sont connectées aux entrées d'un multiplexeur MUXR réalisé en technologie rapide (ASGA). Un circuit de ce type, parfaitement adapté, est disponible chez "GIGABIT LOGIC", sous la référence "10GO40", et est capable de délivrer un signal logique à une fréquence de 2,7 GHz. Il fournit par ailleurs une horloge de fréquence divisée par huit, qui constitue l'horloge de décalage des registres élémentaires RDM$_{jp}$.

En cas d'écriture, un fonctionnement symétrique, présenté à la figure 21b, est obtenu avec un circuit de multiplexeur DMUXR du même fabricant (référencé "10G41"), avec les mêmes caractéristiques de performances.

On obtient ainsi une fréquence de transfert de 500 MHz avec 8 registres élémentaires fonctionnant à une fréquence de 500/8 = 62,5 MHz, ce qui les rend réalisables dans une technologie plus conventionnelle ("MOS" par exemple).

Les circuits multiplexeurs et démultiplexeurs référencés ci-dessus sont combinables en ensembles de 16, 32, ... bits. Ainsi, en associant respectivement 16, 32 plans mémoires fonctionnant à 62,5 MHz, il est possible d'obtenir des débits de 1 et 2 GHz, soit un niveau de performances 2 à 4 fois supérieur.

Il est à noter que la logique TFR peut être réalisée sur l'un des registres élémentaires, et que la logique de validation LV est intégrée aux circuits "ASGA" (sortie à collecteur ouvert).

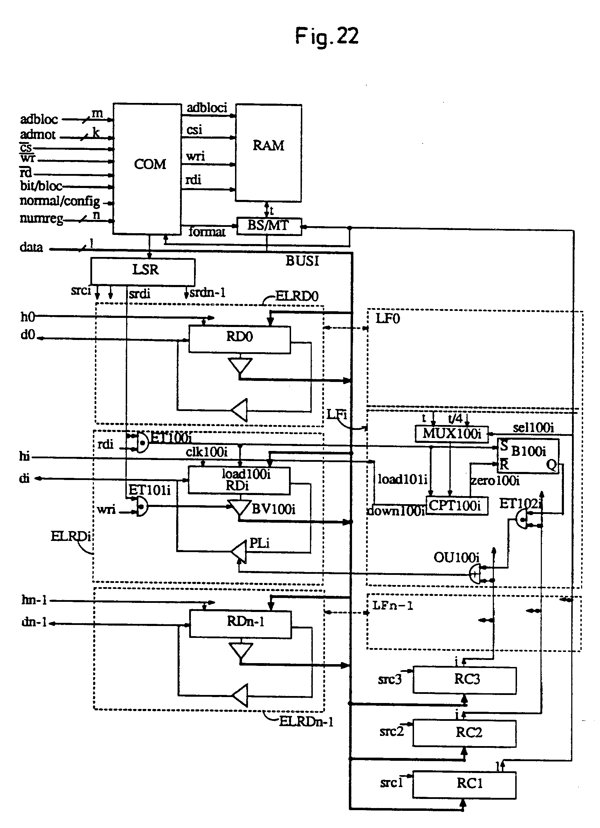

La figure 22 présente la structure générale d'un composant de type circuit intégré "VLSI", dénommé "mémoire multiport série" et susceptible d'équiper un système multiprocesseur conforme à l'invention. Ce composant peut être utilisé dans l'architecture multi-processeurs décrite précédemment, soit pour réaliser la mémoire centrale RAM et les registres à décalage RDM$_j$ associés, soit pour réaliser chaque mémoire-cache MC$_j$ et son registre à décalage RDP$_j$. Pour simplifier les notations, on a gardé dans la description qui suit les symboles relatifs à la mémoire centrale RAM et les registres à décalage associés.

La liste des broches de ce circuit avec les signaux correspondants est la suivante :

- adbloc$_0$-adblocm$_{m-1}$ : m bits d'adresses de bloc bi,
- admot$_0$-admot$_{k-1}$ : k bits d'adresses de mots dans le bloc,
- numreg$_0$-numreg$_{n-1}$ : n bits d'adresses de registres rd,
- $\overline{cs}$ : "chip select" : signal de sélection du circuit,
- $\overline{wr}$ : "write" : signal d'écriture,
- $\overline{rd}$ : "read" : signal de lecture,
- bit/$\overline{bloc}$ : signal de commande de la fonction multiport,
- normal/$\overline{config}$ : signal de mode de fonctionnement,
- data$_0$-data$_{1-1}$ : 1 bits de données,
- h$_1$-h$_n$ : n signaux d'horloge,
- d$_1$-d$_n$ : n signaux de données.

Les valeurs m, n, I sont fonctions de l'état courant de technologie. Des valeurs actuelles pourraient être les suivantes :

- m = 16 soit $2^{16}$ blocs bi de 64 bits chacun (soit 4 Mbits),
- n = 3 soit 8 registres rd,
- 1 = 8 soit un interface parallèle de type octets,
- k = 3 du fait de la présence de 8 octets par bloc.

Le composant visé comporte une cinquantaine de broches.

Ce circuit mémoire multiport série est composé d'une mémoire vive à accès aléatoire RAM, de largeur prédéterminée t, susceptible d'être commandée en écriture sur des fronts indépendants de largeur t/4 (valeur choisie à titre d'exemple sur la figure 22) et t/1. Les lignes de données de cette mémoire RAM sont reliées aux entrées d'une logique de type "barillet" BS ("Barrel shifter"), ou de multiplexage MT, selon la version de composant, la logique de multiplexage MT pouvant être considérée comme offrant un sous-ensemble des possibilités de la logique "barillet" et donc plus simple à réaliser. Les signaux d'adresses et de commande de cette mémoire RAM, à savoir csi, wri, rdi, adbloci, sont délivrés à partir d'une logique de commande COM. Cette logique COM reçoit en outre les signaux d'informations des broches $\overline{cs}$, $\overline{wr}$, $\overline{rd}$, bit/$\overline{bloc}$, normal/$\overline{config}$, numreq et est reliée, d'une part, par des lignes de commande "format" à la logique de type "barillet" BS, d'autre part, à la sortie d'un registre de configuration RC1, et à l'entrée d'une logique de sélection LSR fournissant des signaux srd$_0$,... srd$_{n-1}$ et src$_1$, src$_2$, src$_3$. Les sorties de la logique de type barillet BS constituent un bus interne de communication parallèle BUSI, relié à un ensemble de registres à décalages RD$_0$, ... RD$_{n-1}$, d'une part, sur leurs entrées parallèles et, d'autre part, sur leurs sorties parallèles à travers des buffers de validation BV100$_0$,... BV100$_{n-1}$ et à l'entrée parallèle des registres de configuration RC$_1$, RC$_2$... RC$_i$.

Les 1 bits de faible poids du bus BUSI sont également reçus sur les 1 broches data$_0$... data$_{1-1}$. Chaque registre à décalage RD$_i$ et des portes logiques associées constituent une unité fonctionnelle ELRD$_i$, pilotée par un ensemble d'éléments logiques qui constituent une logique de forçage LF$_i$. Chaque unité fonctionnelle ELRD$_i$ comporte des portes logiques ET100$_i$ et ET101$_i$' reliées sur l'une de leur entrée à la sortie srd$_i$ de la logique de sélection LSR, et recevant sur leur autre entrée respectivement les signaux rd$_i$ et wr$_i$. La sortie de la porte logique ET100$_i$ est reliée à l'entrée load100$_i$ du registre à décalage RD$_i$, ainsi qu'à l'entrée load101$_i$ et à l'entrée S respectivement d'un compteur CPT100$_i$ et d'une bascule B100$_i$ appartenant à la logique de forçage LF$_i$. La sortie de la porte logique ET101$_i$ est reliée à l'entrée de commande des buffers de validation BV100$_i$. La sortie di est connectée à la sortie d'une porte logique PL$_i$,qui reçoit sur son entrée de donnée la sortie série du registre à décalage RD$_i$ et sur son entrée de commande la sortie d'une porte logique OU100$_i$. Le signal issu de la broche h$_i$ est délivré à l'entrée clk100$_i$ du registre RD$_i$ ainsi qu'à l'entrée down100$_i$ du compteur CPT100$_i$. La sortie zéro100$_i$ du compteur CPT100$_i$ est reliée à l'entrée R de la bascule B100$_i$.

La logique de forçage LF$_i$ comporte en outre un multiplexeur MUX100$_i$ qui reçoit sur ses entrées de données les valeurs t et t/4. La sortie de donnée du multiplexeur MUX100$_i$ est reliée à l'entrée de donnée du compteur CPT100$_i$, et la commande de sélection sel100$_i$ du multiplexeur MUX100$_i$ est reliée à la sortie 1 du registre RC$_1$. La sortie Q de la bascule B100$_i$ est reliée à l'une des entrées d'une porte logique ET102$_i$, qui reçoit sur son autre entrée le signal issu de la broche i d'un registre RC$_2$. La sortie de la porte logique ET102$_i$ est reliée à l'une des entrées de la porte logique OU100$_i$, qui reçoit sur son autre entrée le signal issu de la broche i d'un registre RC$_3$. Les entrées de chargement des registres RC$_1$, RC$_2$, RC$_3$ reçoivent respectivement les signaux src$_1$, src$_2$, src$_3$ issus de la logique de sélection LSR.

Ce composant présente une dualité de fonctionnement : si le signal bit/$\overline{bloc}$ est dans l'état "bit", alors le fonctionnement de ce composant est celui d'une mémoire à semi-conducteur conventionnelle : les signaux adbloc associés aux signaux admot constituant le bus d'adresse en unité mot (8 bits dans l'exemple), les signaux $\overline{cs}$, $\overline{rd}$, $\overline{wr}$ ont le sens habituel attribué à ces signaux, et les broches data véhiculent les données.

De façon interne, en lecture le bloc d'information désigné par adbloc est lu en mémoie RAM et présenté à l'entrée de la logique de barillet BS ou de multiplexage MT. La combinaison des signaux admot et bit/$\overline{bloc}$ permettent à la logique de commande COM de fournir à la logique de barillet BS ou de multiplexage MT les signaux "format". Le mot concerné est alors cadré à droite en sortie de la logique de barillet ou de multiplexage et présenté ainsi sur les broches de donnée data.

De façon interne, en écriture le mot présenté sur les lignes de donnée data est cadré par la logique de barillet LS ou de multiplexage MT par les mêmes signaux de commande format qu'en lecture, en regard de sa position dans le bloc. La logique de commande COM émet alors un signal d'écriture wri partiel sur le seul "tronçon" de mémoire concerné, et à l'adresse désignée par les signaux adbloc.

Si le signal bit/$\overline{bloc}$ est dans l'état "bloc", alors le fonctionnement dépend de l'état du signal normal/$\overline{config}$. Le mode config programme les registres de configuration $RC_1$, $RC_2$, $RC_3$ adressés par les signaux numreg, et programmés à partir des lignes de données data. Le registre $RC_1$ permet de modifier la taille du bloc : t et t/4 dans l'exemple, soit 64 bits et 16 bits. De façon interne, le fonctionnement est similaire à celui décrit dans le mode de fonctionnement "bit" : t ou t/4 bits sont cadrés sur le bus interne BUSI (en lecture), ou en regard du "tronçon" de bloc concerné (en écriture). Des tailles de blocs multiples peuvent être envisagées (t, t/2, t/4...).

Le registre $RC_3$ permet de choisir pour chaque registre un sens permanent de fonctionnement : soit en entrée ($RC3_i$ = 0) soit en sortie ($RC3_i$ = 1). Ce sens permanent permet d'adapter le composant aux liaisons séries à liens unidirectionnels permanents. Le registre $RC_2$ permet de choisir pour chaque registre, sous réserve que le bit correspondant de $RC_3$ soit à l'état logique 0, un mode de fonctionnement à liens bidirectionnels alternés : sur une lecture mémoire RAM, le registre à décalage $RD_i$ concerné "passe" en mode sortie pour le temps de la transmission du bloc, puis revient à l'état de repos en mode "entrée". De façon interne, la bascule $B100_i$, qui pilote la porte logique $PL_i$, est mise à l sur un signal de chargement du registre $RDM_i$ et remise à zéro à l'issue du transfert des t ou t/4 bits, par l'intermédiaire du compteur $CPT100_i$, initialisé à t ou t/4 selon l'état du registre $RC_1$, et qui reçoit sur son entrée de décomptage les impulsions d'horloge hi. En fonctionnement normal (signal normal/$\overline{config}$ dans l'état normal) pour une lecture, le bloc adressé par les broches adbloc est chargé dans le registre $RD_i$ adressé par les broches numreg. Si le bloc est partiel (t/4), alors il est transmis en position faible poids sur le bus interne BUSI par la logique de type barillet BS ou de multiplexage MT. Ce bloc est alors transmis dès activation du signal d'horloge hi.

En fonctionnement normal pour une écriture, le contenu du registre $RD_i$ adressé par les broches numreg est écrit dans le bloc mémoire RAM d'adresse adbloc. Si le bloc est partiel, il est transmis en position fort poids sur le bus interne BUSI, puis cadré en "regard" du tronçon de bloc concerné par la logique de type barillet BS ou de multiplexage MT, et enfin un signal partiel d'écriture wri est émis sur le tronçon concerné.

Il est à noter que si un bloc partiel est en service, alors l'adresse de ce bloc partiel dans le bloc est fournie par les lignes d'adresse admot.

Ce composant est parfaitement adapté aux diverses variantes d'architectures décrites. Associés en parallèle, 8, 16... circuits de ce type permettent de réaliser le dispositif décrit aux figures 20a, 20b. Si la mémoire RAM est en technologie rapide, alors ce composant peut également être utilisé au niveau de la mémoire-cache, en multiplexant, selon le dispositif décrit aux figures 20a, 20b, les registres internes d'un même composant.

**Revendications**

1. Système multiprocesseur, du type comprenant une mémoire centrale (RAM) organisée en blocs d'informations (bi), des processeurs de traitement ($CPU_1$... $CPU_j$... $CPU_n$), une mémoire-cache ($MC_j$) reliée à chaque processeur de traitement ($CPU_j$) et organisée en blocs d'informations (bi) de même taille que ceux de la mémoire centrale, un répertoire ($RG_j$) et son processeur de gestion ($PG_j$) associé à chaque mémoire-cache ($MC_j$), ledit système multiprocesseur étant caractérisé en ce qu'il est doté :

    . d'un ensemble de registres à décalage, dit registres-mémoire ($RDM_1$... $RDM_j$... $RDM_n$), chaque registre ($RDM_j$) de cet ensemble étant associé à une logique de transfert ($TFR_j$) et connecté à la mémoire centrale (RAM) de façon à permettre, en un cycle de cette mémoire, un transfert parallèle en lecture ou écriture d'un bloc d'informations (bi) entre ledit registre et ladite mémoire centrale,

    . des registres à décalage, dits registres-processeur ($RDP_1$... $RDP_j$... $RDP_n$), chaque registre à décalage processeur ($RDP_j$) étant associé à une logique de

transfert (TFR'$_j$) et relié à la mémoire-cache (MC$_j$) d'un processeur (CPU$_j$) de façon à permettre un transfert parallèle en lecture ou écriture d'un bloc d'informations (bi) entre ledit registre à décalage (RDP$_j$) et ladite mémoire-cache (MC$_j$),

. un ensemble de liaisons séries (LS$_1$... LS$_j$... LS$_n$), chacune reliant un registre à décalage mémoire (RDM$_j$) et un registre à décalage processeur (RDP$_j$) et adaptée pour permettre le transfert de blocs d'informations (bi) entre les deux registres considérés (RDM$_j$, RDP$_j$) à une fréquence de transfert F au moins égale à 100 mégahertz,

. des moyens de communication d'adresses de blocs comprenant un registre à décalage complémentaire (RDC$_j$) connecté sur chaque liaison série (LS$_j$) en parallèle avec le registre à décalage mémoire correspondant (RDM$_j$) de façon à permettre la transmission des adresses par les liaisons séries et leur chargement dans lesdits registres à décalage complémentaires (RDC$_j$), un arbitre de gestion d'accès (ABM) étant relié auxdits registres à décalage complémentaires (RDC$_j$) et à la mémoire centrale (RAM) en vue de prélever les adresses contenues dans lesdits registres (RDC$_j$) et de gérer les conflits d'accès à la mémoire centrale (RAM), la logique de transfert (TFR$_j$) associée à chaque registre-processeur (RDP$_j$) étant contrôlée par le processeur de gestion (PG$_j$) de façon à permettre la transmission des adresses via ledit registre-processeur (RDP$_j$).

2. Système multiprocesseur, du type comprenant une mémoire centrale (RAM) organisée en blocs d'informations (bi), des processeurs de traitement (CPU$_1$... CPU$_j$... CPU$_n$), une mémoire-cache (MC$_j$) reliée à chaque processeur de traitement (CPU$_j$) et organisée en blocs d'informations (bi) de même taille que ceux de la mémoire centrale, un répertoire (RG$_j$) et son processeur de gestion (PG$_j$) associé à chaque mémoire-cache (MC$_j$), ledit système multiprocesseur étant caractérisé en ce qu'il est doté :

. d'un ensemble de registres à décalage, dit registres-mémoire (RDM$_1$... RDM$_j$... RDM$_n$), chaque registre (RDM$_j$) de cet ensemble étant associé à une logique de transfert (TFR$_j$) et connecté à la mémoire centrale (RAM) de façon à permettre, en un cycle de cette mémoire, un transfert parallèle en lecture ou écriture d'un bloc d'informations (bi) entre ledit registre et ladite mémoire centrale,

. des registres à décalage, dits registres-processeur (RDP$_1$... RDP$_j$... RDP$_n$), chaque registre à décalage processeur (RDP$_j$) étant associé à une logique de transfert (TFR'$_j$) et relié à la mémoire-cache (MC$_j$) d'un processeur (CPU$_j$) de façon à permettre un transfert parallèle en lecture ou écriture d'un bloc d'informations (bi) entre ledit registre à décalage (RDP$_j$) et ladite mémoire-cache (MC$_j$),

. un ensemble de liaisons séries (LS$_1$... LS$_j$... LS$_n$), chacune reliant un registre à décalage mémoire (RDM$_j$) et un registre à décalage processeur (RDP$_j$) et adaptée pour permettre le transfert de blocs d'informations (bi) entre les deux registres considérés (RDM$_j$, RDP$_j$) à une fréquence de transfert F au moins égale à 100 mégahertz,

. des moyens de communication d'adresses de blocs comprenant un bus commun de communication parallèle d'adresses de blocs (BUSA) reliant les processeurs (CPU$_j$) et la mémoire centrale (RAM) et un arbitre de bus (AB) adapté pour gérer les conflits d'accès audit bus, le processeur de gestion (PG$_j$) étant relié au bus commun (BUSA) de façon à permettre la transmission des adresses sur ledit bus commun.

3. Système multiprocesseur selon l'une des revendications 1 ou 2, caractérisé en ce que :

- chaque registre à décalage mémoire (RDM$_j$) et chaque registre à décalage processeur (RDP$_j$) sont dédoublés en deux registres, l'un spécialisé pour le transfert dans un sens l'autre pour le transfert dans l'autre sens,

- chaque liaison série (LS$_j$) comprend deux liens séries unidirectionnels de transfert bit à bit, reliant le registre à décalage mémoire (RDM$_j$) dédoublé et le registre à décalage processeur correspondant (RDP$_j$) dédoublé, ces liens étant connectés auxdits registres pour permettre, l'un un transfert dans un sens, l'autre un transfert dans l'autre sens.

4. Système multiprocesseur selon l'une des revendications 1 ou 2, caractérisé en ce que chaque liaison série (LS$_j$) comprend un lien bidirectionnel de transfert bit à bit, connecté au registre à décalage mémoire (RDM$_j$) et au registre à décalage processeur correspondant (RDP$_j$) et une logique (LV) de validation du sens de transfert de façon à permettre un transfert alterné dans les deux sens.

5. Système multiprocesseur selon l'une des revendications 1, 2, 3 ou 4, comprenant des moyens de gestion des données partagées entre processeurs, en vue d'en assurer la cohérence.

6. Système multiprocesseur selon la revendication 5, caractérisé en ce que les moyens de gestion des données partagées comprennent :
   . un bus spécial de communication parallèle de mots (BUSD) reliant les processeurs (CPU$_j$) et la mémoire centrale (RAM),
   . une logique de partition (LP$_j$) associée à chaque processeur (CPU$_j$) et adaptée pour différencier les adresses des données partagées et celles des données non partagées de façon à transmettre celles-ci sur les moyens de communication d'adresses avec leur identification,
   . une logique de décodage (DEC) associée à la mémoire centrale (RAM) et adaptée pour recevoir les adresses avec leur identification et aiguiller les données en sortie mémoire soit vers le registre à décalage mémoire correspondant (RDM$_j$) pour les données non partagées, soit vers le bus spécial de communication de mots (BUSD) pour les données partagées.

7. Système multiprocesseur selon la revendication 5, caractérisé en ce que les moyens de gestion des données partagées comprennent, d'une part, un bus spécial de communication parallèle de mots (BUSD) et un bus spécial commun de communication d'adresses de mots (BUSAM) reliant les processeurs (CPU$_j$) et la mémoire centrale (RAM), d'autre part, une logique de partition (LP$_j$) associée à chaque processeur (CPU$_j$) et adaptée pour différencier les adresses des données partagées et celles des données non partagées, de façon à aiguiller les premières vers le bus spécial commun (BUSAM) et les secondes vers les moyens de communication d'adresses de bloc.

8. Système multiprocesseur selon les revendications 1 et 5 prises ensemble, caractérisé en ce que les moyens de gestion des données partagées comprennent un processeur de gestion mémoire (PGM) associé à la mémoire centrale (RAM) et un processeur de maintien de la cohérence des données partagées (PMC$_j$) associé à chaque processeur de traitement (CPU$_j$) et au répertoire de gestion correspondant (RG$_j$), chaque processeur de maintien de cohérence (PMC$_j$) étant connecté à un bus de synchronisation (SYNCHRO) piloté par le processeur de gestion mémoire (PGM), de façon à permettre une mise à jour de la mémoire centrale (RAM) et de la mémoire-cache associée (MC$_j$) en cas de détection d'une adresse de bloc, une mise à jour de la mémoire centrale (RAM) et des mémoires-caches (MC$_j$) à chaque prélèvement d'adresses dans les registres à décalage complémentaires (RDC$_j$).

9. Système multiprocesseur selon les revendications 2 et 5 prises ensemble, caractérisé en ce que les moyens de gestion des données partagées comprennent un processeur de gestion mémoire (PGM) associé à la mémoire centrale (RAM) et un processeur espion de bus (PE$_j$) associé à chaque processeur de traitement (CPU$_j$) et au répertoire de gestion correspondant (RG$_j$), chaque processeur espion de bus (PE$_j$) et le processeur de gestion mémoire (PGM) étant connectés au bus de communication d'adresses (BUSA) en vue respectivement de surveiller et de traiter les adresses de blocs transmises sur ledit bus de façon à permettre une mise à jour de la mémoire centrale (RAM) et de la mémoire-cache associée (MC$_j$) en cas de détection d'une adresse de bloc présente dans le répertoire associé (RG$_j$).

10. Système multiprocesseur selon les revendications 2 et 5 prises ensemble caractérisé en ce que les moyens de gestion des données partagées comprennent un processeur de gestion mémoire (PGM) associé à la mémoire centrale (RAM) et un processeur de maintien de la cohérence des données partagées (PMC$_j$) associé à chaque processeur de traitement (CPU$_j$) et au répertoire de gestion correspondant (RG$_j$), chaque processeur de maintien de cohérence (PMC$_j$) étant connecté à un bus de synchronisation (SYNCHRO) piloté par le processeur de gestion mémoire (PGM), de façon à permettre une mise à jour de la mémoire centrale (RAM) et de la mémoire-cache associée (MC$_j$) en cas de détection d'une adresse de bloc, une mise à jour de la mémoire centrale (RAM) et des mémoires-caches (MC$_j$) à chaque prélèvement d'adresses sur le bus commun d'adresses BUSA.

11. Système multiprocesseur selon l'une des revendications 1 à 10, caractérisé en ce que :
   - plusieurs registres à décalage processeur (RDP$_k$, RDP$_{k+1}$...) correspondant à un ensemble de processeurs déterminé (CPU$_k$, CPU$_{k+1}$...) sont connectés en pa-

ralllèles à une même liaison série (LS$_k$), un arbitre local (ABL$_k$) étant associé à chaque ensemble de processeurs (CPU$_k$, CPU$_{k+1}$...) en vue d'arbitrer les conflits d'accès à la liaison série (LS$_k$),
- un processeur de gestion mémoire (PGM) est relié aux moyens de communication d'adresses de blocs et à la mémoire centrale (RAM) et comprend des moyens de codage adaptés pour associer à chaque bloc d'informations (bi) un entête d'identification du processeur concerné parmi chaque ensemble (CPU$_k$, CPU$_{k+1}$...) partageant une liaison série donnée (LS$_k$),
- les processeurs de gestion (PG$_k$, PG$_{k+1}$...) associés aux mémoires-caches (MC$_k$, MC$_{k+1}$...) des processeurs de l'ensemble précité (CPU$_k$, CPU$_{k+1}$...) comprennent des moyens de décodage de l'en-tête d'identification.

12. Système multiprocesseur selon l'une des revendications 1 à 11, caractérisé en ce que chaque registre à décalage mémoire (RDM$_j$) est connecté de façon statique à une liaison série (LS$_j$) spécifiquement affectée audit registre.

13. Système multiprocesseur selon l'une des revendications 1 à 11, caractérisé en ce que :
- un processeur de gestion mémoire (PGM) est associé à la mémoire centrale (RAM) et comprend une logique (ALLOC) d'affectation des registres à décalage mémoire aux liaisons séries,
- les registres à décalage mémoire (RDM$_1$... RDM$_j$... RDM$_n$) sont connectés de façon dynamique aux liaisons séries (LS$_1$... LS$_j$...) par l'entremise d'un réseau d'interconnexion (RI) commandé par le processeur de gestion mémoire (PGM).

14. Système multiprocesseur selon l'une des revendications 1 à 13, dans lequel la mémoire centrale (RAM) est constituée par m bancs mémoires (RAM$_1$... RAM$_p$... RAM$_m$) agencés en parallèle, caractérisé en ce que chaque registre à décalage mémoire (RDM$_j$) est constitué par m registres à décalage élémentaires (RDM$_{j1}$... RDM$_{jp}$... RDM$_{jm}$) reliés en parallèles à la liaison série correspondante (LS$_j$), chaque registre élémentaire (RDM$_{jp}$) étant connecté à un banc mémoire (RAM$_p$) de façon à permettre, en un cycle dudit banc mémoire, un transfert parallèle en lecture ou écriture d'un bloc d'informations (bi) entre ledit registre élémentaire et ledit banc mémoire.

15. Système multiprocesseur conforme à la revendication 14, dans lequel chaque liaison série (LS$_j$) est éclatée en m liaisons séries (LS$_{jp}$), reliant en point à point chaque processeur (CPU$_j$) au registre à décalage élémentaire (RDM$_{jp}$).

16. Système multiprocesseur selon la revendication 14, dans lequel chaque banc mémoire (RAM$_p$) est du type à accès aléatoire doté d'une entrée/sortie de données de largeur correspondant à un bloc d'informations (bi), caractérisé en ce que ladite entrée/sortie de chaque banc mémoire (RAM$_p$) est reliée par un bus parallèle à l'ensemble des registres élémentaires (RDM$_{1p}$... RDM$_{jp}$).

17. Système multiprocesseur selon l'une des revendications 14, 15 ou 16, synchronisé par une horloge de fréquence F au moins égale à 100 mégahertz, caractérisé en ce que chaque registre à décalage élémentaire mémoire (RDM$_{jp}$) et chaque registre à décalage processeur (RDP$_j$) sont d'un type adapté pour présenter une fréquence de décalage au moins égale à F.

18. Système multiprocesseur selon l'une des revendications 14, 15 ou 16 synchronisé par une horloge de fréquence F au moins égale à 100 mégahertz, caractérisé en ce que chaque registre à décalage élémentaire mémoire et/ou chaque registre à décalage processeur est constitué d'un ensemble de $2^u$ sous-registres multiplexés (RDM$_{jp}$, RDP$_{jp}$),chacun apte à présenter une fréquence de décalage au moins égale à $F/2u$.

19. Procédé d'échange d'informations entre une mémoire centrale (RAM) organisée en blocs d'informations (bi) et des processeurs (CPU$_1$... CPU$_j$... CPU$_n$) chacun doté d'une mémoire-cache (MC$_j$) organisée en blocs de même taille (bi), et d'un répertoire (RG$_j$) et de son processeur de gestion (PG$_j$), de façon que l'échange entre mémoire centrale (RAM) et chaque processeur (CPU$_j$) s'effectue via la mémoire-cache (MC$_j$) de ce dernier, ledit procédé étant caractérisé en ce que :
- chaque transfert de bloc d'informations (bi) depuis la mémoire centrale (RAM) vers la mémoire-cache (MC$_j$) d'un processeur donné (CPU$_j$) est effectué à une fréquence de transfert F au moins égale à 100 mégahertz et consiste :
. à transférer, en un cycle de mémoire centrale, le bloc (bi) de ladite mémoire centrale (RAM) vers un registre à

décalage mémoire (RDM$_j$) de la taille d'un bloc, faisant partie d'un ensemble de registres à décalage (RDM$_1$ ... RDM$_j$... RDM$_n$) connectés à la mémoire centrale,

. à transférer sur une liaison série (LS$_j$) le contenu du registre à décalage mémoire (RDM$_j$) vers un registre à décalage processeur (RDP$_j$) de même capacité, associé à la mémoire-cache (MC$_j$) du processeur considéré (CPU$_j$),

. à transférer le contenu dudit registre à décalage processeur (RDP$_j$) vers ladite mémoire-cache (MC$_j$),

- le transfert de l'adresse d'un bloc d'informations est effectué à la fréquence de transfert F via les liaisons-séries.

20. Procédé d'échange d'informations entre une mémoire centrale (RAM) organisée en blocs d'informations (bi) et des processeurs (CPU$_1$ ... CPU$_j$... CPU$_n$) chacun doté d'une mémoire-cache (MC$_j$) organisée en blocs de même taille (bi), et d'un répertoire (RG$_j$) et de son processeur de gestion (PG$_j$), de façon que l'échange entre mémoire centrale (RAM) et chaque processeur (CPU$_j$) s'effectue via la mémoire-cache (MC$_j$) de ce dernier, ledit procédé étant caractérisé en ce que :

- chaque transfert de bloc d'informations (bi) depuis la mémoire centrale (RAM) vers la mémoire-cache (MC$_j$) d'un processeur donné (CPU$_j$) est effectué à une fréquence de transfert F au moins égale à 100 mégahertz et consiste :

. à transférer, en un cycle de mémoire centrale, le bloc (bi) de ladite mémoire centrale (RAM) vers un registre à décalage mémoire (RDM$_j$) de la taille d'un bloc, faisant partie d'un ensemble de registres à décalage (RDM$_1$ ... RDM$_j$... RDM$_n$) connectés à la mémoire centrale,

. à transférer sur une liaison série (LS$_j$) le contenu du registre à décalage mémoire (RDM$_j$) vers un registre à décalage processeur (RDP$_j$) de même capacité, associé à la mémoire-cache (MC$_j$) du processeur considéré (CPU$_j$),

. à transférer le contenu dudit registre à décalage processeur (RDP$_j$) vers ladite mémoire-cache (MC$_j$),

- le transfert de l'adresse d'un bloc d'informations est effectué par l'intermédiaire d'un bus commun de communication parallèle d'adresses (BUSA).

21. Procédé d'échange d'informations entre une mémoire centrale (RAM) organisée en blocs d'informations (bi) et des processeurs (CPU$_1$ ... CPU$_j$... CPU$_n$) chacun doté d'une mémoire-cache (MC$_j$) organisée en blocs de mêmes tailles (bi), et d'un répertoire (RG$_j$) et de son processeur de gestion (PG$_j$), de façon que l'échange entre mémoire centrale (RAM) et chaque processeur (CPU$_j$) s'effectue via la mémoire-cache (MC$_j$) de ce dernier, ledit procédé étant caractérisé en ce que :

- chaque transfert de bloc d'informations (bi) depuis la mémoire-cache (MC$_j$) d'un processeur donné (CPU$_j$) vers la mémoire centrale (RAM) est effectué à une fréquence de transfert au moins égale à 100 mégahertz et consiste :

. à transférer le bloc (bi) de ladite mémoire-cache considérée (MC$_j$) vers un registre à décalage processeur (RDP$_j$) de la taille d'un bloc, associé à ladite mémoire-cache (MC$_j$),

. à transférer sur une liaison série (LS$_j$) le contenu du registre à décalage processeur (RDP$_j$) vers un registre à décalage mémoire (RDM$_j$) de même capacité, affecté au processeur considéré dans un ensemble de registres à décalage (RDM$_1$ ... RDM$_j$... RDM$_n$) connectés à la mémoire centrale (RAM),

. à transférer, en un cycle de mémoire centrale, le contenu du registre à décalage mémoire (RDM$_j$) vers ladite mémoire centrale (RAM),

- le transfert de l'adresse d'un bloc d'informations est effectué à la fréquence de transfert F via les liaisons-séries.

22. Procédé d'échange d'informations entre une mémoire centrale (RAM) organisée en blocs d'informations (bi) et des processeurs (CPU$_1$ ... CPU$_j$... CPU$_n$) chacun doté d'une mémoire-cache (MC$_j$) organisée en blocs de mêmes tailles (bi), et d'un répertoire (RG$_j$) et de son processeur de gestion (PG$_j$), de façon que l'échange entre mémoire centrale (RAM) et chaque processeur (CPU$_j$) s'effectue via la mémoire-cache (MC$_j$) de ce dernier, ledit procédé étant caractérisé en ce que :

- chaque transfert de bloc d'informations (bi) depuis la mémoire-cache (MC$_j$) d'un processeur donné (CPU$_j$) vers la mémoire centrale (RAM) est effectué à une fréquence de transfert au moins égale à 100 mégahertz et consiste :

. à transférer le bloc (bi) de ladite mémoire-cache considérée (MC$_j$) vers un

registre à décalage processeur (RDP$_j$) de la taille d'un bloc, associé à ladite mémoire-cache (MC$_j$),

. à transférer sur une liaison série (LS$_j$) le contenu du registre à décalage processeur (RDP$_j$) vers un registre à décalage mémoire (RDM$_j$) de même capacité, affecté au processeur considéré dans un ensemble de registres à décalage (RDM$_1$ ... RDM$_j$... RDM$_n$) connectés à la mémoire centrale (RAM),

. à transférer, en un cycle de mémoire centrale, le contenu du registre à décalage mémoire (RDM$_j$) vers ladite mémoire centrale (RAM),

- le transfert de l'adresse d'un bloc d'informations est effectué par l'intermédiaire d'un bus commun de communication parallèle d'adresses (BUSA).

23. Composant mémoire multiport série, susceptible d'équiper un système multiprocesseur conforme à l'une des revendications 1 à 18, caractérisé en ce qu'il est constitué par un circuit intégré comprenant une mémoire à accès aléatoire (RAM) de largeur prédéterminée correspondant à un bloc d'informations (bi), un ensemble de registres à décalage (RDM$_1$ ... RDM$_j$... RDM$_n$), chacun de capacité correspondant à la largeur de la mémoire, un bus parallèle interne (BUSI) reliant l'accès de la mémoire et les registres à décalage, une logique de sélection d'un registre à décalage (LSR) adaptée pour valider la liaison sur le bus interne entre la mémoire et un registre à décalage prédéterminé, et un ensemble de broches externes d'entrée/sortie (adbloc, admot, numreg, cs, wr, rd, bitbloc, normal/config, hi, di) pour l'entrée d'adresses vers la mémoire (RAM), pour l'entrée d'adresses vers la logique de sélection (LSR), pour l'entrée et la validation de commandes de transfert en lecture ou écriture d'un bloc d'informations (bi) entre la mémoire (RAM) et les registres à décalage (RDM$_j$), pour l'entrée d'un signal d'horloge vers chaque registre à décalage (RDM$_j$), pour l'entrée bit à bit d'un bloc d'informations (bi) vers chaque registre à décalage (RDM$_j$) et pour la sortie bit à bit d'un bloc d'informations de chaque registre à décalage (RDM$_j$).

24. Composant selon la revendication 23, caractérisé en ce qu'il comprend au moins un registre de configuration (RC$_1$, RC$_2$...) possédant des entrées de programmation, chaque registre de configuration étant relié à une logique de forçage (LF) connectée à la mémoire (RAM) et aux registres à décalage (RDM$_j$) en vue d'assurer le forçage d'états de ladite mémoire et desdits registres à décalage.

25. Composant selon la revendication 24, permettant le choix de la taille des blocs d'informations (bi) traités, caractérisé en ce que :
- la mémoire (RAM) est découpée en zones combinables pour permettre la mémorisation des diverses tailles possibles de blocs d'informations,
- chaque registre à décalage (RDM$_j$) est découpé en tronçons combinables pour permettre de charger les diverses tailles possibles de blocs d'informations, avec des dérivations aptes à assurer le décalage correspondant à chaque taille,
- le bus interne (BUSI) est doté d'une logique de multiplexage (MT) pour permettre les transferts de blocs d'informations (bi) des diverses tailles entre les combinaisons de zones de la mémoire (RAM) et les combinaisons correspondantes de tronçons des registres à décalage (RDM$_j$),
- un registre de configuration (RC$_1$) est prévu de capacité correspondant au nombre de tailles de blocs possibles,
- la logique de forçage (LF) reliée au registre (RC$_1$) comprend une unité logique adaptée pour commander la logique de multiplexage (MT) en vue de valider les transferts de blocs d'informations (bi) dans une taille donnée correspondant au paramètre contenu dans le registre de configuration (RC$_1$).

26. Composant selon l'une des revendications 24 ou 25, caractérisé en ce que :
- l'entrée et la sortie de chaque registre à décalage (RDM$_j$) sont reliées à une même broche externe par l'intermédiaire d'une porte logique (PL$_j$),
- un registre de configuration (RC$_2$) est prévu de capacité correspondant au nombre de registres à décalage (RDM$_j$),
- la logique de forçage (LF) reliée au registre de configuration (RC$_2$) comprend une unité logique adaptée pour commander les portes logiques (PL$_j$) en vue de forcer le fonctionnement de chaque registre à décalage (RDM$_j$) en mode entrée ou en mode sortie en fonction d'un bit contenu dans le registre de configuration (RC$_2$) affecté audit registre à décalage (RDM$_j$).

**27.** Composant selon l'une des revendications 24, 25 ou 26, caractérisé en ce que :
- l'entrée et la sortie de chaque registre à décalage (RDM$_j$) sont reliées à une même broche externe par l'intermédiaire d'une porte logique (PL$_j$),
- un registre de configuration (RC$_3$) est prévu de capacité correspondant au nombre de registres à décalage (RDM$_j$),
- la logique de forçage (LF) reliée au registre de configuration (RC$_3$) comprend une unité logique reliée à la commande de lecture de la mémoire (RAM) et adaptée pour commander chaque porte logique (PL$_j$) soit en mode sortie au moment de la lecture de la mémoire (transfert de la mémoire RAM vers le registre correspondant RDM$_j$) pendant toute la durée du vidage dudit registre à décalage (RDM$_j$), soit en mode entrée, le reste du temps.

**28.** Composant selon l'une des revendications 24, 25, 26 ou 27, caractérisé en ce qu'il comprend une broche externe d'entrée (bit/bloc), une ou des broches externes d'entrée/sortie d'informations (data), une logique de commande (COM) reliée à la broche d'entrée (bit/bloc), aux broches d'entrée/sortie (data), à la mémoire (RAM) et à la logique de sélection (LSR) et adaptée selon l'état de l'entrée (bit/bloc) pour engendrer soit les transferts de blocs d'informations (bi) entre mémoire (RAM) et registres à décalage (RDM$_j$), soit des transferts de bits directement entre la mémoire (RAM) et les broches (data).

**29.** Composant selon les revendications 24 et 28 prises ensemble, caractérisé en ce que les registres de configuration (RC$_1$, RC$_2$...) sont reliés :
- d'une part à la logique de sélection (LSR) laquelle est adaptée pour sélectionner lesdits registres de configuration pour des adresses prédéterminées affectées auxdits registres,
- d'autre part, à la logique de commande (COM) laquelle est adaptée pour transmettre les données en provenance des broches d'entrée/sortie (data) vers lesdits registres de configuration en vue de leur programmation.

**30.** Composant selon l'une des revendications 23 à 29, dans lequel sur le bus interne (BUSI) reliant l'accès de la mémoire (RAM) et les registres à décalage (RDM$_j$) est interposée une logique de type "barillet" (BS) ("barrel shifter") apte à assurer une permutation circulaire sur les bits de chaque bloc d'informations, ladite logique (BS) possédant une entrée de commande du pas de glissement en unité mot connectée à des broches d'entrée (admot).

## Claims

**1.** Multiprocessor system of the type comprising a central memory (RAM) organised into data blocks (bi), processing processors (CPU$_1$...CPU$_j$...CPU$_n$), a cache memory (MC$_j$) connected to each processing processor (CPU$_j$) and organised into data blocks (bi) of the same size as those of the central memory, a directory (RG$_j$) and its management processor (PG$_j$) associated with each cache memory (MC$_j$), said multiprocessor system being characterised in that it is provided with:
- a set of shift registers, called memory registers (RDM$_1$...RDM$_j$...RDM$_n$), each register (RDM$_j$) of this set being associated with a logical transfer circuit (TFR$_j$) and connected to the central memory (RAM) in such a manner as to permit, in one cycle of this memory, a parallel transfer in the read or write mode of a data block (bi) between said register and said central memory,
- shift registers, called processor registers (RDP$_1$...RDP$_j$...RDP$_n$), each processor shift register (RDP$_j$) being associated with a logical transfer circuit (TFR'$_j$) and connected to the cache memory (MC$_j$) of a processor (CPU$_j$) in such a manner as to permit a parallel transfer in the read or write mode of a data block (bi) between said shift register (RDP$_j$) and said cache memory (MC$_j$),
- a set of serial links (LS$_1$...LS$_j$...LS$_n$), each connecting a memory shift register (RDM$_j$) and a processor shift register (RDP$_j$) and designed to permit the transfer of data blocks (bi) between the two registers (RDM$_j$, RDP$_j$) under consideration, at a transfer frequency F at least equal to 100 megahertz,
- means of communicating bloc addresses, comprising an additional shift register (RDC$_j$) connected in parallel with the corresponding memory shift register (RDM$_j$) via each serial link (LS$_j$), in such a manner as to permit the transmission of addresses by the serial links and their loading in said additional shift registers (RDC$_j$), an access management arbiter (ABM) being connected to said additional shift registers (RDC$_j$) and to the central memory (RAM) for the purpose of sampling the addresses contained in said registers (RDC$_j$) and managing the conflicts in the access to the central memory (RAM), the logical transfer circuit (TFR$_j$) associated with each processor register (RDP$_j$) being controlled by the management processor (PG$_j$) in such a manner as to permit the transmission of addresses via said processor register (RDP$_j$).

2. Multiprocessor system of the type comprising a central memory (RAM) organised into data blocks (bi), processing processors (CPU$_1$...CPU$_j$...CPU$_n$), a cache memory (MC$_j$) connected to each processing processor (CPU$_j$) and organised into data blocks (bi) of the same size as those of the central memory, a directory (RG$_j$) and its management processor (PG$_j$) associated with each cache memory (MC$_j$), said multiprocessor system being characterised in that it is provided with:
   - a set of shift registers, called memory registers (RDM$_1$...RDM$_j$...RDM$_n$), each register (RDM$_j$) of this set being associated with a logical transfer circuit (TFR$_j$) and connected to the central memory (RAM) in such a manner as to permit, in one cycle of this memory, a parallel transfer in the read or write mode of a data block (bi) between said register and said central memory,
   - shift registers, called processor registers (RDP$_1$...RDP$_j$...RDP$_n$), each processor shift register (RDP$_j$) being associated with a logical transfer circuit (TFR'$_j$) and connected to the cache memory (MC$_j$) of a processor (CPU$_j$) in such a manner as to permit a parallel transfer in the read or write mode of a data block (bi) between said shift register (RDP$_j$) and said cache memory (MC$_j$),
   - a set of serial links (LS$_1$...LS$_j$...LS$_n$), each connecting a memory shift register (RDM$_j$) and a processor shift register (RDP$_j$) and designed to permit the transfer of data blocks (bi) between the two registers (RDM$_j$, RDP$_j$) under consideration, at a transfer frequency F at least equal to 100 megahertz,
   - means of communicating bloc addresses, comprising a common, parallel, block address communication bus (BUSA) connecting the processors (CPU$_j$) and the central memory (RAM) and a bus arbiter (AB) designed to manage the conflicts of access to said bus, the management processor (PG$_j$) being connected to the common bus (BUSA) in such a manner as to permit the transmission of addresses on said common bus.

3. Multiprocessor system according to one of the Claims 1 or 2, characterised in that
   - each memory shift register (RDM$_j$) and each processor shift register (RDP$_j$) are split into two registers, one dedicated to the transfer in one direction, the other to the transfer in the other direction,
   - each serial link (LS$_j$) comprises two unidirectional serial links for bit-by-bit transfer, connecting the split memory shift register (RDM$_j$) and the corresponding split processor shift register (RDP$_j$), these links being connected to said registers to enable one to transfer in one direction and the other to transfer in the other direction.

4. Multiprocessor system according to one of the Claims 1 or 2, characterised in that each serial link (LS$_j$) comprises a bidirectional link for bit-by-bit transfer, connected to the memory shift register (RDM$_j$) and to the corresponding processor shift register (RDP$_j$), and an enabling logic circuit (LV) for the direction of transfer in such a manner as to permit an alternate transfer in the two directions.

5. Multiprocessor system according to one of the Claims 1, 2, 3 or 4, comprising means for managing data shared between processors, for the purpose of ensuring coherency.

6. Multiprocessor system according to Claim 5, characterised in that the means for managing shared data comprise:
   - a special, parallel word communication bus (BUSD) connecting the processors (CPU$_j$) and the central memory
   - a partition logic circuit (LP$_j$) associated with each processor (CPU$_j$) and designed to differentiate the addresses of shared data and those of non-shared data in such a manner as to transmit same on the address communication means with their identification,
   - a decoding logic circuit (DEC) associated with the central memory (RAM) and designed to receive the addresses with their identification and to route the data in the memory output either to the corresponding memory shift register (RDM$_j$) for the non-shared data, or to the special word communication bus (BUSD) for the shared data.

7. Multiprocessor system according to Claim 5, characterised in that the shared data management means comprise, on the one hand, a special, parallel word communication bus (BUSD) and a special, common word address communication bus (BUSAM) connecting processors (CPU$_j$) and the central memory (RAM), and on the other hand, a partition logic circuit (LP$_j$) associated with each processor (CPU$_j$) and designed to differentiate the addresses of shared data and those of non-shared data, in such a manner as to route the former to the special common bus (BUSAM) and the latter to the block address communication means.

8. Multiprocessor system according to Claims 1 and 5, taken together, characterised in that the shared data management means comprise a memory management processor (PGM) associated with the central memory (RAM) and a shared data coherency maintenance processor (PMC$_j$) associated with each processing processor (CPU$_j$) and with the corresponding management directory (RG$_j$), each coherency maintenance processor (PMC$_j$) being connected to a synchronization bus (SYNCHRO) controlled by the memory management processor (PGM) in such a manner as to permit updating of the central memory (RAM) and of the associated cache memory (MC$_j$) in the event of detection of a block address, updating of the central memory (RAM) and of the cache memories (MC$_j$) each time the addresses are sampled in the additional shift registers (RDC$_j$).

9. Multiprocessor system according to Claims 2 and 5, taken together, characterised in that the shared data management means comprise a memory management processor (PGM) associated with the central memory (RAM) and a bus monitoring processor (PE$_j$) associated with each processing processor (CPU$_j$) and with the corresponding management directory (RG$_j$), each bus monitoring processor (PE$_j$) and the memory management processor (PGM) being connected to the address communication bus (BUSA) for the purpose of monitoring and processing the addresses of blocks transmitted on said bus in such a manner as to permit updating of the central memory (RAM) and of the associated cache memory (MC$_j$) in the event of detection of a block address present in the associated directory (RG$_j$).

10. Multiprocessor system according to Claims 2 and 5, taken together, characterised in that the shared data management means comprise a memory management processor (PGM) associated with the central memory (RAM) and a shared data coherency management processor (PMC$_j$) associated with each processing processor (CPU$_j$) and with the corresponding management directory (RG$_j$), each coherency management processor (PMC$_j$) being connected to a synchronization bus (SYNCHRO) controlled by the memory management processor (PGM) in such a manner as to permit updating of the central memory (RAM) and of the associated cache memory (MC$_j$) in the event of detection of a block address, updating of the central memory (RAM) and of the cache memories (MC$_j$) each time the addresses are sampled on the common address bus (BUSA).

11. Multiprocessor system according to one of the Claims 1 to 10, characterised in that:
   - several processor shift registers (RDP$_k$, RDP$_{k+1}$...) corresponding to a given set of processors (CPU$_k$, CPU$_{k+1}$...) are connected in parallel to the same serial link (LS$_k$), a local arbiter (ABL$_k$) being associated with each set of processors (CPU$_k$, CPU$_{k+1}$...) for the purpose of managing the conflicts in the access to the serial link (LS$_k$),
   - a memory management processor (PGM) is connected to block address communication means and to the central memory (RAM) and comprises coding means designed to associate with each data block (bi) an identification header of the processor concerned in each set (CPU$_k$, CPU$_{k+1}$...) sharing a given serial link (LS$_k$),
   - management processors (PG$_k$, PG$_{k+1}$...) associated with the cache memories (MC$_k$, MC$_{k+1}$...) of the processors of said set (CPU$_k$, CPU$_{k+1}$...) comprising decoding means for the identification header.

12. Multiprocessor system according to one of the Claims 1 to 11, characterised in that each memory shift register (RDM$_j$) is connected in a static manner to a serial link (LS$_j$) specifically assigned to said register.

13. Multiprocessor system according to one of the Claims 1 to 11, characterised in that:
   - a memory management processor (PGM) is associated with the central memory (RAM) and comprises a logic circuit (ALLOC) for allocating the memory shift registers to the serial links,
   - the memory shift registers (RDM$_1$... RDM$_j$... RDM$_n$) are connected in a dynamic manner to the serial links (LS$_1$...

LS$_j$...) via an interconnection network (RI) controlled by the memory management processor (PGM).

14. Multiprocessor system according to one of the Claims 1 to 13, in which the central memory (RAM) is made up of m memory banks (RAM$_1$... RAM$_p$... RAM$_m$) arranged in parallel, characterised in that each memory shift register (RDM$_j$) is made up of m elementary shift registers (RDM$_{j1}$... RDM$_{jp}$... RDM$_{jm}$) connected in parallel to the corresponding serial link (LS$_j$), each elementary register (RDM$_{jp}$) being connected to a memory bank (RAM$_p$) is such a manner as to permit, in one cycle of said memory bank, a parallel transfer in the read or write mode of a data block (bi) between said elementary register and said memory bank.

15. Multiprocessor system according to Claim 14, in which each serial link (LS$_j$) is divided into m serial links (LS$_{jp}$) connecting, point-to-point, each processor (CPU$_j$) to the elementary shift register (RDM$_{jp}$).

16. Multiprocessor system according to Claim 14, in which each memory bank (RAM$_p$) is of the random access type provided with an input/output for data of a size corresponding to a data block (bi), characterised in that said input/output of each memory bank (RAM$_p$) is connected by means of a parallel bus to the set of elementary registers (RDM$_{1p}$... RDM$_{jp}$).

17. Multiprocessor system according to one of the Claims 14, 15 or 16, synchronized by a clock of frequency F at least equal to 100 megahertz, characterised in that each elementary memory shift register (RDM$_{jp}$) and each processor shift register (RDP$_j$) are of a type designed to exhibit a shift frequency at least equal to F.

18. Multiprocessor system according to one of the Claims 14, 15 or 16, synchronized by a clock of frequency F at least equal to 100 megahertz, characterised in that each elementary memory shift register and/or each processor shift register is made up of a set of $2^u$ multiplexed sub-registers (RDM$_{jp}$, RDP$_{jp}$), each able to exhibit a shift frequency at least equal to $F/2^u$.

19. Process for the exchange of data between a central memory (RAM) organised into data blocks (bi) and processors (CPU$_1$...CPU$_j$...CPU$_n$) each provided with a cache memory (MC$_j$) organised into data blocks (bi) of the same size, and with a directory (RG$_j$) and its management processor (PG$_j$), in such a manner that the exchange between the central memory (RAM) and each processor (CPU$_j$) is effected via the cache memory (MC$_j$) of the latter, said process being characterised in that:

- each transfer of a data block (bi) from the central memory (RAM) to the cache memory (MC$_j$) of a given processor (CPU$_j$) is effected at a transfer frequency F at least equal to 100 megahertz, and consists in:
  - transferring, in one cycle of the central memory, the block (bi) of said central memory (RAM) to a memory shift register (RDM$_j$) of the size of one block, forming part of a set of shift register (RDM$_1$... RDM$_j$... RDM$_n$) connected to the central memory,
  - transferring on a serial link (LS$_j$) the contents of the memory shift register (RDM$_j$) to a processor shift register (RDP$_j$) of the same capacity, associated with the cache memory (MC$_j$) of the processor (CPU$_j$) under consideration,
  - transferring the contents of said processor shift register (RDP$_j$) to said cache memory (MC$_j$),

the transfer of the address of a data block is effected at the transfer frequency F via the serial links.

20. Process for the exchange of data between a central memory (RAM) organised into data blocks (bi) and processors (CPU$_1$...CPU$_j$...CPU$_n$) each provided with a cache memory (MC$_j$) organised into data blocks (bi) of the same size, and with a directory (RG$_j$) and its management processor (PG$_j$), in such a manner that the exchange between the central memory (RAM) and each processor (CPU$_j$) is effected via the cache memory (MC$_j$) of the latter, said process being characterised in that:

- each transfer of a data block (bi) from the central memory (RAM) to the cache memory (MC$_j$) of a given processor (CPU$_j$) is effected at a transfer frequency F at least equal to 100 megahertz, and consists in:
  - transferring, in one cycle of the central memory, the block (bi) of said central memory (RAM) to a memory shift register (RDM$_j$) of the size of one block, forming part of a set of shift register (RDM$_1$... RDM$_j$... RDM$_n$) connected to

the central memory,

- transferring on a serial link (LS$_j$) the contents of the memory shift register (RDM$_j$) to a processor shift register (RDP$_j$) of the same capacity, associated with the cache memory (MC$_j$) of the processor (CPU$_j$) under consideration,
- transferring the contents of said processor shift register (RDP$_j$) to said cache memory (MC$_j$),

the transfer of the address of a data block is effected by means of a common parallel address communication bus (BUSA).

21. Process for the exchange of data between a central memory (RAM) organised into data blocks (bi) and processors (CPU$_1$...CPU$_j$...CPU$_n$) each provided with a cache memory (MC$_j$) organised into data blocks (bi) of the same size, and with a directory (RG$_j$) and its management processor (PG$_j$), in such a manner that the exchange between the central memory (RAM) and each processor (CPU$_j$) is effected via the cache memory (MC$_j$) of the latter, said process being characterised in that:

- each transfer of a data block (bi) from the cache memory (MC$_j$) of a given processor (CPU$_j$) to the central memory (RAM) is effected at a transfer frequency at least equal to 100 megahertz, and consists in:
  - transferring the block (bi) of said cache memory (MC$_j$) under consideration to a processor shift register (RDP$_j$) of the size of one block, associated with said cache memory (MC$_j$),
  - transferring on a serial link (LS$_j$) the contents of the processor shift register (RDP$_j$) to a memory shift register (RDM$_j$) of the same capacity, assigned to the processor under consideration in a set of shift registers (RDM$_1$... RDM$_j$... RDM$_n$) connected to the central memory (RAM),
  - transferring, in one cycle of the central memory, the contents of the memory shift register (RDM$_j$) to said central memory (RAM),

the transfer of the address of a data block is effected at the transfer frequency F via the serial links.

22. Process for the exchange of data between a central memory (RAM) organised into data blocks (bi) and processors (CPU$_1$...CPU$_j$...CPU$_n$) each provided with a cache memory (MC$_j$) organised into data blocks (bi) of the same size, and with a directory (RG$_j$) and its management processor (PG$_j$), in such a manner that the exchange between the central memory (RAM) and each processor (CPU$_j$) is effected via the cache memory (MC$_j$) of the latter, said process being characterised in that:

- each transfer of a data block (bi) from the cache memory (MC$_j$) of a given processor (CPU$_j$) to the central memory (RAM) is effected at a transfer frequency at least equal to 100 megahertz, and consists in:
  - transferring the block (bi) of said cache memory (MC$_j$) under consideration to a processor shift register (RDP$_j$) of the size of one block, associated with said cache memory (MC$_j$),
  - transferring on a serial link (LS$_j$) the contents of the processor shift register (RDP$_j$) to a memory shift register (RDM$_j$) of the same capacity, assigned to the processor under consideration in a set of shift registers (RDM$_1$... RDM$_j$... RDM$_n$) connected to the central memory (RAM),
  - transferring, in one cycle of the central memory, the contents of the memory shift register (RDM$_j$) to said central memory (RAM),

the transfer of the address of a data block is effected via a common parallel address communication bus (BUSA).

23. Multiport, serial memory component capable of equipping a multiprocessor system according to one of the Claims 1 to 18, characterised in that it is made up of an integrated circuit comprising a random access memory (RAM) of a predetermined size corresponding to a data block (bi), a set of shift registers (RDM$_1$... RDM$_j$... RDM$_n$), each of a capacity corresponding to the size of the memory, an internal, parallel bus (BUSI) connecting the port of the memory and the shift registers, a shift register selection logic circuit (LSR) designed to enable the link on the internal bus between the memory and a predetermined shift register, and a set of external input/output pins (adbloc, admot, numreg, cs, wr, rd, bitbloc, normal/config, hi, di) for the input of addresses to the memory (RAM), for the input of addresses to the selection logic circuit (LSR), for the input and enabling of transfer commands when reading or writing a data block (bi) between the memory (RAM) and the shift registers (RDM$_j$), for

the input of a clock signal to each shift register (RDM$_j$), for the bit-by-bit input of a data block (bi) to each shift register (RDM$_j$) and for the bit-by-bit output of a data block from each shift register (RDM$_j$).

24. Component according to Claim 23, characterised in that it comprises at least one configuration register (RC$_1$, RC$_2$...) having programming inputs, each configuration register being connected to a setting logic circuit (LF) connected to the memory (RAM) and to the shift registers (RDM$_j$) for the purpose of ensuring the setting of the states of said memory and said shift registers.

25. Component according to Claim 24, permitting the choice of the size of the data blocks (bi) processed, characterised in that:
    - the memory (RAM) is divided into zones which can be combined to permit the storage of the various possible sizes of data blocks,
    - each shift register (RDM$_j$) is divided into combinable sections to permit the loading of the various possible sizes of data blocks, with branches able to provide the shift corresponding to each size,
    - the internal bus (BUSI) is provided with a multiplexing logic circuit (MT) to permit the transfers of data blocks (bi) of various sizes between the combinations of zones of the memory (RAM) and the corresponding combinations of sections of the shift registers (RDM$_j$),
    - a configuration register (RC$_1$) is provided with a capacity corresponding to the number of possible block sizes,
    - the setting logic circuit (LF) connected to the register (RC$_1$) comprises a logic unit designed to control the multiplexing logic circuit (MT) for the purpose of enabling the transfers of data blocks (bi) in a given size corresponding to the parameter contained in the configuration register (RC$_1$).

26. Component according to one of the Claims 24 or 25, characterised in that:
    - the input and the output of each shift register (RDM$_j$) are connected to the same external pin by means of a logic gate (PL$_j$),
    - a configuration register (RC$_2$) is provided with a capacity corresponding to the number of shift registers (RDM$_j$),
    - the setting logic circuit (LF) connected to the configuration register (RC$_2$) com-

prises a logic circuit designed to control the logic gates (PL$_j$) for the purpose of setting the operation of each shift register (RDM$_j$) to the input mode or the output mode according to a bit contained in the configuration register (RC$_2$) assigned to said shift register (RDM$_j$).

27. Component according to one of the Claims 24, 25 or 26, characterised in that:
    - the input and the output of each shift register (RDM$_j$) are connected to the same external pin by means of a logic gate (PL$_j$),
    - a configuration register (RC$_3$) is provided with a capacity corresponding to the number of shift registers (RDM$_j$),
    - the setting logic circuit (LF) connected to the configuration register (RC$_3$) comprises a logic circuit connected to the read control of the memory (RAM) and designed to control each logic gate (PL$_j$), either in the output mode at the moment of reading the memory (transfer from the memory RAM to the corresponding register RDM$_j$) during the entire duration of the dumping of said shift register (RDM$_j$), or in the input mode, the remainder of the time.

28. Component according to one of the Claims 24, 25, 26 or 27, characterised in that it comprises an external input pin (bit/block), one or more external data input/output pins, a control logic circuit (COM) connected to the input pin (bit/block), to the input/output pins (data), to the memory (RAM) and to the selection logic circuit (LSR) and designed, according to the state of the input (bit/block), to generate either the transfers of data blocks (bi) between the memory (RAM) and the shift registers (RDM$_j$), or the transfers of bits directly between the memory (RAM) and the pins (data).

29. Component according to one of the Claims 24 and 28, taken together, characterised in that the configuration registers (RC$_1$, RC$_2$...) are connected:
    - on the one hand, to the selection logic circuit (LSR) which is designed to select said configuration registers for predetermined addresses assigned to said registers,
    - and on the other hand, to the control logic circuit (COM) which is designed to transmit the data coming from the input/output pins (data) to said configuration registers for the purpose of programming them.

30. Component according to one of the Claims 23 to 29, in which, on the internal bus (BUSI) connecting the port of the memory (RAM) and the shift registers (RDM$_j$), is interposed a "barrel shifter" type logic circuit (BS) designed to provide a cyclic shift of the bits of each data block, said logic circuit (BS) having a control input for the shift increment of the word unit, connected to the input pins (admot).

**Patentansprüche**

1. Mehrprozessorsystem, das einen Hauptspeicher (RAM) aufweist, der in Informationsblöken (bi) angeordnet ist, Verarbeitungs-Prozessoren (CPU$_1$ ... CPU$_j$ ... CPU$_n$), einen Cache-Speicher (MC$_j$), der mit jedem Verarbeitungs-Prozessor (CPU$_j$) verbunden ist und in Informationsblöcken (bi) angeordnet ist, die genauso groß sind, wie die des Hauptspeichers, ein Verzeichnis (RG$_j$) und dessen Verwaltungsprozessor (PG$_j$), das jedem Cache-Speicher (MC$_j$) zugeordnet ist, wobei das besagte Mehrprozessorsystem dadurch gekennzeichnet ist, daß es ausgestattet ist:
   . mit mehreren Schieberegistern, sogenannten Speicherregistern (RDM$_1$ ... RDM$_j$ ... RDM$_n$), wobei jedes dieser Register (RDM$_j$) einer Transferlogik (TFR$_j$) zugeordnet und so an den Hauptspeicher (RAM) angeschlossen ist, daß innerhalb eines Zyklus dieses Speichers ein Paralleltransfer zum Lesen oder Schreiben eines Informationsblocks (bi) zwischen dem besagten Register und dem besagten Hauptspeicher möglich ist,
   . mit Schieberegistern, sogenannten Prozessorregistern (RDP$_1$ ... RDP$_j$ ... RDP$_n$), wobei jedes Prozessor-Schieberegister (RDP$_j$) einer Transferlogik (TFR'$_j$) zugeordnet und so mit dem Cache-Speicher (MC$_j$) eines Prozessors (CPU$_j$) verbunden ist, daß ein Paralleltransfer zum Lesen oder Schreiben eines Informationsblocks (bi) zwischen dem besagten Schieberegister (RDP$_j$) und dem besagten Cache-Speicher (MC$_j$) möglich ist,
   . mit mehreren Serienverbindungen (LS$_1$ ... LS$_j$ ... LS$_n$), von denen jede ein Speicher-Schieberegister (RDM$_j$) mit einem Prozessor-Schieberegister (RDP$_j$) verbindet und geeignet ist, den Transfer von Informationsblöcken (bi) zwischen den beiden betroffenen Registern (RDM$_j$, RDP$_j$) mit einer Transferfrequenz F von mindestens 100 Megahertz zu ermöglichen,
   . mit Mitteln für die Übertragung von Blockadressen, die ein Zusatz-Schieberegister (RDC$_j$) aufweisen, das so auf jeder Serienverbindung (LS$_j$) parallel an das entsprechende Speicher-Schieberegister (RDM$_j$) angeschlossen ist, daß die Übertragung der Adressen über die Serienverbindungen und das Laden dieser Adressen in die besagten Zusatz-Schieberegister (RDC$_j$) möglich ist, wobei ein Zugriffsverwaltungsarbiter (ABM) mit den besagten Zusatz-Schieberegistern (RDC$_j$) und dem Hauptspeicher (RAM) verbunden ist, um die in den besagten Registern (RDC$_j$) enthaltenen Adressen zu holen und die Zugriffskonflikte zum Hauptspeicher (RAM) zu verwalten, und die jedem Prozessorregister (RDP$_j$) zugeordnete Transferlogik (TRF$_j$) so von dem Verwaltungsprozessor (PG$_j$) gesteuert wird, daß die Übertragung der Adressen über das besagte Prozessorregister (RDP$_j$) möglich ist.

2. Mehrprozessorsystem, das einen Hauptspeicher (RAM) aufweist, der in Informationsblöken (bi) angeordnet ist, Verarbeitungs-Prozessoren (CPU$_1$ ... CPU$_j$ ... CPU$_n$), einen Cache-Speicher (MC$_j$), der mit jedem Verarbeitungs-Prozessor (CPU$_j$) verbunden ist und in Informationsblöcken (bi) angeordnet ist, die genauso groß sind, wie die des Hauptspeichers, ein Verzeichnis (RG$_j$) und dessen Verwaltungsprozessor (PG$_j$), das jedem Cache-Speicher (MC$_j$) zugeordnet ist, wobei das besagte Mehrprozessorsystem dadurch gekennzeichnet ist, daß es ausgestattet ist:
   . mit mehreren Schieberegistern, sogenannten Speicherregister (RDM$_1$ ... RDM$_j$ ... RDM$_n$), wobei jedes dieser Register (RDM$_j$) einer Transferlogik (TFR$_j$) zugeordnet und so an den Hauptspeicher (RAM) angeschlossen ist, daß innerhalb eines Zyklus dieses Speichers ein Paralleltransfer zum Lesen oder Schreiben eines Informationsblocks (bi) zwischen dem besagten Register und dem besagten Hauptspeicher möglich ist,
   . mit Schieberegistern, sogenannten Prozessorregistern (RDP$_1$ ... RDP$_j$ ... RDP$_n$), wobei jedes Prozessor-Schieberegister (RDP$_j$) einer Transferlogik (TFR'j) zugeordnet und so mit dem Cache-Speicher (MC$_j$) eines Prozessors (CPU$_j$) verbunden ist, daß ein Paralleltransfer zum Lesen oder Schreiben eines Informationsblocks (bi) zwischen dem besagten Schieberegi-

ster (RDP$_j$) und dem besagten Cache-Speicher (MC$_j$) möglich ist,

. mit mehreren Serienverbindungen (LS$_1$ ... LS$_j$ ... LS$_n$), wobei jede davon ein Speicher-Schieberegister (RDM$_j$) mit einem Prozessor-Schieberegister (RDP$_j$) verbindet und geeignet ist, den Transfer von Informationsblöcken (bi) zwischen den beiden betroffenen Registern (RDM$_j$, RDP$_j$) mit einer Transferfrequenz F von mindestens 100 Megahertz zu ermöglichen,

. mit Mitteln für die Übertragung von Blockadressen, die einen gemeinsamen Bus für die parallele Übertragung von Blockadressen (BUSA) aufweisen, der die Prozessoren (CPU$_j$) mit dem Hauptspeicher (RAM) verbindet, und einen Busarbiter (AB), der geeignet ist, die Zugriffskonflikte zu dem besagten Bus zu verwalten, wobei der Verwaltungsprozessor (PG$_j$) mit dem gemeinsamen Bus (BUSA) so verbunden ist, daß die Übertragung der Adressen auf dem besagten gemeinsamen Bus möglich ist.

3. Mehrprozessorsystem nach einem der Ansprüche 1 oder 2, dadurch gekennzeichnet, daß:

- jedes Speicher-Schieberegister (RDM$_j$) und jedes Prozessor-Schieberegister (RDP$_j$) in zwei Register aufgeteilt ist, wobei das eine für den Transfer in die eine Richtung und das andere für den Transfer in die andere Richtung spezialisiert ist,

- jede Serienverbindung (LS$_j$) zwei unidirektionale Seriendrähte für einen bit-für-bit-Transfer aufweist, die das aufgeteilte Speicher-Schieberegister (RDM$_j$) und das entsprechende aufgeteilte Prozessor-Schieberegister (RDP$_j$) miteinander verbinden, wobei diese Drähte an den besagten Registern angeschlossen sind, und der eine den Transfer in die eine Richtung und der andere den Transfer in die andere Richtung ermöglicht.

4. Mehrprozessorsystem nach einem der Ansprüche 1 oder 2, dadurch gekennzeichnet, daß jede Serienverbindung (LS$_j$) einen bidirektionalen Draht für den bit-für-bit-Transfer aufweist, der an das Speicher-Schieberegister (RDM$_j$) und an das entsprechende Prozessor-Schieberegister (RDP$_j$) angeschlossen ist sowie eine Logik (LV) für die Freigabe der Transferrichtung, sodaß ein wechselnder Transfer in beide Richtungen möglich ist.

5. Mehrprozessorsystem nach einem der Ansprüche 1, 2, 3 oder 4, das Verwaltungsmittel für zwischen Prozessoren geteilte Daten zur Erhaltung ihrer Kohärenz aufweist.

6. Mehrprozessorsystem nach Anspruch 5, dadurch gekennzeichnet, daß die Verwaltungsmittel der geteilten Daten folgendes aufweisen:

. einen speziellen Bus für die parallele Wortübertragung (BUSD), der die Prozessoren (CPU$_j$) mit dem Hauptspeicher (RAM) verbindet,

. eine Partitionslogik (LP$_j$), die jedem Prozessor (CPU$_j$) zugeordnet ist und die geeignet ist, die Adressen der geteilten und der nicht geteilten Daten zu unterscheiden, um sie auf den Adressen-Übertragungsmitteln mit ihrer Identifizierung zu übertragen,

. eine Decodierungslogik (DEC), die dem Hauptspeicher (RAM) zugeordnet ist und die geeignet ist, die Adressen mit ihrer Identifizierung aufzunehmen und die Daten am Speicherausgang weiterzuleiten, entweder, was die nicht geteilten Daten betrifft, zum entsprechenden Speicher-Schieberegister (RDM$_j$) oder, was die geteilten Daten betrifft, zu dem speziellen Bus für die Wortübertragung (BUSD).

7. Mehrprozessorsystem nach Anspruch 5, dadurch gekennzeichnet, daß die Verwaltungsmittel der geteilten Daten einerseits einen speziellen Bus für die parallele Wortübertragung (BUSD) und einen speziellen gemeinsamen Bus für die Wortadressenübertragung (BUSAM) aufweisen, die die Prozessoren (CPU$_j$) und den Hauptspeicher (RAM) miteinander verbinden und andererseits eine jedem Prozessor (CPU$_j$) zugeordnete Partitionslogik (LP$_j$) aufweisen, die geeignet ist, die Adressen der geteilten Daten und die der nicht geteilten Daten zu unterscheiden und die ersten zu dem speziellen gemeinsamen Bus (BUSAM) und die zweiten zu den Mitteln für die Übertragung von Blockadressen weiterzuleiten.

8. Mehrprozessorsystem nach den Ansprüchen 1 und 5 zusammen, dadurch gekennzeichnet, daß die Verwaltungsmittel der geteilten Daten einen dem Hauptspeicher (RAM) zugeordneten Speicherverwaltungs-Prozessor (PGM) aufweisen sowie einen jedem Verarbeitungs-Prozessor (CPU$_j$) und dem entsprechenden Verwaltungsverzeichnis (RG$_j$) zugeordneten Prozessor für die Aufrechterhaltung der Kohärenz der geteilten Daten (PMC$_j$), wobei jeder Prozessor zur Aufrechterhaltung der Kohärenz (PMC$_j$) an

einen von dem Speicherverwaltungs-Prozessor (PGM) gesteuerten Synchronisationsbus (SYNCHRO) so angeschlossen ist, daß bei Entdekken einer Blockadresse ein Update des Hauptspeichers (RAM) und des zugeordneten Cache-Speichers (MC$_j$) möglich ist und bei jeder Adressenentnahme aus den Zusatz-Schieberegistern (RDC$_j$) ein Update des Hauptspeichers (RAM) und der Cache-Speicher (MC$_j$).

9. Mehrprozessorsystem nach den Ansprüchen 2 und 5 zusammen, dadurch gekennzeichnet, daß die Verwaltungsmittel der geteilten Daten einen dem Hauptspeicher (RAM) zugeordneten Speicherverwaltungs-Prozessor (PGM) aufweisen sowie einen jedem Verarbeitungs-Prozessor (CPU$_j$) und dem entsprechenden Verwaltungsverzeichnis (RG$_j$) zugeordneten Busspion-Prozessor (PE$_j$), wobei jeder Busspion-Prozessor (PE$_j$) und der Speicherverwaltungs-Prozessor (PGM) an den Adreßbus (BUSA) angeschlossen ist, um die auf dem besagten Bus übertragenen Blockadressen zu überwachen beziehungsweise zu verarbeiten, damit bei Entdecken einer in dem zugeordneten Verzeichnis (RG$_j$) vorhandenen Blockadresse ein Update des Hauptspeichers (RAM) und des zugeordneten Cache-Speichers (MC$_j$) möglich ist.

10. Mehrprozessorsystem nach den Ansprüchen 2 und 5 zusammen, dadurch gekennzeichnet, daß die Verwaltungsmittel der geteilten Daten einen dem Hauptspeicher (RAM) zugeordneten Speicherverwaltungs-Prozessor (PGM) und einen Prozessor zur Aufrechterhaltung der Kohärenz der geteilten Daten (PMC$_j$) aufweisen, der jedem Verarbeitungs-Prozessor (CPU$_j$) und dem entsprechenden Verwaltungsverzeichnis (RG$_j$) zugeordnet ist, wobei jeder Prozessor zur Aufrechterhaltung der Kohärenz (PMC$_j$) an einen Synchronisationsbus (SYNCHRO) angeschlossen ist, der von dem Speicherverwaltungs-Prozessor (PGM) so gesteuert wird, daß bei Entdecken einer Blockadresse ein Update des Hauptspeichers (RAM) und des zugeordneten Cache-Speichers (MC$_j$) und bei jeder Adressenentnahme auf dem gemeinsamen Adreßbus (BUSA) ein Update des Hauptspeichers (RAM) und der Cache-Speicher (MC$_j$) möglich ist.

11. Mehrprozessorsystem nach einem der Ansprüche 1 bis 10, dadurch gekennzeichnet, daß:
    - mehrere, einem bestimmten Satz von Prozessoren (CPU$_k$, CPU$_{k+1}$ ...) entsprechende Prozessor-Schieberegister (RDP$_k$, RDP$_{k+1}$ ...) parallel an eine selbe

Serienverbindung (LS$_k$) angeschlossen sind, wobei jedem Satz von Prozessoren (CPU$_k$, CPU$_{k+1}$ ...) ein lokaler Arbiter (ABL$_k$) zugeordnet ist, um die Zugriffskonflikte zu der Serienverbindung (LS$_k$) zu lösen,
    - ein Speicherverwaltungs-Prozessor (PGM) mit den Mitteln für die Übertragung von Blockadressen und mit dem Hauptspeicher (RAM) verbunden ist und Codierungsmittel besitzt, um jedem Informationsblock (bi) einen Kopf zur Identifizierung des betroffenen Prozessors aus jedem Satz der Prozessoren (CPU$_k$, CPU$_{k+1}$ ...), die sich eine Datenserienverbindung (LS$_k$) teilen, zuzuordnen,
    - die Verwaltungsprozessoren (PG$_k$, PG$_{k+1}$ ...), die den Cache-Speichern (MC$_k$, MC$_{k+1}$ ...) der Prozessoren aus dem zuvor genannten Satz (CPU$_k$, CPU$_{k+1}$ ...) zugeordnet sind, Mittel für die Decodierung des Identifizierungskopfs aufweisen.

12. Mehrprozessorsystem nach einem der Ansprüche 1 bis 11, dadurch gekennzeichnet, daß jedes Speicher-Schieberegister (RDM$_j$) statisch an eine dem besagten Register spezifisch zugeordnete Serienverbindung (LS$_j$) angeschlossen ist.

13. Mehrprozessorsystem nach einem der Ansprüche 1 bis 11, dadurch gekennzeichnet, daß:
    - ein Speicherverwaltungs-Prozessor (PGM) dem Hauptspeicher (RAM) zugeordnet ist und eine Logik (ALLOC) für die Zuordnung der Speicher-Schieberegister zu den Serienverbindungen aufweist,
    - die Speicher-Schieberegister (RDM$_1$ ... RDM$_j$ ... RDM$_n$) dynamisch an die Serienverbindungen (LS$_1$ ... LS$_j$ ...) angeschlossen sind, und zwar mittels eines Verbundnetzes (RI), das vom Speicherverwaltungs-Prozessor (PGM) gesteuert wird.

14. Mehrprozessorsystem nach einem der Ansprüche 1 bis 13, in dem der Hauptspeicher (RAM) aus m parallel angeordneten Speicherbänken (RAM$_1$ ... RAM$_p$ ... RAM$_m$) besteht, dadurch gekennzeichnet, daß jedes Speicher-Schieberegister (RDM$_j$) aus m elementaren Schieberegistern (RDM$_{j1}$ ... RDM$_{jp}$ ... RDM$_{jm}$) besteht, die parallel mit der entsprechenden Serienverbindung (LS$_j$) verbunden sind, wobei jedes elementare Register (RDM$_{jp}$) an eine Speicherbank (RAM$_p$) so angeschlossen ist, daß innerhalb eines Zyklus der besagten Speicherbank ein paralleler Transfer zum Lesen oder Schreiben eines Informationsblocks (bi) zwischen dem besagten elementaren Register und der besagten Speicherbank möglich ist.

15. Mehrprozessorsystem nach Anspruch 14, in dem jede Serienverbindung ($LS_j$) in m Serienverbindungen ($LS_{jp}$) aufgeteilt ist, die Punkt zu Punkt jeden Prozessor ($CPU_j$) mit dem elementaren Schieberegister ($RDM_{jp}$) verbinden.

16. Mehrprozessorsystem nach Anspruch 14, in dem auf jede Speicherbank ($RAM_p$) mit Zufallsreihenfolge zugegriffen wird und das einen Dateneingang/-ausgang von einer einem Informationsblock (bi) entsprechenden Breite besitzt, dadurch gekennzeichnet, daß der besagte Eingang/Ausgang jeder Speicherbank ($RAM_p$) durch einen parallelen Bus mit den elementaren Registern ($RDM_{1p}$ ... $RDM_{jp}$) verbunden ist.

17. Mehrprozessorsystem nach einem der Ansprüche 14, 15 oder 16, das von einem Taktgeber mit einer Frequenz F von mindestens 100 Megahertz synchronisiert wird, dadurch gekennzeichnet, daß jedes elementare Speicher-Schieberegister ($RDM_{jp}$) und jedes Prozessor-Schieberegister ($RDP_j$) eine Schiebefrequenz von mindestens F haben kann.

18. Mehrprozessorsystem nach einem der Ansprüche 14, 15 oder 16, das von einem Taktgeber mit einer Frequenz F von mindestens 100 Megahertz synchronisiert wird, dadurch gekennzeichnet, daß jedes elementare Speicher-Schieberegister und/oder jedes Prozessor-Schieberegister aus mehreren $2^u$ multiplexierten Unterregistern ($RDM_{jp}$, $RDP_{jp}$) besteht, wobei jedes eine Schiebefrequenz von mindestens $F/2^u$ haben kann.

19. Verfahren zum Informationsaustausch zwischen einem in Informationsblöcken (bi) angeordneten Hauptspeicher (RAM) und Prozessoren ($CPU_1$ ... $CPU_j$ ... $CPU_n$), wobei jeder mit einem in Blöcken von derselben Größe (bi) angeordneten Cache-Speicher ($MC_j$) und mit einem Verzeichnis ($RG_j$) und dessen Verwaltungsprozessor ($PG_j$) ausgestattet ist, so daß der Austausch zwischen Hauptspeicher (RAM) und jedem Prozessor ($CPU_j$) über den Cache-Speicher ($MC_j$) dieses letzteren erfolgt, wobei das besagte Verfahren dadurch gekennzeichnet ist:
- daß jeder Transfer eines Informationsblocks (bi) vom Hauptspeicher (RAM) zum Cache-Speicher ($MC_j$) eines gegebenen Prozessors ($CPU_j$) mit einer Transferfrequenz F von mindestens 100 Megahertz erfolgt und darin besteht :
. innerhalb eines Hauptspeicher-Zyklus den Block (bi) von dem besagten Hauptspeicher (RAM) zu einem Speicher-Schieberegister ($RDM_j$) von der Größe eines Blocks zu übertragen, wobei das Speicher-Schieberegister eines von mehreren an den Hauptspeicher angeschlossenen
. den Inhalt des Speicher-Schieberegisters ($RDM_j$) auf einer Serienverbindung ($LS_j$) zu einem Prozessor-Schieberegister ($RDP_j$) von der gleichen Kapazität zu übertragen, das dem Cache-Speicher ($MC_j$) des betreffenden Prozessors ($CPU_j$) zugeordnet ist,
. den Inhalt des besagten Prozessor-Schieberegisters ($RDP_j$) zu dem besagten Cache-Speicher ($MC_j$) zu übertragen,
- daß der Adressentransfer eines Informationsblocks mit der Transferfrequenz F über die Serienverbindungen erfolgt.

20. Verfahren zum Informationsaustausch zwischen einem in Informationsblöcken (bi) angeordneten Hauptspeicher (RAM) und Prozessoren ($CPU_1$ ... $CPU_j$ ... $CPU_n$), wobei jeder mit einem Cache-Speicher ($MC_j$), der in Blöcken von der gleichen Kapazität (bi) angeordnet ist, und mit einem Verzeichnis ($RG_j$) und dessen Verwaltungsprozessor ($PG_j$) ausgestattet ist, so daß der Austausch zwischen Hauptspeicher (RAM) und jedem Prozessor ($CPU_j$) über den Cache-Speicher ($MC_j$) dieses letzteren erfolgt, wobei das besagte Verfahren dadurch gekennzeichnet ist, daß:
- jeder Transfer eines Informationsblocks (bi) vom Hauptspeicher (RAM) zum Cache-Speicher ($MC_j$) eines gegebenen Prozessors ($CPU_j$) mit einer Transferfrequenz F von mindestens 100 Megahertz erfolgt und darin besteht:
. innerhalb eines Hauptspeicher-Zyklus den Block (bi) von dem besagten Hauptspeicher (RAM) zu einem Speicher-Schieberegister ($RDM_j$) von der Größe eines Blocks zu übertragen, wobei das Speicher-Schieberegister eines von mehreren an den Hauptspeicher angeschlossenen Schieberegistern ($RDM_1$ ... $RDM_j$, ... $RDM_n$) ist,
. den Inhalt des Speicher-Schieberegisters ($RDM_j$) auf einer Serienverbindung ($LS_j$) zu einem Prozessor-Schieberegister ($RDP_j$) von der gleichen Kapazität, das dem Cache-Speicher ($MC_j$) des betreffenden Prozessors

(CPU$_j$) zugeordnet ist, zu übertragen,

- . den Inhalt des besagten Prozessor-Schieberegisters (RDP$_j$) zu dem besagten Cache-Speicher (MC$_j$) zu übertragen,
- daß der Adressentransfer eines Informationsblocks mittels eines gemeinsamen parallelen Adreßbusses (BUSA) erfolgt.

21. Verfahren zum Informationsaustausch zwischen einem in Informationsblöcken (bi) angeordneten Hauptspeicher (RAM) und Prozessoren (CPU$_1$ ... CPU$_j$ ... CPU$_n$), wobei jeder mit einem Cache-Speicher (MC$_j$), der in Blöcken der gleichen Kapazität (bi) angeordnet ist, und mit einem Verzeichnis (RG$_j$) und dessen Verwaltungsprozessor (PG$_j$) ausgestattet ist, so daß der Austausch zwischen Hauptspeicher (RAM) und jedem Prozessor (CPU$_j$) über den Cache-Speicher (MC$_j$) dieses letzteren erfolgt, wobei das besagte Verfahren dadurch gekennzeichnet ist:

- daß jeder Transfer eines Informationsblocks (bi) vom Cache-Speicher (MC$_j$) eines gegebenen Prozessors (CPU$_j$) zum Hauptspeicher (RAM) mit einer Transferfrequenz F von mindestens 100 Megahertz erfolgt und darin besteht :
  - . den Block (bi) des besagten betreffenden Cache-Speichers (MC$_j$) zu einem dem besagten Cache-Speicher (MC$_j$) zugeordneten Prozessor-Schieberegister (RDP$_j$) von der Größe eines Blocks zu übertragen,
  - . den Inhalt des Prozessor-Schieberegisters (RDP$_j$) auf einer Serienverbindung (LS$_j$) zu einem Speicher-Schieberegister (RDM$_j$) mit der gleichen Kapazität zu übertragen, das dem betreffenden Prozessor der an den Hauptspeicher (RAM) angeschlossenen Schieberegistern (RDM$_1$ ... RDM$_j$ ... RDM$_n$) zugeordnet ist,
  - . innerhalb eines Zyklus des Hauptspeichers den Inhalt des Speicher-Schieberegisters (RDM$_j$) zu dem besagten Hauptspeicher (RAM) zu übertragen,
- daß der Adressentransfer eines Informationsblocks mit der Transferfrequenz F über die Serienverbindungen erfolgt.

22. Verfahren zum Informationsaustausch zwischen einem in Informationsblöcken (bi) angeordneten Hauptspeicher (RAM) und Prozessoren (CPU$_1$ ... CPU$_j$ ... CPU$_n$), wobei jeder mit einem Cache-Speicher (MC$_j$), der in Blöcken der gleichen Kapazität (bi) angeordnet ist, und mit einem Verzeichnis (RG$_j$) und seinem Verwaltungsprozessor (PG$_j$) ausgestattet ist, so daß der Austausch zwischen Hauptspeicher (RAM) und jedem Prozessor (CPU$_j$) über den Cache-Speicher (MC$_j$) dieses letzteren erfolgt, wobei das besagte Verfahren dadurch gekennzeichnet ist, daß:

- jeder Transfer eines Informationsblocks (bi) vom Cache-Speicher (MC$_j$) eines gegebenen Prozessors (CPU$_j$) zum Hauptspeicher (RAM) mit einer Transferfrequenz F von mindestens 100 Megahertz erfolgt und darin besteht :
  - . den Block (bi) des besagten betreffenden Cache-Speichers (MC$_j$) zu einem dem besagten Cache-Speicher (MC$_j$) zugeordneten Prozessor-Schieberegister (RDP$_j$) von der Größe eines Blocks zu übertragen,
  - . den Inhalt des Prozessor-Schieberegisters (RDP$_j$) auf einer Serienverbindung (LS$_j$) zu einem Speicher-Schieberegister (RDM$_j$) der gleichen Kapazität zu übertragen, das dem betreffenden Prozessor der an den Hauptspeicher (RAM) angeschlossenen Schieberegistern (RDM$_1$ ... RDM$_j$ ... RDM$_n$) zugeordnet ist,
  - . innerhalb eines Zyklus des Hauptspeichers den Inhalt des Speicher-Schieberegisters (RDM$_j$) zu dem besagten Hauptspeicher (RAM) zu übertragen,
- der Adressentransfer eines Informationsblocks mittels eines gemeinsamen parallelen Adreßbusses (BUSA) erfolgt.

23. Bauteil für einen Serienmultiportspeicher, das geeignet ist, ein Mehrprozessorsystem nach einem der Ansprüche 1 bis 18 auszurüsten, dadurch gekennzeichnet, daß es aus einem integrierten Schaltkreis besteht, der einen Speicher mit Zufallsreihenfolgezugriff (RAM) von vorbestimmter Breite, die einem Informationsblock (bi) entspricht, aufweist, mehrere Schieberegister (RDM$_1$ ... RDM$_j$ ... RDM$_n$), jedes mit einer Kapazität, die der Breite des Speichers entspricht, einen parallelen internen Bus (BUSI), der den Zugang des Speichers und die Schieberegister miteinander verbindet, eine Logik zur Auswahl eines Schieberegisters (LSR), die geeignet ist, die Verbindung auf dem internen Bus zwischen dem Speicher und einem vorbestimmten Schieberegister freizugeben und mehrere externe Eingangs/Ausgangsstifte (adbloc, admot, numreg, cs, wr, rd, bitbloc, normal/config, hi, di) für den Adreßeingang zum Speicher (RAM), für den Adreßeingang zu der Auswahllogik (LSR), für den Eingang und die Freigabe von Lese- oder Schreib-Transferbefehlen eines Informationsblocks (bi) zwischen dem Speicher (RAM) und den Schieberegistern (RDM$_j$), für den Eingang eines Taktgebersignals zu jedem Schieberegister (RDM$_j$), für den bit-für-bit-Eingang eines Informationsblocks (bi) zu jedem Schieberegister (RDM$_j$) und für den bit-für-bit-Ausgang eines Informationsblocks von jedem Schieberegister (RDM$_j$).

24. Bauteil nach Anspruch 23, dadurch gekennzeichnet, daß es mindestens ein Konfigurationsregister (RC$_1$, RC$_2$ ...) aufweist, das Programmierungseingänge besitzt, wobei jedes Konfigurationsregister mit einer Setzlogik (LF) verbunden ist, die an den Speicher (RAM) und an die Schieberegister (RDM$_j$) angeschlossen ist, um die Zustände des besagten Speichers und der besagten Schieberegister zu setzen.

25. Bauteil nach Anspruch 24, das die Wahl der Größe der verarbeiteten Informationsblöcke (bi) ermöglicht, dadurch gekennzeichnet, daß:
    - der Speicher (RAM) in kombinierbare Bereiche unterteilt ist, um die Speicherung der verschiedenen möglichen Größen von Informationsblöcken zu ermöglichen,
    - jedes Schieberegister (RDM$_j$) in kombinierbare Teilabschnitte unterteilt ist, um das Laden der verschiedenen möglichen Größen von Informationsblöcken zu ermöglichen, mit Abzweigungen, die für das jeder Größe entsprechende Verschieben sorgen,
    - der interne Bus (BUSI) mit einer Multiplexierlogik (MT) ausgestattet ist, um die Tranfers von Informationsblöcken (bi) der verschiedenen Größen zwischen den Kombinationen von Speicherbereichen (RAM) und den entsprechenden Kombinationen der Schieberegister-Teilabschnitte (RDM$_j$) zu ermöglichen,
    - ein Konfigurationsregister (RC$_1$) mit einer der Anzahl der möglichen Blockgrößen entsprechenden Kapazität vorgesehen ist,
    - die mit dem Register (RC$_1$) verbundene Setzlogik (LF) eine Logikeinheit aufweist, die geeignet ist, die Multiplexierlogik (MT) zu steuern, um die Transfers von Informationsblöcken (bi) in einer gegebenen Größe freizugeben, die dem im Konfigurationsregister (RC$_1$) enthaltenen Parameter entspricht.

26. Bauteil nach einem der Ansprüche 24 oder 25, dadurch gekennzeichnet, daß:

    - der Eingang und der Ausgang von jedem Schieberegister (RDM$_j$) mittels einer Verknüpfung (PL$_j$) mit demselben externen Stift verbunden sind,
    - ein Konfigurationsregister (RC$_2$) mit einer der Anzahl der Schieberegister (RDM$_j$) entsprechenden Kapazität vorgesehen ist,
    - die mit dem Konfigurationsregister (RC$_2$) verbundene Setzlogik (LF) eine Logikeinheit aufweist, die geeignet ist, die Verknüpfungen (PL$_j$) zu steuern, um die Funktionsweise von jedem Schieberegister (RDM$_j$) in den Eingangs- oder Ausgangsmodus zu setzen, und zwar abhängig von einem in dem Konfigurationsregister (RC$_2$) enthaltenen Bit, das dem besagten Schieberegister (RDM$_j$) zugeordnet ist.

27. Bauteil nach einem der Ansprüche 24, 25 oder 26, dadurch gekennzeichnet, daß:
    - der Eingang und der Ausgang von jedem Schieberegister (RDM$_j$) mittels einer Verknüpfung (PL$_j$) mit demselben externen Stift verbunden ist,
    - ein Konfigurationsregister (RC$_3$) mit einer der Anzahl von Schieberegistern (RDM$_j$) entsprechenden Kapazität vorgesehen ist,
    - die mit dem Konfigurationsregister (RC$_3$) verbundene Setzlogik (LF) eine Logikeinheit aufweist, die mit der Lese-Steuerung des Speichers (RAM) verbunden ist und die geeignet ist, jede Verknüpfung (PL$_j$) zu steuern, entweder im Ausgangsmodus beim Lesen des Speichers (Transfer des RAM-Speichers zum entsprechenden Register RDM$_j$) während der ganzen Dauer des vollständigen Entladens des besagten Schieberegisters (RDM$_j$) oder die restliche Zeit im Eingangsmodus.

28. Bauteil nach einem der Ansprüche 24, 25, 26 oder 27, dadurch gekennzeichnet, daß es einen externen Eingangsstift (bit/bloc) aufweist, einen oder mehrere externe Eingangs-/Ausgangsstifte für Daten (data), eine Steuerlogik (COM), die mit dem Eingangsstift (bit/bloc), mit den Eingangs-/Ausgangsstiften (data), mit dem Speicher (RAM) und mit der Auswahllogik (LSR) verbunden ist und die geeignet ist, je nach Zustand des Eingangs (bit/bloc), entweder die Transfers von Informationsblöcken (bi) zwischen Speicher (RAM) und Schieberegistern (RDM$_j$) oder die Transfers von Bit direkt zwischen dem Speicher (RAM) und den Stiften (data) zu bewirken.

29. Bauteil nach den Ansprüchen 24 und 28 zusammen, dadurch gekennzeichnet, daß die Konfigurationsregister (RC$_1$, RC$_2$ ...) verbunden sind:

- einerseits mit der Auswahllogik (LSR), die geeignet ist, die besagten Konfigurationsregister für die den besagten Registern zugeordneten vorbestimmten Adressen auszuwählen,

- andererseits, mit der Steuerlogik (COM), die geeignet ist, die von den Eingangs-/Ausgangsstiften (data) kommenden Daten zu den besagten Konfigurationsregistern zu übertragen, um diese letzteren zu programmieren.

30. Bauteil nach einem der Ansprüche 23 bis 29, in dem auf dem internen Bus (BUSI), der den Zugang zum Speicher (RAM) mit den Schieberegistern (RDM$_j$) verbindet, eine Logik vom Typ "Trommel" (BS) ("barrel shifter") zwischengeschaltet ist, die geeignet ist, ein Ringshiften auf den Bit von jedem Informationsblock durchzuführen, wobei die besagte Logik (BS) einen Eingang für die Steuerung des Verschiebungsschritts - in Worteinheiten - besitzt, der an Eingangsstiften (admot) angeschlossen ist.

## Fig. 1

Fig. 2

Fig. 3

Fig. 4

Fig. 5

## Fig. 6

## Fig. 7

MMS

RAM

b0

bi

DEC

adr

$\overline{r}, \overline{w}$

p

RDM1

RDMj

RDMn

LS1

LSn

CPUn

mot

BUSD

AB

BUSA

LSj

adr,$\overline{r}$,$\overline{w}$,p

RDP1

RDPj

PG1 → RG1 → MC1

PGj → RGj → MCj

adr,$\overline{r}$,$\overline{w}$,p

data

adr,$\overline{r}$,$\overline{w}$,p

data

LP1

LPj

adr,$\overline{r}$,$\overline{w}$

adr,$\overline{r}$,$\overline{w}$

CPU1

CPUj

UC1

UCj

## Fig. 8

BUSA (adr,p,$\overline{r}$,$\overline{w}$,j)    BUSD(mot)

## Fig. 9

## Fig. 10

# Fig. 11

data bloc _MC

data mot _ MC

## Fig. 12a

## Fig. 12b

## Fig. 12c

## Fig. 12d

# Fig. 13

Fig. 14

Fig. 15

EP 0 346 420 B1

EP 0 346 420 B1

# Fig. 16

Fig. 17

Fig. 18

EP 0 346 420 B1

Fig. 19

CLUSTER k

71

FIG. 20 a

FIG. 20 b

Fig. 21a

Fig. 21b

# Fig.22